# EUROPÄISCHE PATENTSCHRIFT

(11) **EP 4 382 188 B1**
(45) Veröffentlichungstag und Bekanntmachung des Hinweises auf die Patenterteilung: **20.05.2026**
(21) Anmeldenummer: 23214039.2
(22) Anmeldetag: 04.12.2023
(51) Int. Cl.: B01D 46/24, B01D 46/66, B01D 50/20

(54) **FEINSTAUBABSCHEIDUNGSEINRICHTUNG FÜR KLEINFEUERUNGSANLAGEN**
FINE DUST SEPARATION DEVICE FOR SMALL FIRING INSTALLATIONS
DISPOSITIF DE SÉPARATION DE POUSSIÈRES FINES POUR PETITES INSTALLATIONS DE COMBUSTION

(30) Priorität: 06.12.2022 DE 102022004561; 26.09.2023 DE 102023003888
(43) Veröffentlichungstag der Anmeldung: 12.06.2024
(73) Patentinhaber: dezentec GmbH, 34117 Kassel (DE)
(72) Erfinder:
(74) Vertreter: Weisbrodt, Bernd

(56) Entgegenhaltungen:
- EP-A1- 3 834 910
- WO-A1-2008/010242
- DE-A1- 102008 033 737
- DE-A1- 102015 103 337
- DE-A1- 102020 115 589

## Beschreibung

Die vorliegende Erfindung betrifft eine Vorrichtung zur Filterung von Feinstaub, insbesondere für Festbrennstoff-Kleinfeuerungsanlagen, bei der eine Abscheidung von Grobstaub und kondensierten Aerosolen (Teere) inbegriffen ist.

In der Öffentlichkeit wurden Feinstaubemissionen von Kleinfeuerungsanlagen wie Einzelraumfeuerungen, Kaminen, Öfen und kleineren Heizkesseln aufgrund ihrer Gesundheitsgefahren stark debattiert. Sowohl auf Bundesebene als auch teilweise auf kommunaler Ebene wurden Vorschriften in Kraft gesetzt, die Grenzwerte für die Staubemissionen von Kleinfeuerungsanlagen enthalten. Die Staubemissionen gelangen über das Rauchgas der Feuerungsanlagen in die Atmosphäre. Unter Rauchgas wird dabei das gasförmige Produkt aus der Verbrennung, hier bevorzugt fester Brennstoffe verstanden.

Beispielsweise fordert die gesetzliche Lage in Deutschland ab dem Jahr 2010 für bestehende und ab dem Jahre 2015 für neue Feuerungen diesbezüglich, dass Staubemissionen für Kleinfeuerungsanlagen auf 20 mg/m³ Rauchgas und für Einzelraumfeuerungen auf 40 mg/m³ Rauchgas, entsprechend der ersten Bundes-Immissionsschutzverordnung (1. BImSchV), zu begrenzen sind. Für bestehende Feuerungen gelten, abhängig von ihrem Alter, unterschiedliche Übergangsfristen.

Der überwiegende Teil, d.h. 80 - 95 % der Masse des Feinstaubs weist bei Holzfeuerungen eine Partikelgröße von deutlich weniger als einem Mikrometer auf. Daher kommen aus technischer Sicht zur Abscheidung dieser kleinen Partikel lediglich die elektrostatische Abscheidung sowie die Filtration in Betracht, welche im gut beaufsichtigten und gewarteten industriellen Betreib Abscheidegrade im Submikrometerbereich von etwa 95% für elektrostatische Abscheider und über 99,5% für filternde Abscheider aufweisen kann [Quelle: Fritz, W.; Kern, H.: Reinigung von Abgasen, 3. Auflage, 1992, Vogel Buchverlag].

Der im Rauchgas ebenfalls vorkommende Grobstaub kann deutlich besser abgeschieden werden als der Feinstaub. Die explizite Erwähnung der Abscheidung von Grobstaub ist nicht zwingend erforderlich, da implizit davon ausgegangen wird, dass der Grobstaub auf jeden Fall abgeschieden wird, wenn eine Abscheidung von Feinstaub stattfindet. Die bei geringeren Temperaturen aus der Gasphase kondensierenden organischen Bestandteile wie Teere werden aufgrund der geringen Größe der sich bildenden Aerosoltröpfchen ebenfalls zum Feinstaub gezählt.

Es ist bekannt, dass verschiedene Systeme zur Staubabscheidung für Kleinfeuerungsanlagen am Markt angeboten werden, welche unter anderem bei bestehenden Anlagen nachgerüstet werden können. Hierbei handelt es sich ausnahmslos um elektrostatische Abscheider, welche auch als E-Filter bezeichnet werden.

Bei derartigen E-Filtern wird über einen Hochspannungsgenerator und eine sogenannte Sprühelektrode mit negativer Ladung in dem zu reinigenden Gasstrom ein elektrostatisches Feld erzeugt, in dem sich Staubpartikel elektrostatisch aufladen. Aufgrund der elektrostatischen Feldkräfte bewegen sich die negativ geladenen Staubpartikel zu einer positiv oder neutral geladenen sogenannten Niederschlagselektrode, an der sie durch Anhaftung aus dem Gasstrom entfernt werden. Die am Markt verfügbaren E-Filter für Einzelraumfeuerungen verfügen über einen konzentrischen Aufbau mit mittiger Sprühelektrode und Nutzung eines Abgasrohres als Niederschlagselektrode. Aufgrund dieser Geometrie verringert sich der freie Strömungsquerschnitt mit zunehmender Betriebsdauer durch die Abscheidung von Feinstaub aus dem Gasstrom und dessen Anlagerung an den Wänden des Rauchgaskanals. Hierdurch wird der Strömungswiderstand des Rauchgases erhöht, so dass eine Wartung in Form einer manuellen Reinigung, beispielsweise durch den Schornsteinfeger, erforderlich wird.

Abgeschiedener Feinstaub, der innerhalb des Rauchgaswegs zurückgehalten wird, hat einen negativen Einfluss auf den Betrieb der Feuerung und das Abscheideverhalten eines E-Filters. Die Blockierung des Rauchgaswegs erhöht den Strömungswiderstand und damit den freien Rauchgasabzug sowie den Betrieb der Feuerung. Eine wachsende Schicht von Feinstaub auf der (Rohr-)Oberfläche des Rauchgaswegs behindert die Ausbildung des elektrostatischen Feldes zwischen Niederschlags- und Sprühelektrode, d.h. die Abscheidewirkung des E-Filters verringert sich dadurch während des Betriebes. Auf die betriebsnotwendige häufige händische Wartung verweist ein Hersteller von E-Filtern bereits in der Betriebs- und Wartungsanleitung: bis zu mehrfach pro Monat muss eine händische Reinigung erfolgen.

Das Bundesamt für Wirtschaft und Ausfuhrkontrolle (BAFA) führt in der bis zum 31.12.2019 geführten Positiv-Liste für Förderungen von Partikelabscheidern an Kleinfeuerungsanlagen nur E-Filter und kein Filter auf [Quelle: Förderübersicht: Heizen mit erneuerbaren Energien]. Obwohl allgemein bekannt ist, dass Filter allgemein, und insbesondere Tiefenfilter, über eine deutlich bessere Abscheidung verfügen als E-Filter und obwohl die gesetzliche Grundlage für die Feinstaubabscheidung an Kleinfeuerungsanlagen bereits seit dem 22. März 2010 in Kraft ist und bereits lange Zeit zuvor bekannt war, hat sich bis jetzt kein einziges (Tiefen-)filtersystem zur Feinstaubabscheidung an Kleinfeuerungsanlagen etabliert.

Dies verdeutlicht, dass es von der Fachwelt für unmöglich gehalten wird, in vergleichsweise preiswerten (für den Endkunden wenige Tausend Euro teuren) Kleinsystemen, mit seltener Wartung, ohne permanente Beaufsichtigung im Betrieb, wie es bei Industriefiltern üblich ist, und unter häufigem Durchfahren von Taupunkt- und Frostgrenzen, Stäube mit gleichzeitigem Auftreten von Feuchte durch wässriges Kondensat und klebrige Anteile durch teerhaltiges Kondensat, mit (Tiefen-)Filtern sicher, zuverlässig und mit ausreichender Standzeit abzuscheiden. Aus dem Stand der Technik sind die Dokumente DE 10 2020 115589 A1, EP 3 834 910 A1, DE 10 2008 033737 A1, DE 10 2015 103337 A1 und WO 2008/010242 A1 bekannt.

Eine Anforderung an die Erfindung ist, dass die Filterflächen und die Gehäusemaße möglichst gering sein sollen. Es hat sich gezeigt, dass bei zunehmend kleineren Filterflächen die Anfälligkeit gegenüber schwierigen Betriebszuständen, insbesondere das Auftreten überproportional großer Mengen an Teer und sonstiger kondensierter Kohlenwasserstoffe, die entstehen können, wenn mit zu nassem Holz bei gleichzeitig sehr großen Holzstücken und überladenem Brennraum geheizt wird, steigt. Das Ziel der Entwicklung ist daher, diese ungünstigen Betriebsbedingungen zur identifizieren, sie nachweisen zu können und idealerweise so eingrenzen zu können, dass die Filterfläche weiter verkleinert werden kann. Die auf die Heizleistung der Feuerung abgestimmte spezifische Filterfläche [m²/kW], vor allem des Vorfilters kann umso weiter verkleinert werden, je weiter die ungünstigen Betriebsbedingungen ausgeschlossen oder zumindest eingegrenzt werden können. Je weiter man sich diesem Idealfall nähert, desto weiter kann sich die spezifische (Vor-)Filterfläche in den unteren Bereich des hierfür möglichen Intervalls (unter anderem in Anspruch 1 angegeben) bewegen.

Die Überwachung des Rauchgases im Betrieb ist daher ein wichtiger Schritt um technische Mängel der Gesamtanlage (Ofen, Kamin) aufzuspüren und auch Benutzerfehler zu erkennen. Hierzu sieht die Erfindung ein einfaches, preiswertes und robustes Konzept vor. Der Kohlenmonoxidgehalt (CO) des Rauchgases wird mittels Sensoren überwacht. Um die Lebensdauer dieser Sensoren zu erhöhen, kann der Rauchgasstrom bevorzugt zuvor mit Luft verdünnt werden. Da die Entwicklung von Feinstaub recht parallel zur CO-Entwicklung verläuft kann eine CO-Messung einen guten Aufschluss in Echtzeit bzgl. der Feinstaubentwicklung geben. Um die CO-Sensoren vor Staub und Teer zu schützen, wird das Rauchgas zunächst vorzugsweise verdünnt und anschließend über ein Tiefenfiltermaterial, bevorzugt eine Packung aus Quarzwatte geleitet. Die hierin abgeschiedenen Staubpartikel und Teere können im Anschluss gravimetrisch durch Wägung bestimmt werden. Über die Betriebszeit der Rauchgasanalye kann so eine einfache halb-quantitative Aussage zur Staubmenge erfolgten, die mit einiger Betriebserfahrung zumindest eine Einteilung in geringe, mittlere und hohe Staubund Teerfrachten ermöglicht. Zu Details des Bestimmungsverfahrens wird auf die Vorschriften der VDI 2066/1 verwiesen. Der so bestimmte Feinstaub kann die folgenden Komponenten enthalten: mineralischen Feinstaub, überwiegend kohlenstoffhaltigen Russ und kondensierte Kohlenwasserstoffen (Teere).

Da Teere im Bereich um 400°C kondensieren und mineralischer Feinstaub und Ruß deutlich temperaturbeständiger sind, kann durch ein Aufheizen der Probe auf beispielhaft 600°C mit vorheriger und anschließender Wägung das Verhältnis von Staub und Teer sowie Ruß zueinander bestimmt werden. Wenn beispielsweise eine Feuerung durch einen Bedienfehler besonders teerreich betrieben wurde, z.B. dadurch, dass nasses Holz in zu großen Einzelstücken und mit überladenem Brennraum, d.h. mit Sauerstoffmangel und zu kalt und zu feucht, verheizt wurde, wird dies am Verhältnis von Staub zu Teer bei der zuvor beschriebenen thermisch gravimetrischen Bestimmung sichtbar werden. Als weitere Verfeinerung des Verfahrens kann das Aufheizen zum Verdampfen der Teere sowohl unter oxidierenden Bedingungen, d.h. mit Luft, als auch unter inerten Bedingungen, beispielsweise unter einer Stickstoffatmosphäre stattfinden.

Ferner ist aus der DE 10 2008 059 432 A1 eine Rauchgasreinigungseinrichtung bekannt, welche in einem Abgaskanal anzuordnen ist und sich keramischer Abgasfilter bedient, die durch Strömungsumkehr abzureinigen sind. Eine technische Umsetzung ist hier nicht bekannt, insbesondere keine marktverfügbare. Dabei ist zu beachten, dass grundsätzlich die abzuscheidende Staubmenge pro Heizperiode (d.h. die Differenz zwischen Grenzwert und Rohgasstaubkonzentration) bei gängigen Feuerungen mit kleiner Feuerungswärmeleistung wie z.B. Kaminöfen oder Pelletkesseln eher gering ist, um etwa 1 kg pro Heizperiode beträgt.

Laut offiziellen Quellen wie BMU und UBA beträgt die durchschnittliche jährliche Feinstaubmenge pro Holzfeuerung in Deutschland etwa 1,5 kg. Dieser Wert ergibt sich aus einer Gesamtemission von 17.000 Tonnen Feinstaub pro Jahr aus Holzfeuerungen (It. BMU/UBA) und bei einer Anzahl von etwa 11 Mio. Öfen (Quelle: BMU, HKI e.V. für Ofenanzahl - 17.000 t / 11 Mio. Öfen ∼ 1,55 kg im Mittel über alle Öfen).

Die abgeschiedene Verschmutzungsfracht verfügt über eine sehr geringe Schüttdichte, die bei einer eigenen Ermittlung mit etwa 55-60 g/l bestimmt wurde. Auch wenn dieser Wert Schwankungsbreiten aufweist, ergibt sich ein Schüttvolumen von etwa 25-30 Litern abzuscheidender Verschmutzungsfracht pro Jahr für den Durchschnittsofen in Deutschland. Selbst wenn der konservative bei Wikipedia verfügbare Standardwert der Schüttdichte von (Industrie-)Ruß von 80 g/l angesetzt wird, beträgt das abzuscheidende Volumen etwa 20 Liter. Es ist daher klar ersichtlich, dass dieses Volumen nicht über ein Jahr in einem Rauchrohr bis zur nächsten Wartung durch den Schornsteinfeger zurückgehalten werden kann - entweder ist das Abreinigungs- und Wartungsintervall erheblich kürzer, oder das Volumen muss in einer entsprechend großen Vorrichtung zwischengespeichert werden, oder es erfolgt eine intervallweise Abreinigung mit chargenweisem Austrag aus einem entsprechend kleineren Speichervolumen.

Die bekannten Filtertechniken sind insbesondere aufgrund der verwendeten automatisierten Abreinigung der Filter technisch aufwendig und auch fehleranfällig, insbesondere bei preiswerten Kleinsystemen ohne die in der Industrie übliche Beaufsichtigung, mit seltener Wartung und Betriebsbedingungen, bei denen sowohl die Grenzen für Taupunkte als auch die Frostgrenze häufig durchlaufen wird. Durch die parallel zur Staubabscheidung stattfindende Abscheidung von kondensierenden Teeren wird die Menge der real abgeschiedenen Verschmutzungsfracht deutlich erhöht. Dieser aus Umwelt- und Gesundheitsschutzgründen positive Nebeneffekt der Staubabscheidung führt jedoch zu einer Verringerung der Standzeiten der eingesetzten Filtermaterialien, welche durch die größeren abgeschiedenen Mengen deutlich stärker belastet werden.

Vor diesem Hintergrund ist es Aufgabe der Erfindung, eine Vorrichtung zur Staubabscheidung zur Verfügung zu stellen, die sowohl robust in den Betriebseigenschaften und unempfindlich gegen Störungen und Fehlbedienungen ist, als auch über ausreichend lange Standzeiten ohne weitere Wartung verfügt.

Zur Lösung dieser Aufgabe wird eine Vorrichtung zur Filterung von Feinstaub, insbesondere für Festbrennstoff-Kleinfeuerungsanlagen, nach Ansprüchen 1- 10 verwendet.

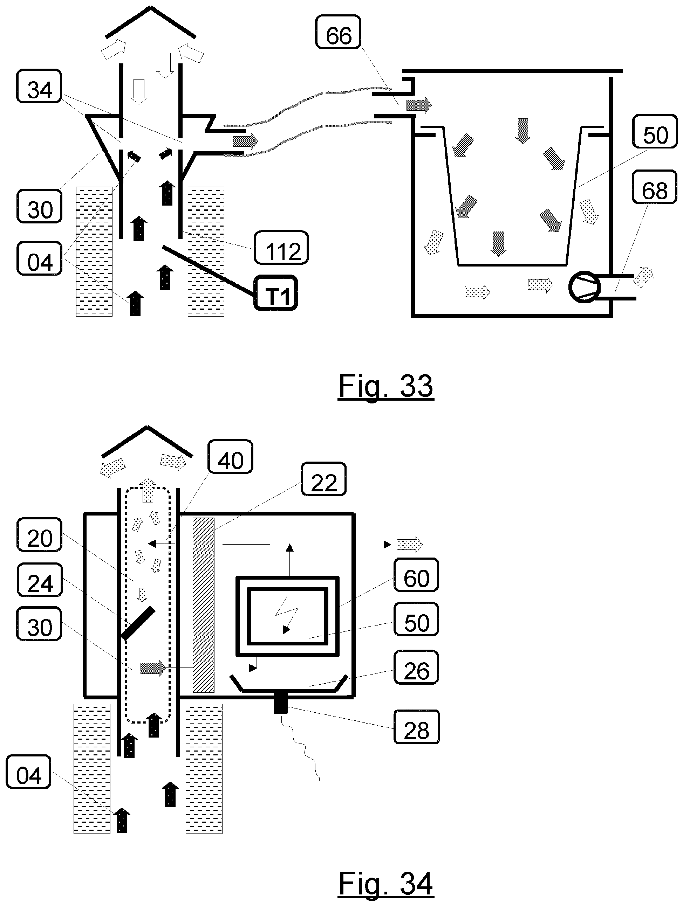

Erfindungsgemäß kann, wie in Fig. 34 beispielhaft dargestellt, die Integration einer Rauchgasklappe (24) vorteilhafterweise sowohl in Ausführungen mit Absaug (30)- und Filtereinheit (60) einer Baugruppe als auch in einer Ausführung, bei der Absaug- und Filtereinheit in räumlich voneinander getrennten Baugruppen (hier ohne explizite bildliche Darstellung) angeordnet sind vorgesehen sein. Die Rauchgasklappe (24) befindet sich vorteilhafterweise oberhalb der Absaugstelle, so dass sie die Ansaugung von Falschluft oder Falschgas von oben her zumindest reduziert und idealerweise vollständig unterbindet. In Fig. 34 wird beispielhaft ein E-Filter in der Filtereinheit (60) eingesetzt und es ist ein Auffangraum (26) zur Aufnahme des abgeschiedenen Feinstaubs vorgesehen, der optional über einen Austrag (28) entleert werden kann.

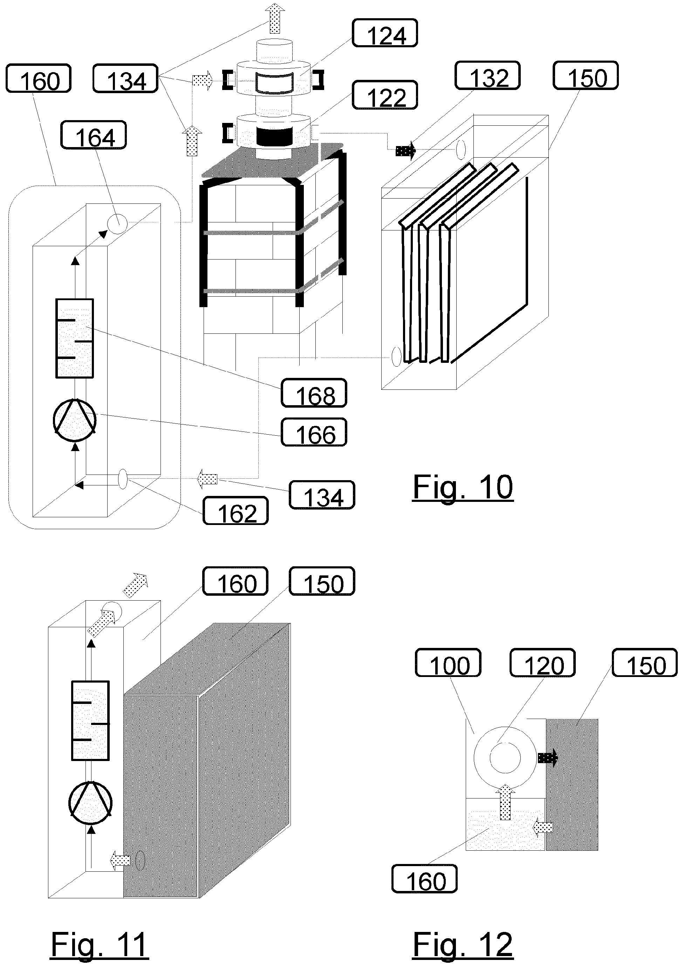

Es zeigen Fig. 10 beispielhaft die Ausführung der Erfindung mit Absaugeinheit (122) und Filtereinheit (150) in einer Baugruppe und Fig. 33 eine Ausführung in zwei räumlich voneinander getrennten Anordnungen der Absaugeinheit (30, analog zu 122) und Filtereinheit (60, analog zu 150). In Fig. 33 ist auch dargestellt, dass sich das Filterelement (50) in Strömungsrichtung zwischen der Eintrittsöffnung (66) und der Austrittsöffnung (68) der Filtereinheit (60) befindet.

Erfindungsgemäß wird angesichts der vergleichsweise geringen Staubmengen zunächst die Verwendung von Tiefen- bzw. Speicherfiltern als einfache und preiswerte sowie robuste Alternative zu automatisch abzureinigenden Filtern vorgeschlagen.

Solch eine Speicher- oder auch Tiefenfiltration ist beispielsweise aus dem Bereich der Reinigung von bereitgestellten Atemgasen, beispielsweise im Bereich der Klima- oder Belüftungstechnik bekannt. Im Bereich der Partikelgröße von Feinstäuben aus Kleinfeuerungsanlagen verfügen filternde Abscheider, verglichen mit elektrostatischen Abscheidern - bezogen auf industrielle Anwendungen - über eine etwa 5%-Punkte bessere Abscheideleistung [Quelle: Fritz, W.; Kern, H.: Reinigung von Abgasen, 3. Auflage, 1992, Vogel Buchverlag]. Erfindungsgemäß wird demnach eine Lösung vorgeschlagen, welche sowohl eine robuste und verlässliche Speicherfiltration erreicht als auch eine ausfallsichere Betriebsweise der Filteranlage erlaubt.

Gemäß der Erfindung kann die Rauchgasreinigungseinrichtung, je nach Ausführung, sowohl zum Anschluss an Schornsteine von Feststoff-Kleinfeuerungsanlagen, d.h. am Ende eines Rauchgasweges (auf Dach, bspw. auf dem Schornstein sowie auf oder im Bereich um und auch zumindest teilweise unterhalb der ursprünglichen (vor der Montage des Feinstaubabscheiders) Schornsteinmündung), als auch zur Integration in den Rauchgasweg d.h. nahe dem Feuerraum (dem Feuerraum nachgeschaltet, d.h. noch innerhalb des Ofens), zwischen Ofen und Kamin im sogenannten Anschluss- bzw. Übergangsstück, unter Dach bzw. auf dem Dachboden einer insbesondere für Feststoffe geeigneten Kleinfeuerung vorgesehen. Eine Ausführung der Erfindung im Bypass zum vorgenannten Rauchgasweg wird ebenfalls als Integration in den Rauchgasweg im Sinne dieser Erfindung angesehen. Das Rauchgas einer Feuerungsanlage wird in die durch die erfindungsgemäße Vorrichtung realisierte Reinigungseinrichtung eingeleitet, dort gereinigt und letztlich an die Umwelt abgegeben.

Eine andere Ausführung der erfindungsgemäßen Rauchgasreinigungsvorrichtung weist mit der Absaugeinheit und der Filtereinheit mindestens zwei räumlich voneinander getrennte Baugruppen auf, die durch mindestens ein Verbindungselement (38/48), das beispielsweise als isolierter Metallschlauch ausgeführt ist, miteinander verbunden und in Richtung der Umgebung abgedichtet sind. Zur Vereinfachung des Anschlusses dieser isolierten Metallschläuche an die Absaug- und Filtereinheit sowie die Rezirkulationseinheit können vorteilhafterweise Schnellverschlusssysteme wie Bajonettverschluss, Feuerwehrkupplungen, Kamlock-Kupplungen oder ähnliche Anschlüsse verwendet werden.

Zur Überwindung des betriebsnotwendigen Differenzdrucks, vor allem der Filtereinheit, insbesondere bei der Verwendung von Tiefenfiltern, wird ein Lüfter verwendet, der bevorzugt als Radialventilator ausgeführt ist. Der Lüfter befindet sich bevorzugt im Gehäuse der Filtereinheit. Das Gehäuse der Filtereinheit besteht bevorzugt aus sogenannten Sandwichplatten, bei denen bspw. ein etwa 30 bis 50 Millimeter starker Kern aus thermisch isolierender Mineralwolle von verzinktem Stahlblech umschlossen ist. Diese Bauart ist mechanisch stabil, wetterfest und verhindert vorteilhafterweise den Ausfall von Kondensat durch ein zu starkes Auskühlen des Rauchgases. Der Lüfter kann optional auch als Starthilfe für die Feuerung betrieben werden: wenn dieser beispielsweise über einen Funkschalter vor dem Anzünden für eine gewisse Zeitspanne vorteilhafterweise auf höherer Leistung aktiviert wird, kann dadurch der Unterdruck im Kamin in einer solchen Weise aufgebaut werden, dass beim Starten des Ofens kein störender Qualm aus dem Ofen austritt. Dies kann besonders bei kurzen Kaminlängen und warmen Witterungsverhältnissen hilfreich sein, um einen Rauchaustritt in den Wohnraum zu verhindern. Gleichzeitig wird durch ausreichende Unterdruckverhältnisse im Abgasweg von Beginn der Verfeuerung an ausreichend Luftsauerstoff dem Brennstoff beigebracht, wodurch der Verbrennungsablauf verbessert und der Bildung von Feinstaub von vornherein entgegengewirkt wird.

Die erfindungsgemäßen Lösungen sind in erster Linie, gemäß den gesetzlichen Anforderungen der 1. BImSchV, zur Abscheidung von Feinstaub aus dem Abgas von Feststoff-Kleinfeuerungsanlagen einzusetzen. Im Text der 1. BImSchV ist von Feinstaub als abzuscheidende Zielgröße die Rede. Im Praxisversuch hat sich dagegen überraschend herausgestellt, dass gemeinsam mit dem Feinstaub auch große Mengen an Kondensatbestandteilen wie Teere mit abgeschieden werden, die die eigentlichen Feinstaubmengen weit übersteigen können.

Gemäß einer bevorzugten Ausgestaltung einer der vorgenannten Ausführungen mit mindestens zwei räumlich getrennten Baugruppen ist vorgesehen, dass der freie Strömungsquerschnitt der ersten Verbindungseinheit (38) und/oder der zweiten Verbindungseinheit (48) geringer ist als der freie Strömungsquerschnitt des Anschlussrohrs der Absaugeinheit an den Rauchgasweg. Durch Verwendung dieser kleineren Querschnitte können die Verbindungselemente erheblich material- und platzsparender und besser montierbar ausgeführt werden. So liegt beispielsweise der Durchmesser des Anschlussrohres bei vielen Kaminen in der Praxis in einem Bereich von etwa 130 mm bis 150 mm. Die Innendurchmesser der Verbindungselemente können vorteilhafterweise in den Größen DN 100, DN 80, DN 65, DN 50 oder sogar geringer ausgeführt werden. Die Vorteile hinsichtlich Materialeinsatz und Handhabbarkeit sind insbesondere bei einer doppelten Leitungsführung und mit einer jeweils zusätzlichen Isolierschicht gegeben.

Vorteilhafterweise ist ferner vorgesehen, dass die Absaugöffnung entlang eines Rohrumfangs der Absaugeinheit und/oder dass die Rezirkulationsöffnung entlang eines Rohrumfangs der Rezirkulationseinheit ausgeführt ist. Dies hat den Vorteil, dass eine möglichst große Menge an zu reinigendem Rauchgas der Filtereinheit zugeführt und von dieser, nach erfolgter Reinigung, zurück zur Rezirkulationseinheit geführt werden kann.

Vorzugsweise ist, wie in Fig. 33 dargestellt, ein im unteren Bereich der Absaugöffnung oder ein unterhalb der Absaugeinheit (30) angeordneter Temperaturfühler (T1) vorgesehen, welcher vorteilhafterweise dazu eingerichtet ist, bei Überschreiten einer vordefinierten Temperatur des Rauchgases oder eines typischen Temperaturgradienten den Lüfter zu aktivieren. Dadurch wird ein unnötiger Betrieb des Lüfters vermieden. Die Steuerung über den Temperaturgradienten hat den Vorteil, dass ein fester Temperaturwert für den Start des Lüfters so hoch gewählt sein sollte, dass er nicht versehentlich im Hochsommer bei starker Sonneneinstrahlung erreicht wird. Dieser hohe Wert birgt jedoch im Winter das Problem, dass der Lüfter erst vergleichsweise spät eingeschaltet wird und relativ viel Rauchgas ungefiltert an die Atmosphäre abgegeben wird. Auch eine weitere Ausführung, wie bspw. eine Kombination aus festem Temperaturwert in Kombination mit einem Abgleich über die Umgebungstemperatur oder über eine Zeitfunktion, die Sommer- und Winterbetrieb ermöglicht, sind möglich. Alternativ kann eine Kombination aus zumindest zwei der aufgeführten Startbedingungen Temperaturschwelle, Zeitpunktion und Temperaturgradient für die Start- sowie auch die Stopfunktion herangezogen werden.

Bei einer rauchgasseitigen Überschreitung der maximal zulässigen Betriebstemperatur, insbesondere für die Filterelemente, kann der Ventilator vorteilhafterweise abgeschaltet oder gedrosselt werden, um so, auch in Kombination mit anderen Kühlmaßnahmen, eine unzulässige Überhitzung der Filtereinheit wirksam zu unterbinden. In diesem Fall kann das Rauchgas kurzzeitig ungefiltert komplett oder teilweise an die Atmosphäre abgeleitet werden.

Die normale Rauchgastemperatur bei gemauerten Bestandskaminen liegt, mit gewissen Schwankungsbreiten, häufig im Bereich um etwa 100°C. Bei isolierten metallischen Doppelrohrausführungen liegen die Rauchgastemperaturen, aufgrund des geringen Wärmeverlustes, höher. Eine erfindungsgemäß zum Einsatz kommende Filtermaterialklasse weist zulässige Betriebstemperaturen im Bereich von 100 bis 200 °C auf. Die Beschränkung der Betriebstemperatur kann, wie bei Kunstfaserfilter, aus dem Filtermaterial selbst her kommen, oder bei künstlichen Mineralfasern, wie Glaswolle, durch die Bindemittel bedingt sein.

Zur Erläuterung hier das folgende Beispiel: Bei einem gemauerten Kamin beträgt die maximale Rauchgastemperatur während eines normalen Holzabbrandes am Ende des Rauchgaswegs 120°C. Das temperatursensibelste Bauteil ist in diesem Beispiel das Filtermedium des Filterelements (50). Als Filtermedium wird ein Kunststoffgewebe verwendet, das vom Hersteller bis 180°C freigegeben ist. Aus Sicherheitsgründen soll dieses Filtermaterial nur bei Temperaturen von maximal 160°C betrieben werden. In diesem Fall beträgt die maximale Betriebstemperatur (des Filtermediums) 160°C. Als Übertemperaturen in Bezug auf das Filtermedium werden daher Rauchgas-Temperaturen in der räumlichen Nähe des Filtermediums oberhalb von 160°C angesehen.

Das von der Feuerung kommende Rauchgas wird auf dem Weg bis zum ersten Kontakt mit dem Filtermedium beispielsweise durch Wärmeverluste über die Wandungen der Feinstaubabscheidevorrichtung, über den Eintrag von Falschluft und/oder teilweise abgekühltem rezirkuliertem gereinigtem Abgas abgekühlt. Erst wenn die Rauchgastemperatur beim ersten Kontakt mit dem Filtermedium 160°C überschreitet, liegen in diesem Beispiel Übertemperaturen des Rauchgases vor. Der Begriff der Übertemperatur des Rauchgases ist daher individuell zu sehen und kann i.d.R. nicht als fester Wert für eine Vielzahl von Anwendungen angegeben werden.

Bezeichnend für das Vorliegen von Übertemperaturen des Rauchgases ist, dass die Feinstaubabscheidevorrichtung diese, bevorzugt frühzeitig vorher, erkennen soll, um ihnen durch geeignete Kühlungsmaßnahmen entgegenzuwirken, um eine thermische Schädigung von Teilen der Vorrichtung (in diesem Beispiel des Filtermediums) zu verhindern.

Wenn diese Übertemperaturen des Rauchgases wenig ausgeprägt und kurzfristig sind (kurze und geringfügige Temperaturspitzen), dann kann die Feinstaubabscheidevorrichtung unter Umständen den Filtrationsbetrieb aufrecht erhalten, indem für zusätzliche Kühlung des Rauchgases gesorgt wird, beispielsweise durch Öffnung von Falschluftklappen oder durch Erhöhung der Lüfterdrehzahl so, dass mehr Falschluft angesaugt wird. Die Steuerung der Feinstaubabscheidevorrichtung kann bereits vor der Überschreitung der Rauchgastemperatur in Filternähe von 160°C reagieren, um die Kühlung rechtzeitig einzuleiten, beispielsweise über einen Voralarmwert von 150°C oder durch Analyse des Gradienten der Rauchgastemperatur, durch den insbesondere der schnelle Anstieg bei Temperaturspitzen erkannt wird. Diese kurzzeitigen Temperaturspitzen können beispielsweise auftreten, wenn die Ofenklappe geöffnet wird, um Holz nachzulegen, insbesondere dann, wenn der Ofen zuvor mit gedrosselter Luftzufuhr betrieben wurde. Das Feuer kann in diesem Fall kurzzeitig auflodern, so dass es zu einer kurzzeitigen Temperaturspitze des Rauchgases kommt.

Die Übertemperaturen des Rauchgases können auch über einen längeren Zeitraum und stärker ausgeprägt vorkommen. Dies kann der Fall sein, wenn beispielsweise Störungen des Normalbetriebs vorliegen, wie eine undichte oder nicht korrekt schließende Ofentür, oder diese Tür nicht vorschriftsmäßig geschlossen wird - sei es aus einem Bedienungsfehler des Betreibers oder weil die Tür beispielsweise von der herausstehenden Ascheschublade in einem mit Asche überfüllten Raum blockiert wird. In diesen Fällen gelangt eine größere Menge an Verbrennungsluft über einen längeren Zeitraum in den Ofenraum, so dass die Rauchgastemperatur tendenziell zeitlich länger und in der Amplitude höher ausgeprägt ausfallen kann. Die hieraus möglicherweise resultierenden Übertemperaturen des Rauchgases sind für die Feinstaubabscheidevorrichtung tendenziell schwieriger durch zusätzliche Kühlmaßnahmen des Rauchgases (bspw. Falschluft über Klappen oder erhöhte Ventilatordrehzahl) auszugleichen.

Alternativ zur Reaktion der Feinstaubabscheidevorrichtung auf hohe Rauchgastemperaturen können auch alle Teile so ausgeführt sein, dass sie diesen hohen Temperaturen widerstehen. Auch wenn die Rauchgastemperatur hier die gleiche wie bei den zuvor beschriebenen Übertemperaturen sein kann, wird an dieser Stelle nicht von Übertemperaturen gesprochen, da durch die temperaturfeste Ausführung der Teile eine thermische Schädigung ausgeschlossen wird. Beispiele für temperaturfeste Ausführungen sind Hochtemperatur-Edelstahl-Tiefenfilter, die Betriebstemperaturen von etwa 1.000°C zulassen, oder die Anordnung von Lüftern außerhalb des Rauchgasstroms, die die Druckdifferenz über das Injektorprinzip (ähnlich Jet-Pulse-Filtern, vgl. Bernoulli-Prinzip, ohne separate bildliche Darstellung) erzeugen. Die Temperaturen von etwa 1.000 °C können lokal begrenzt am Filtermedium, bspw. beim Abbrennen des abgeschiedenen Feinstaubes auftreten. Daher können erfindungsgemäß auch Lüfter für geringere Betriebstemperaturen als 1.000 °C eingesetzt werden, da der Lüfter bei geeigneter Anordnung nicht mit diesen hohen Temperaturen beaufschlagt wird und zusätzlich bspw. mit Falschluft gekühlt werden kann.

Vor dem Hintergrund, dass die Sonderbetriebszustände der hohen Temperaturen (bzw. Übertemperaturen), schon alleine aus Gründen der Energieeffizienz der Feuerungen verhältnismäßig selten vorkommen, erscheint die temperaturfeste Ausführung möglichst aller Bauteile als die technisch sicherste, jedoch auch teure Lösungsmöglichkeit.

Neben den vorgenannten Übertemperaturen soll die erfindungsgemäße Vorrichtung auch so ausgeführt sein, dass sie bei der maximalen Betriebsstörung wie einem Kaminbrand, auch Rußbrand genannt, bei dem Temperaturen von etwa 1.000°C zu erwarten sind, möglichst nicht selbst thermisch zerstört wird und nicht zu einer Ausbreitung von Gefahrenquellen, wie beispielsweise durch herabtropfendes brennendes Plastik, führt.

Sowohl die Thermoelemente als auch der Stahl des Anschlussstückes und Bypassweges halten Betriebstemperaturen von etwa 1.000°C generell aus. In diesem Extremfall wird der Ventilator abgeschaltet, so dass kein heißes Rauchgas in die Filtereinheit gelangt. Als weiterer thermischer Schutz der Filtereinheit 60 und insbesondere des Filterelements (50) wirkt bei der Ausführung mit zwei separaten Baugruppen der räumliche Abstand zwischen Absaugeinheit und Filtereinheit sowie eine gegen Null gehende Wärmeleitung über die Verbindungselemente (38, 48).

Die Temperaturmessungen erfolgen bevorzugt durch Thermoelemente, aber auch andere Formen wie bspw. Thermofühler, Bimetallschalter, Thermoschalter, Infrarotmessungen, Infrarotkameras, Schmelzdrähte etc. sind möglich und sind Bestandteil dieser Erfindung, auch wenn sie nicht explizit genannt werden. Der Einfachheit halber werden hier die Begriffe Thermoelement und Temperaturfühler als gegeneinander austauschbar betrachtet, ebenso wie die Begriffe Lüfter und Ventilator.

Bei der Ausführung in einer Baugruppe für Absaug- und Filtereinheit ist zwischen der Filtereinheit auf der einen Seite und Absaugeinheit, dem Bypassweg und der optional vorhandenen Rezirkulationseinheit eine thermische Trennung (22, Fig. 34) vorhanden, die vorzugsweise zumindest überwiegend aus künstlichen Mineralfasern und besonders bevorzugt aus Steinwolle besteht.

Bei der erfindungsgemäßen Vorrichtung tritt ein thermischer Schutz-Mechanismus in Kraft, wenn das Übertemperaturkriterium zutrifft, d.h. die maximal zulässige Gastemperatur, insbesondere im Bereich der Filterelemente, überschritten wurde, oder eine Vorwarnstufe der maximal zulässigen Temperatur überschritten wurde, oder sich eine der vorgenannten Überschreitungen aufgrund des Temperaturgradienten andeutet.

Bei der Ausführung der Erfindung mit mindestens zwei räumlich voneinander getrennten Baugruppen für Absaugeinheit und Filtereinheit, die mittels Verbindungseinheiten bzw. -mitteln (38, 48) strömungstechnisch miteinander verbunden bzw. verbindbar sind, kann als einfachste Schutzreaktion der Lüfter ausgestellt werden. Es ist ebenfalls möglich, dass der Ventilator die Drehzahl so verringert, dass der gasseitige Wärmeeintrag in die Filtereinheit in Verbindung mit anderen, im Folgenden, für die Ausführung mit einer Baugruppe, genannten Maßnahmen und die Auskühlung über die Oberflächen des Gehäuses und der Verbindungselemente, so stark verringert wird, dass der Filterbetrieb mit verringerter Ansaugung aufrecht erhalten werden kann, ohne dass die zulässige Maximaltemperatur zumindest über einen längeren Zeitraum überschritten wird.

Bei der Ausführung der Erfindung mit einer gemeinsamen Baugruppe für Absaugeinheit und Filtereinheit ist vorteilhafterweise eine thermische Trennung (22) zwischen der Filtereinheit und dem Bypassweg vorgesehen. Diese thermische Trennung besteht vorzugsweise hauptsächlich aus künstlichen Mineralfasern und bevorzugt zumindest überwiegend aus Steinwollen.

Die im Folgenden aufgeführten weiteren Maßnahmen zum thermischen Schutz sind unabhängig von der Ventilatordrehzahl und sie sind exemplarisch zu verstehen und nicht einschränkend für die Erfindung gemeint. Weitere im Folgenden nicht explizit genannte Maßnahmen mit vergleichbarem Kühlungseffekt zählen ebenfalls zu den thermischen Schutzmaßnahmen.

Drosselung des Gaswegs, bevorzugt im Absaugweg zwischen Absaugelement und Filterelement:
Als Drossel werden hier reversible sowie irreversible Einflussmöglichkeiten auf den Strömungswiderstand durch das Filterelement verstanden, bspw. Klappen, Verschluss mit aufquellender Masse (Zweikomponenten, Polyurethan) beispielsweise ausgelöst durch Schmelzsicherung etc..

Auch eine Drosselung bspw. im Bereich strömungstechnisch nach dem Ventilator wirkt sich schützend für die Filterelemente aus, da bei behinderter Gasabfuhr weniger bis kein Gas in die Filtereinheit nachströmen kann und somit die Wärmezufuhr in des Filterelement verringert oder unterbunden ist. Ein Abtrennen des bzw. der Verbindungselemente (38, 48) wird in diesem Zusammenhang ebenfalls als Drosselung des Gaswegs angesehen.

Kühlung durch Falschlufteintrag, bevorzugt in Strömungsrichtung vor der Filterelementen (50), durch zusätzliche Öffnung(-en) und/oder zusätzliche(n) Ventilator(en).

Kühlung durch Kühlmittel, bevorzugt Wasserquench, bevorzugt in Strömungsrichtung vor den Filterelementen (50).

Öffnung von (Not-)Klappen, so dass die heißen Rauchgase direkt vor dem Kontakt mit dem Filtermaterial an die Atmosphäre abgeleitet werden.

Vorzugsweise ist als Filterelement ein Tiefenfilter vorgesehen, welches dazu eingerichtet ist, Feinstaub, Kondensat und/oder Kondensatbestandteile abzuscheiden. Ein derartiges Tiefenfilter bietet im Bereich der Partikelgröße von Feinstäuben aus Kleinfeuerungsanlagen ein deutlich besseres Verhältnis aus bzw. von Abscheideleistung und Standzeit als andere Filterarten, wie beispielsweise Oberflächenfiltern.

Vorteilhafterweise umfasst das Filterelement ein Filter gemäß der Filterklasse G4, M5, M6, F7 bis F9 und/oder E10 bis E12 der DIN EN 779 (2012).

Gemäß einer bevorzugten Ausgestaltung ist als Filterelement ein Vorfilter gemäß der Filterklasse M5 oder M6 und ein Feinfilter gemäß der Filterklasse F7 bis F9 vorgesehen, wobei zwischen dem Vorfilter und dem Feinfilter eine Trennschicht vorgesehen werden kann, die vorzugsweise aus einem grobporigen Material besteht, insbesondere um Verklebungen an der Grenzschicht zwischen den Filterelementen zu verhindern. Durch eine derartige Anordnung wird eine mehrstufige Filterung erreicht, welche zu einem hohen Grad der Reinigung des Rauchgases führt. Filtermaterialien die nicht gemäß DIN EN 779 (2012) in diese vorgenannten Arten von Filterklassen klassiert sind, werden bei vergleichbarer Abscheideleistung im Sinne dieser Erfindung als gleichwertig betrachtet. Dies gilt auch, wenn andere Filtermaterialien wie beispielsweise Metallfilter oder Keramikfilter verwendet werden. Auch bei anderen oder gar keinen Bezeichnungen der Filterklasse gelten diese gleichwertigen Filter als erfindungsgemäß nutzbar. Erfindungsgemäß und für eine erfindungsgemäße Nutzung gilt die Definition von Filterklassen gemäß DIN EN 779 (2012), wie beispielsweise M5, M6, F7 oder F8 auch für andere Filtermaterialien ohne explizite Spezifikation der Filterklasse gemäß dieser Norm, sofern diese Filtermaterialien über eine vergleichbare Abscheideleistung verfügen.

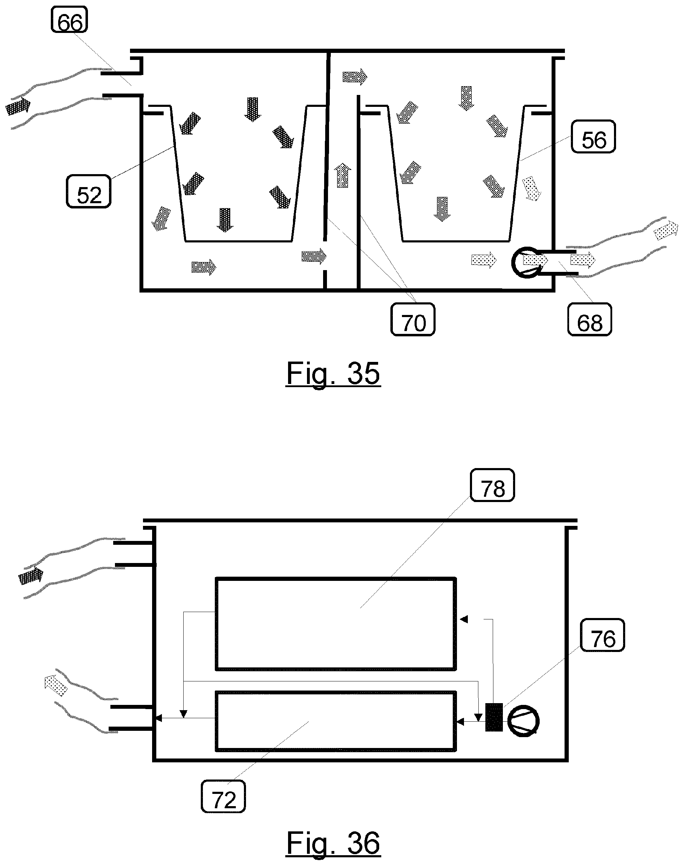

Alternativ dazu kann vorteilhafterweise als Filterelement eine Reihenschaltung eines separat angeordneten Vorfilters und eines separat angeordneten Feinfilters vorgesehen sein, wobei das Vorfilter und das Feinfilter mittels wenigstens einer Trennwand (70 in Fig. 35) räumlich voneinander getrennt sind. Dies hat unter anderem den Vorteil, dass ein einfacherer Austausch des jeweiligen Filters möglich ist.

Eine weitere Ausgestaltung der Erfindung sieht vor, dass anstelle einer Reihenschaltung von Filtermaterialien unterschiedlicher Feinheit, beispielsweise grob/fein, grob/mittel/fein oder dergleichen, erfindungsgemäß auch sogenannte gradierte Filtermaterialien eingesetzt werden können. Diese Filtermaterialien verfügen vorteilhafterweise über unterschiedlich stark verdichtete Bereiche. In Strömungsrichtung des Gases nimmt die Verdichtung des Filtermaterials vorteilhafterweise zu, so dass eine Reihenschaltung, beispielsweise grob/fein oder grob/mittel/fein, innerhalb eines Stückes Filtermaterial erfolgen kann. Erfindungsgemäß ist ein gradiertes Filtermaterial daher als gleichwertig zu einer Reihenschaltung von einzelnen Filtermaterialien mit einzelnen Filterstufen anzusehen.

Vorzugsweise weist die Filtereinheit ein zusätzliches Filterelement (78 in Fig. 36) für den Betriebsbeginn auf, welches dem Filterelement nachgeschaltet ist. Insbesondere bei einem Betrieb der Vorrichtung mit frischen bzw. neuen Feinstaubfiltern kann durch ein solches zusätzliches Filterelement eine zuverlässige Reinigung des Rauchgases erreicht werden.

Gemäß einer weiteren vorteilhafte Ausgestaltung sind in der Filtereinheit ferner ein Schalldämpfer (72 in Fig. 36) und eine Umschalteinheit (76) vorgesehen, wobei die Umschalteinheit dazu dient und vorteilhafterweise eingerichtet ist, dass Rauchgas während des Betriebs mit frischen Filtern so lange über das zusätzliche Filterelement zu leiten, bis der Druckverlust über das zusätzliche Filterelement einen vorgegebenen Druckverlust erreicht hat. Alternativ und/oder ergänzend zur Steuerung über den Druckverlust kann die Umschalteinheit vorteilhafterweise auch nach einer vorgegebenen Betriebszeit so schalten, dass das zusätzliche Filter umfahren bzw. umgangen wird. Bis zu diesem Zeitpunkt der Umschaltung sind die frischen Filterelemente (50), in Strömungsrichtung vor dem zusätzlichen Filter (78), in der Regel so stark beladen, dass sie eine ausreichend hohe Reinigungswirkung erzielen. Das Material des zusätzlichen Filters kann vorteilhafterweise aus einer Packung Mineralwolle oder Wolle, Baumwolle oder Leinen bestehen. Dieses Material wird nicht regeneriert und beim Wechsel der Filterelemente ausgetauscht und vorzugsweise thermisch entsorgt. Es kann erfindungsgemäß jedoch auch vorgesehen sein, dass das Gas parallel das zusätzliche Filterelement und den Schalldämpfer durchläuft oder sowohl das zusätzliche Filterelement als auch den Schalldämpfer durchläuft.

Vorzugsweise weist die Absaugeinheit (30) eine konische, sich nach unten aufweitende, Form auf. Dies hat den Vorteil, dass mit der Zeit auftretende Staubablagerungen besser vermieden werden können.

Gemäß einer weiteren bevorzugten Ausgestaltung umfasst die Filtereinheit ferner eine Entschwefelungseinrichtung, Geruchsabscheidungseinrichtung bzw. Einrichtung zur Abscheidung von vornehmlich krebserzeugenden Stoffen wie beispielsweise PAK (Polyzyklische Aromatische Kohlenwasserstoffe), BaP (Benzo[a]pryren) sowie PCDD/F (Dioxinen und Furanen) und eine Minderungsmöglichkeit von Kohlenmonoxid durch einen kombinierten Betrieb mit einer Vorwärmung der Verbrennungsluft der Feuerung gemäß DE 10 2014 015 491 A1 (Abgasluftwärmetauscheranordnung). Auf DE 10 2014 015 491 A1 wird explizit verwiesen, sofern die im Rahmen dieser Anmeldung gegebenen Beschreibungen und Details nicht ausreichend sein sollten. Eine Abscheidung von Kohlenmonoxid ist auch beispielsweise durch den Einsatz von speziell hierfür imprägnierten Aktivkohlen und der Gleichen, wie sie auch in Atemschutzmasken eingesetzt werden, möglich.

Vorzugsweise umfasst die Filtereinheit ferner ein Formgebungselement, welches dazu eingerichtet ist, einem Zusammenfallen von Filterelementen entgegenzuwirken, insbesondere bei einem Betrieb der Vorrichtung mit geringen Volumenströmen. Ein solches Formgebungselement kann im Inneren von Filtertaschen oder als bspw. metallische Trennschicht zwischen einem Vorfilter und einem Feinfilter vorgesehen sein. Da sich auf diese Weise ein Zusammenfallen der Filterelemente vermeiden lässt, wird vorteilhafterweise die wirksame Filterfläche und damit die Standzeit erhöht. Ferner sinkt der Wartungsaufwand der Vorrichtung erheblich.

Ein Formgebungselement hat vorteilhafterweise im Außenbereich die Form eines Zylinders oder Kegelstumpfes und ist in seiner in die Filtertasche eingebrachten Lage in Richtung der Achse der Filtertasche durchströmbar, so dass keine Bereiche des Filterelements hierdurch abgeschnitten werden.

Das Formgebungselement sollte stabil genug sein, um die Filtertaschen offen zu halten und möglichst leicht ausgeführt sein, um die Filtertaschen nicht nach unten zu ziehen. Eine möglichst preiswerte und leichte Beschaffbarkeit sowie eine ausreichend temperaturbeständige Ausführung sind weitere angestrebte Eigenschaften der Formgebungselemente. Hier hat sich die Verwendung von plastikfreien Pappbechern, vor allem mit einem Loch im Boden für die bessere Durchströmbarkeit, als praktikable und preiswerte Lösung herausgestellt, die leichter, besser beschaffbar und preiswerter sind als verfahrenstechnische Füllkörper aus einem temperaturbeständigem Kunststoff wie bei beispielsweise PVDF. Unter Pappbechern werden in diesem Zusammenhang auch andere Formen verstanden, die zumindest überwiegend aus Pappe gefertigt sind und die den gleichen oder ähnlichen Effekt auf die Formgebung innerhalb der Filterelemente haben.

Ein besonderes Merkmal der Ausführungen mit mindestens zwei Baugruppen der vorliegenden Erfindung ist die bauliche Trennung von dem in dem in der Achse des Rauchgasstrom befindlichen Teils, bestehend aus Absaugeinheit und Rezirkulationseinheit und der Filtereinheit. Durch diese erfindungsgemäße Konstruktion entfällt vorteilhafterweise der separat konstruierte Bypassraum komplett, der aus Sicherheitsgründen für eine ungefilterte Abführung der Rauchgase an die Atmosphäre erforderlich ist und der bei anderen Feinstaubfilterkonzepten bisher erforderlich ist.

Diese erfindungsgemäße Ausführung gewährleistet vorteilhafterweise einen sicheren und robusten Betrieb ohne dass fehleranfällige Rauchgasklappen oder sonstige Drosselorgane benötigt werden. Durch die bauliche Trennung der Filtereinheit können erheblich größere Filterflächen verwendet werden als beispielsweise bei Feinstaubfilterkonstruktionen in einer Baugruppe, die direkt auf dem Kamin montiert werden.

Eine weitere Ausführung der Erfindung verfügt über Drossel- bzw. Absperrorgane für Luft bzw. Gas wie bspw. Rauchgasklappen.

Eine Variante der Erfindung verfügt zur Lenkung der Gasströme innerhalb der Vorrichtung mindestens eine Rauchgasklappe 24, wie sie beispielsweise in DE 10 2015 103 337 (Pos. 6) und DE 34 44 437 (Pos. 9 und 9') offenbart werden. In Fig. 34 ist die Rauchgasklappe 24 beispielhaft dargestellt. In dieser Ausführung kann sie vorteilhafterweise zur Drosselung oder Absperrung des Kernbereichs des Bypasses zwischen Ansaug- und Rezirkulationsöffnungen eingesetzt werden.

Bei der Ausführung in einer Baugruppe werden die Komponenten Absaugeinheit, optionale Rezirkulationseinheit und Filtereinheit in einer gemeinsamen Baugruppe bzw. einem gemeinsamen Gehäuse angeordnet, wobei vorteilhafterweise eine thermische Trennung (22) zwischen dem Bypassweg (20) und der Filtereinheit (60) bzw. dem Filterelement (50) vorgesehen ist, die bevorzugt aus künstlichen Mineralfasern und besonders bevorzugt aus Steinwolle besteht und die die temperaturkritischen Bauteile, wie beispielsweise das Filterelement bei rauchgasseitigen Übertemperaturen vor der Zerstörung schützt (beispielhafte Darstellung in Fig. 34).

Bei einer erfindungsgemäßen Konstruktion mit einer Baugruppe zur Montage auf der Kaminoberkante ist bauartbedingt vorgegeben, dass diese die Maße des Kamins nicht wesentlich überschreiten können und auch in der Höhe begrenzt sind, sei es aus statischen Gründen, die beispielsweise die Windlast berücksichtigen und/oder aus optischen Gründen, aus denen ein Feinstaubabscheider, der oben auf einem Kamin montiert ist und diesen erheblich überragt, als störend empfunden würde. Bei einem durchschnittlichen Kaminaußenquerschnitt von 50 cm mal 50 cm ist es bei einer solchen Feinstaubfilterkonstruktion aufgrund der Geometrie und den Baumaßen 50 cm mal 50 cm mal 50 cm kaum möglich mit einem Filter mit einer Tiefe von etwa 20 mm eine Filterfläche von mehr als einem Quadratmeter unterzubringen, insbesondere wenn der erforderliche Raum für den Bypassweg (20) und die Seitenkammer mit Ventilator, Steuerung etc. abgezogen wird. Aus der geringen Filterfläche kann eine erhebliche Einschränkung der Standzeit resultieren, sofern das Filter nicht wirkungsvoll regeneriert bzw. abgereinigt werden kann.

Die Nutzung des Raumes unterhalb der Kaminoberkante erlaubt eine Ausführung der Erfindung mit erheblich größerem Volumen. Hierdurch kann die installierbare Filterfläche deutlich vergrößert werden, wodurch die Anströmgeschwindigkeit so stark gesenkt wird, dass sich der Staub in einem lockeren Staubkuchen anlagert, so dass eine Abreinigung möglich ist.

Bei der erfindungsgemäßen Konstruktion mit zwei Baugruppen gibt es demgegenüber keine vergleichbare Limitierung der Filterfläche, so dass eine im Vergleich erheblich höhere Standzeit bereits ohne Abreinigung einfach durch eine Erhöhung der Filterfläche zu realisieren ist.

Im Falle von Betriebsstörungen, wie beispielsweise Stromausfall oder mangelnder Wartung der Filterelemente, folgt bei dieser erfindungsgemäßen Lösung mit zwei Baugruppen das Rauchgas dem Weg in Verlängerung der Achse des ursprünglichen Rauchgasweges ohne Feinstaubfilter, beispielsweise dem Kamin - bei der Variante mit einer Baugruppe erfolgt dies über den internen Bypassweg (20, Fig. 34).

Vorteilhafterweise wird das Rauchgas erfindungsgemäß nur im bestimmungsgemäßen Betrieb durch den in der Absaugeinheit herrschenden Unterdruck aus der Achse des ursprünglichen Rauchgasweges abgelenkt und der Filtereinheit zugeleitet.

Bei einer Vielzahl von Häusern befindet sich der Kamin und damit ein häufiger Montageort der Abscheidevorrichtung an unzugänglichen Stellen auf dem Dach, so dass eine erhöhte Absturzgefahr bei der Begehung besteht. Diese Absturzgefahr ist durch den Einsatz von geschultem Fachpersonal mit entsprechenden Sicherungsgurten etc. bis nahe und bevorzugt auf Null reduzierbar.

Die Komponenten sollten bei der erfindungsgemäßen Lösung, insbesondere bei schlechter Zugänglichkeit, steilen Dächern etc., ausschließlich von geschultem Fachpersonal mit den entsprechenden Sicherheitsvorkehrungen gewartet werden.

Die Filtereinheit (60) der erfindungsgemäßen Lösung ist ein vergleichsweise einfaches Bauteil. Wenn die erfindungsgemäße Filtereinheit auf einem gut zugänglichen Flachdach aufgestellt ist, könnte der Wechsel der Filterelemente insofern auch durch Laien erfolgen. Auch bei Schrägdächern gibt es Bauteile wie Trittstufen für Schornsteinfeger, Geländer Einsatzbauteile um beispielsweise Balkone nachzurüsten, so dass damit zumindest theoretisch eine Begehung auch durch Laien gefahrlos möglich wird. Die erfindungsgemäße Filtereinheit kann insofern unter günstigen Umständen auch durch handwerkliche versierte Laien mit speziellen Sicherheitsvorkehrungen gewartet werden. Bevorzugt sollte ein Austausch der erfindungsgemäßen Filterelemente jedoch durch Fachfirmen bzw. Fachpersonal erfolgen.

Für diese Erfindung spezifische Begriffe werden im Folgenden definiert:
Das *"betriebsnotwendige Gehäusevolumen"* der erfindungsgemäßen Vorrichtung beschreibt den aus technischer Sicht unverzichtbaren Teil und grenzt diesen gegen den aus technischer Sicht nicht zwangsläufig erforderlichen Teil der baulichen Ausführung der Erfindung, wie beispielsweise optische Zierelemente, ab.

Das betriebsnotwendige Gehäusevolumen umfasst die Filterkammer mit Filterelementen, den Absaugteil sowie einen möglichen Rezirkulationsteil, ein Volumen zur Aufnahme des abgeschiedenen sowie abgereinigten Feinstaubes sowie den Ventilator und die Steuerung sowie deren Wetterschutzgehäuse inklusive einer dort möglicherweise installierten Isolierung ebenso wie das Volumen von Verbindungselementen (auch außenliegende Verbindungselementen bei Ausführungen der Vorrichtung in mehr als einer Baugruppe, wenn beispielsweise der am Kamin befindliche Absaugteil räumlich von der Filterkammer getrennt ausgeführt ist und ein Verbindungselement wie z.B. ein Flexschlauch oder ein starres Rohr für die Rauchgaszuführung vom Absaugteil zur Filterkammer installiert ist). Das Gleiche gilt analog für Verbindungselemente zur Rezirkulation des gereinigten Rauchgases. Die mögliche Isolierung der Verbindungselemente zählen ebenfalls zum betriebsnotwendigen Gehäusevolumen.

Sofern Schalldämpfer und/oder Anfahrfilter installiert sind, zählen auch diese mit ihrer Wetterschutzeinhausung zum betriebsnotwendigen Gehäusevolumen der erfindungsgemäßen Vorrichtung, ebenso wie weitere aus technischer Sicht erforderliche Komponenten und Verbindungselemente zwischen den Komponenten. Auch die Steuerung mit optionalen Sende- und Empfangseinrichtungen zählt zum betriebsnotwendigen Gehäusevolumen. Dies gilt auch, wenn die Steuerungseinheit über zusätzliche Funktionen wie beispielsweise WLAN verfügt, die auch für andere Zwecke als die Feinstaubabscheidung genutzt werden können, sofern das Volumen der Hardwarekomponenten für diese zusätzlichen Funktionen ein Volumen von bis zu fünf Litern nicht überschreitet.

Nicht zum betriebsnotwendigen Gehäusevolumen zählen Räume innerhalb einer Verkleidung der erfindungsgemäßen Vorrichtung, die nicht dem Primärzweck der erfindungsgemäßen Vorrichtung inklusive dem Schallschutz dient, wie beispielsweise einer optischen Schmuckverkleidung der Vorrichtung, die auch Hohlräume ausbilden kann, die für den technischen Primärzweck der Vorrichtung, d.h. der Staubabscheidung, nicht erforderlich sind.

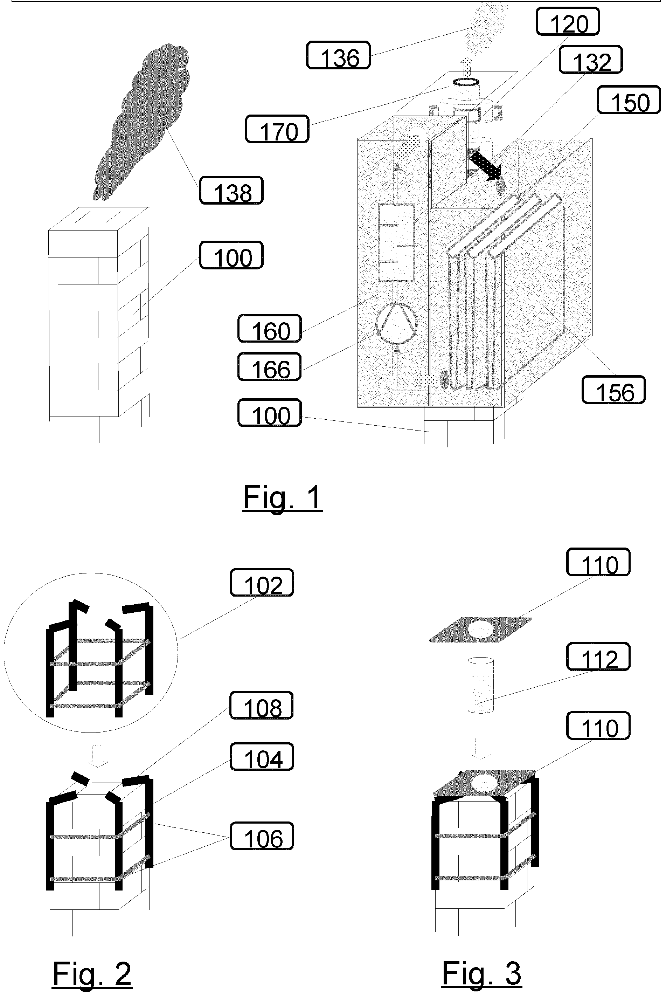

Die Bezeichnungen *"Kaminmündung"* bzw. *"Oberkante des Schornsteins oder Kamin"* beschreiben das obere Ende des Schornsteins ohne die erfindungsgemäße Vorrichtung (Fig. 1, hier beispielhaft in gemauerter Ausführung dargestellt). Auch wenn die erfindungsgemäße Vorrichtung hier montiert ist, und der Austritt des (gereinigten) Abgases dadurch räumlich erhöht erfolgt, ist mit den vorgenannten Bezeichnungen nach wie vor die vor der Montage der Vorrichtung vorhandene Mündung bzw. Oberkante des ursprünglich vorhandenen Schornsteins gemeint.

Die Angabe *"unterhalb der Kaminmündung"* beschreibt entsprechend den Raum Mündung bzw. Oberkante des vor einer möglichen Montage der Vorrichtung ursprünglich vorhandenen Schornsteins. In Fig. 1 ist dies der Raum allseitig um den gemauerten Schornstein herum.

Die Bezeichnung des "betriebsnotwendigen Gehäusevolumens unterhalb der Kaminmündung" fasst beispielsweise den Bauraum von Filterkammer, Ventilator und Steuerung zusammen, die sich bei einer Montage der Vorrichtung in Fig. 1 unterhalb der ursprünglichen Kaminmündung, d.h. im Bereich des gemauerten Kamins befinden. Wird beispielsweise eine Zierverkleidung der Vorrichtung mit installiert, so zählt deren Bauraum nicht zum betriebsnotwendigen Gehäusevolumen.

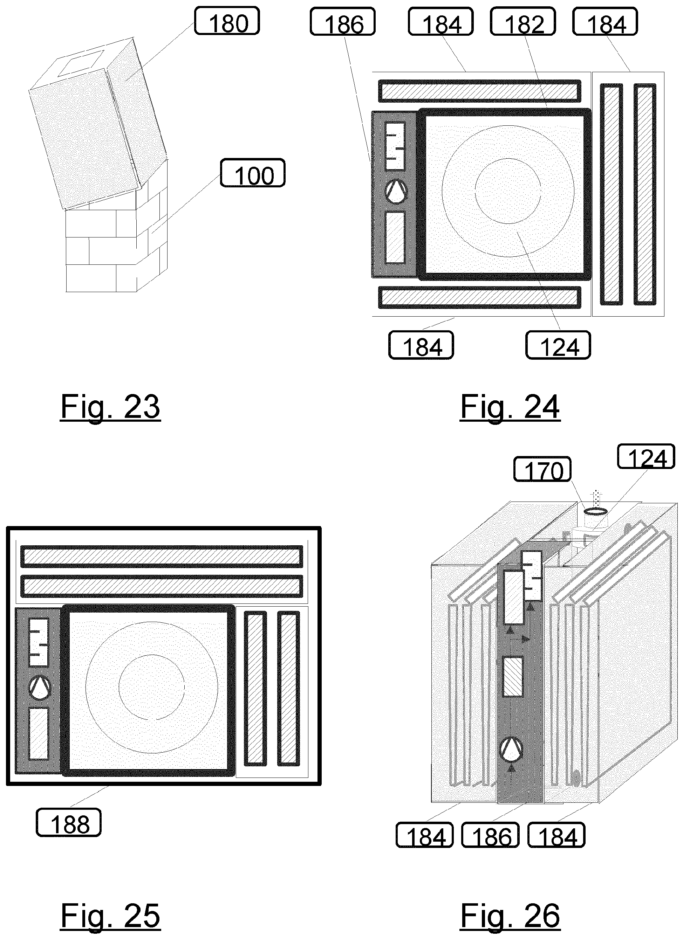

Zur schnellen und einfachen Verkleidung von Schornsteinen sind in der Praxis unter anderem sogenannte "*Stülpköpfe"* bzw. Stülpkopfverkleidungen üblich. Hierbei wird eine vorgefertigte Kaminverkleidung, beispielsweise aus Metall oder Faserzement, über einen aus dem Hausdach herausragenden Schornstein gestülpt und anschließend an dem Schornstein befestigt. Fig. 23 zeigt beispielhaft wie ein klassischer Stülpkopf (180) zur Kaminverkleidung über einen Kamin (100) gestülpt wird. Durch die Vorfertigung des Stülpkopfes wird u.a. die Montagezeit vor Ort minimiert und damit die Kosten für die Realisierung gesenkt. Nähere Informationen zu Stülpköpfen finden sich beispielsweise auf den Internetseiten www.ruckzuck-schornsteinverkleidung.de oder www.ahrens.at/produkte/neubaukaminsysteme/stuelpkoepfe (Abruf: November 2022) sowie in der einschlägigen Fachliteratur.

Eine besonders bevorzugte Ausgestaltung der Erfindung besteht darin, dass das Kaminfilter als Stülpkopf, d.h. bevorzugt an einem Stück, ausgeführt wird, so dass es schnell und einfach mit einem Kran, einer fahrbaren Arbeitsbühne oder der gleichen an einem Stück auf den Kamin gehoben werden kann und dort nur noch mit einer zuvor montierte Bodenplatte, vorzugsweise durch Verschraubungen, verbunden werden muss.

Die Montage über eine Bodenplatte (496) erfolgt bevorzugt durch einen Fachbetrieb, der oben senkrecht Löcher in den Kamin bohrt und Gewindebolzen (498) oder vergleichbare Befestigungseinheiten dort mit einem dafür abgestimmten Spezialkleber einklebt.

Eine Montage von einzelnen Baugruppen ist dagegen deutlich aufwändiger und wird in der Praxis alleine aus Kostengründen nur dann erfolgen, wenn die Distanz zwischen Kamin und möglichem Aufstellungsort eines Krans etc. zu groß ist.

Die am meisten bevorzugte optische Ausgestaltung der Erfindung beinhaltet die Möglichkeit die Erfindung trotz ihrer Größe so auszuführen, dass sie im montierten Zustand auf dem Dach wenig und idealerweise nur bei sehr genauer Betrachtung auffällt.

Hierzu kann die vor allem aus dem Bereich der Kfz-Farbgestaltung bekannte Technik der Folierung verwendet werden. Folierung ist eine weit verbreitete Alternative zu Lackierung von Kfz. Die Folien sind lichtecht und UV-beständig.

Diese Folien können einfarbig, beliebig gemustert und auch mit Digitaldruck gestaltet ausgeführt sein. Beim Digitaldruck besteht die Möglichkeit ein Digitalfoto in Großformat auf die Folien zu drucken.

In Bezug auf die Erfindung besteht daher die Möglichkeit, den Kamin vor der Montage des Filters digital zu fotografieren, dessen Oberflächenerscheinungsbild auf eine Folie zu drucken und auf die Außenflächen des Kaminfilters, in Stülpkopfsowie in modularer Bauweise, zu kleben.

Wenn beispielsweise ein Kamin aus Ziegelsteinen gemauert oder mit Schiefer verkleidet ist, wird dies vor der Filtermontage abfotografiert und zum Digitaldruck der Folien gegeben. Diese Folien werden bevorzugt vor dem Montage, d.h. idealerweise beim Hersteller kurz vor dem Versand, auf die Außenflächen des Kaminfilters aufgeklebt.

Nach der Montage des folierten Kaminfilters erscheint der Kamin im gleichen Erscheinungsbild wie vor der Montage, wenn beispielhaft Ziegel- oder Schieferoptik, mittels Folierung und Digitaldruck übertragen werden.

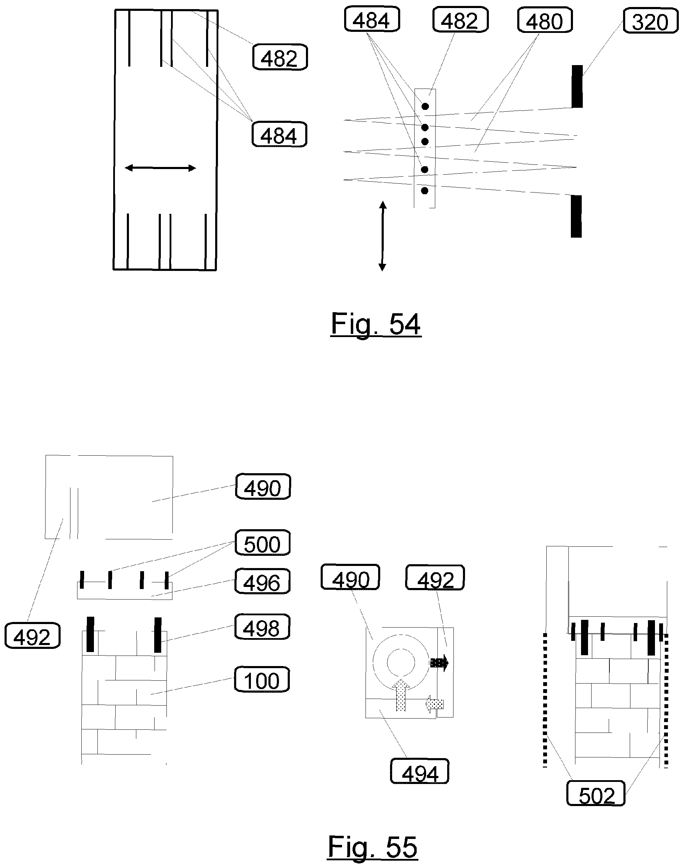

Die Größe des Kamins erhöht sich durch die Montage der Erfindung beispielhaft um gut einen halben Meter, unter anderem durch das Technikgehäuse (XY) und die Breite um etwa 15 cm, für die beiden Filterkammern (XY) wenn eine Ausführung wie in Abb. 55 realisiert wird.

Bei einer beispielhaften Ausführung der Erfindung als Stülpkopf ist der innere Teil (182, Fig. 24) ähnlich einer klassischen Stülpkopfverkleidung (180, Fig. 23), jedoch bevorzugt aus Kostengründen ohne optisch ansprechende Merkmale, ausgeführt. Dieser innere Teil des Stülpkopffilters (182) dient vor allem dem Anschluss des Stülpkopffilters an den Schornstein. Die Filterkammer(n) (184) der Erfindung gruppieren sich in Fig. 24 beispielhaft um den inneren Teil (182), ebenso wie das Gehäuse für Peripherietechnik (186), in der bevorzugt die Steuerung und der Ventilator, und optional Schalldämpfer sowie ein zusätzliches Filter (78), untergebracht sind. Eine äußere Verkleidung (188) umschließt vorteilhafterweise die Anordnung aus Filterkammer(n) (184), Gehäuse für Peripherietechnik (186) sowie Absaug- und Rezirkulationsteil (120). Mögliche Isolierungen der Filterkammern bzw. der äußeren Verkleidung sind hier zu Erhöhung der Übersichtlichkeit nicht gesondert bildlich dargestellt.

Eine wichtige technische Eigenschaft der erfindungsgemäßen Vorrichtung ist deren "*Rußbrandsicherheit".* Da es in der Praxis nicht generell ausgeschlossen werden kann, dass abgeschiedener Ruß durch Funkenflug oder auch Selbstentzündung zu Brennen oder zu Glimmen beginnt, muss sichergestellt werden, dass auch in einen solchen Fall keine weitergehenden Schäden auftreten. Im Wesentlichen geht es darum, dass beim Auftreten einen Ruß(glimm)brandes innerhalb eines Bauteils, hier des Kaminfilters, keine schädlichen Auswirkungen auf die Umgebung des Bauteils ausgehen. Es soll beispielsweise verhindert werden, dass Teile in der Umgebung des Bauteils durch Wärmestrahlung geschädigt oder entzündet werden können. Auch soll ausgeschlossen werden, dass beispielsweise brennendes Plastik von dem Bauteil abtropft und somit weitere Brandherde hervorrufen kann. Bei der Konstruktion ist daher darauf zu achten, dass sich keine die Brandausbreitung fördernden Komponenten, wie beispielsweise Kunststoffe im Bereich der besonders temperaturbeaufschlagten Bereiche der Absaug- und Rezirkulationseinheit eingebracht werden. Die Filtermedien können aus Kunststofffasern bestehen, diese sind allerdings bevorzugt innerhalb eines aus zwei Langen Stahlblech und einer Lage Steinwolle bestehenden und damit temperaturbeständigem Gehäuse eingebaut.

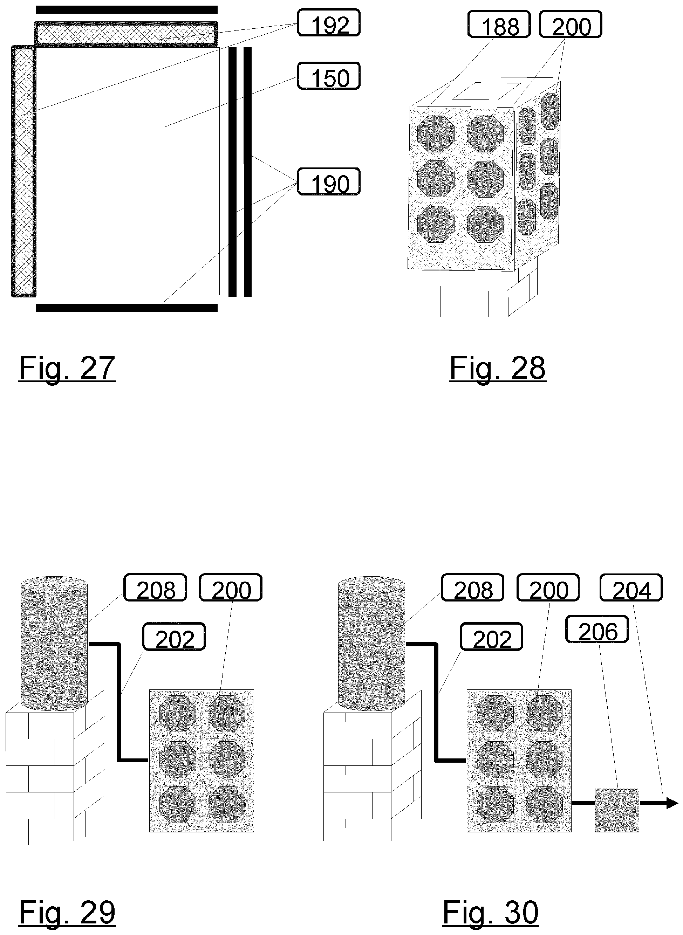

Beim Auftreten von Ruß(glimm-)bränden ist mit Temperaturen von bis zu 1.000°C zu rechnen. Damit die erfindungsgemäße Vorrichtung rußbrandsicher ist, sollte das Gehäuse der Vorrichtung die Temperatur von 1.000 °C über die Dauer eines typischen Rußbrandes ohne mechanisches Versagen ertragen. Bei einer mit Mineralwolle gedämmten verzinkten Sandwichblechkonstruktion kann dies erwartet werden. Um die Wärmestrahlung auf die Umgebung der Vorrichtung wirksam zu begrenzen, können hinterlüftete Platten (190, Fig. 27) eingesetzt werden, die vorteilhafterweise auch mehrschichtig ausgeführt werden können. Die direkte Ausbreitung der Strahlungswärme wird durch eine solche Platte behindert und die Weitergabe der Strahlungswärme nach Aufheizung dieser Platte wird durch die Luftkühlung dieser Platte weiter verringert. Wenn mehrere hinterlüftete Platten, wie in Fig. 27 auf der rechen Seite dargestellt vorhanden sind, wird dieser Effekt deutlich verstärkt.

Alternativ oder ergänzend zu der hinterlüfteten Platte kann die Ausbreitung der Wärme(-strahlung) bei einem Rußbrand auch durch Isoliermaterialien (192) begrenzt werden, wie es in Fig. 27 bildlich dargestellt ist.

Eine weitere Alternative um die Rußbrandsicherheit zu erreichen bzw. zumindest zu erhöhen, kann durch proaktive Maßnahmen erreicht werden. Hierbei geht es darum, einen Ruß(glimm)brand möglichst frühzeitig zu detektieren und zu löschen. Lokal in einem größeren Volumen wie der Filterkammer auftretende Glimmbrände sind mit Temperatursensoren nicht zuverlässig zu detektieren, zumal die Temperatur der Filterkammer in Stillstand und Betrieb sehr große Unterschiede aufweist.

Bei Glimmbränden entsteht Kohlenmonoxid (CO), das durch geeignete Sensoren angezeigt werden kann. Erschwert wird diese Detektion dadurch, dass das CO im bestimmungsgemäßen Betrieb durch das Rauchgas eingebracht wird, ohne dass ein Ruß(glimm)brand stattfindet. Wenn nach einem längeren Stillstand der Vorrichtung auf einmal ein Anstieg der CO-Konzentration gemessen wird, kann von einem Ruß(glimm)brand ausgegangen werden. Wenn jeweils mindestens ein CO-Sensor vor und nach der Filterkammer installiert sind, kann ein Anstieg der CO-Konzentration durch eine Ruß(glimm)brand auch während des Betriebs angezeigt werden. Idealerweise befindet sich ein CO-Sensor im Bereich des Rauchgaseintritts in die Vorrichtung und ein weiterer im Bereich des Rauchgasaustritts aus der Vorrichtung. Hierdurch können auch Ruß(glimm)brände erkannt werden, die beispielsweise innerhalb eines Schalldämpfers, Ventilators oder der verbindenden Rohrleitungen auftreten.

Nach dem Erkennen eines Ruß(glimm)brandes kann dieser beispielsweise durch das Einbringen von Wasser gelöscht werden. Vorteilhafterweise ist dieses Wasser mit Frostschutzmittel versetzt, damit es im winterlichen Betrieb nicht einfriert. In EP 20 213 371.6 wird eine Einbringung von Benetzungsmittel in ein Kaminfilter beschrieben, die der Oberflächenverdichtung von abgereinigtem Ruß und Feinstaub dient. Eine solche Benetzungseinrichtung (Einbringung von Benetzungsmittel) kann auch zum Löschen eines entstehenden Rußbrandes genutzt werden. Wenn ein Rußglimmbrand im Entstehungsstadium gelöscht werden kann, sind die Temperaturen deutlich geringer, so dass die Anforderungen an die Abschirmung der Wärmestrahlung gegenüber der Umgebung der Vorrichtung erheblich reduziert werden können.

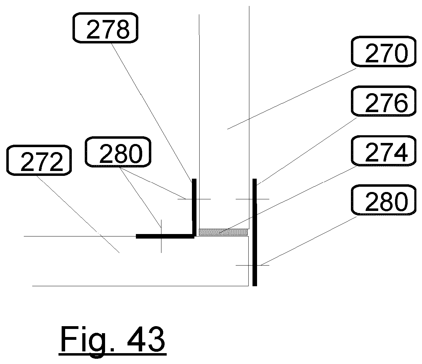

Eine Vorkehrung gegen den Austritt von flüssigem geschmolzenem Kunststoff der bei erheblichen Übertemperaturen im Bereich der Filterelemente auftreten kann, ist beispielhaft durch die labyrinthartige Befestigung der Gehäusewände in Fig. 43 dargestellt.

Im Zusammenhang mit Rußbrand kann noch sich noch ein anderer unerwarteter Effekt beobachtet werden. Es hat sich überraschend herausgestellt, dass vor allem loser, fluffiger Ruß, d.h. abgeschiedener und agglomerierter Feinstaub mit organischen Bestandteilen, die beispielsweise von kondensierten Kohlenwasserstoffaerosolen her kommen, insbesondere direkt nach der Abreinigung auch im kalten Zustand zur Selbstentzündung neigt. Auch die Entzündlichkeit in Folge von Funkeneintrag ist im losen, fluffigen Zustand besonders stark ausgeprägt. Dieser Effekt wird nicht in den Sicherheitsdatenblättern beschrieben, dass für handelsüblichen Ruß, d.h. einer Vielzahl von Rußderivaten, die unter anderem als Zuschlagstoff in der Gummiindustrie verwendet werden, gedacht ist.

### Der Effekt der Selbstentzündung:

Der Ruß brennt dann nicht mit offener Flamme, wie etwa Holz, sondern es setzt ein Glimm- bzw. Schmorbrand ein, der von außen nicht sichtbar ist, und der durch innenliegende Glutnester bestimmt ist. Da die Rußschüttung stark thermisch isolierend wirkt, kann der Glimm- oder Schmorbrand so gut wie gar nicht durch äußere Temperaturmessungen erkannt werden. Die Überwachung von Kohlenmonoxid ist dagegen eine gute Methode um einen Glimm- oder Schmorbrand von Ruß nachzuweisen, da hierbei, aufgrund der relativ geringen Temperaturen und schlechten Sauerstoffversorgung im Innern eines Rußvolumens, eine große Menge von Kohlenmonoxid gebildet wird.

Unter der Annahme, dass bei einem Glimm- oder Schmorbrand nur die Hälfte des Kohlenstoffs zu Kohlenmonoxid umgesetzt wird, führt bereits die Hälfte des durchschnittlichen Rußanfalls (0,75 kg Ruß = 50% 1,5 kg Ruß pro Jahr und Holzfeuerung) pro Feuerung zu einer Kohlenmonoxidmenge, die in einem 85 Quadratmeter großen Raum für Menschen innerhalb einer Stunde tödlich ist. Bei einem doppelt so großen Raum ist die Konzentration halb so hoch und daher ein zweistündiger Aufenthalt in diesem Raum tödlich.

Als Abschätzung des Gefahrenpotenzials der Kohlenmonoxidemissionen können die im Folgenden stichpunktartig angeführten Datenquellen und Berechnungen herangezogen werden: Umweltbundesamt: ~17.000 t Feinstaub aus Holzfeuerungen in D, 11. Mio. Öfen: 17.000.000 kg / 11 Mio. = 1,5 kg Feinstaub pro Holzofen und Jahr, lethale Konzentration (LC 60 Min, CO, Mensch): 1.500 ppm - 1.750 mg/m³ bei 20°C, 50% von 1,5 kg Ruß → 0,75 kg Ruß davon 50% zu CO umgesetzt → 375 g C zu CO → 875 g CO -→375.000 mg CO / 1.750 mg/m³ (LC 60 Min) → 214 m³ Luftvolumen → 85 m² Raum mit 2,5m Deckenhöhe.

Dies bedeutet, dass ein normaler Wohnraum von etwa 85 Quadratmetern Größe durch einen Glimm- bzw. Schmorbrand bereits von der Hälfte der durchschnittlichen Feinstaubmenge pro Feuerung so stark mit Kohlenmonoxid belastet wird, dass die letale Dosis für Menschen nach einer Stunde erreicht wird.

Ebenfalls überraschend hat sich herausgestellt, dass eine präventive hydraulische Kompaktierung die Brand- und Selbstentzündungsneigung sehr stark bis gegen Null reduzieren kann. Bei der hydraulischen Kompaktierung wird, bevorzugt direkt nach der Abreingung - durch Besprühen bevorzugt mit Wasser, das mit Zusätzen zum Frostschutz (beispielsweise klebrige Substanzen, wie Zucker oder Frostschutz auf Glykohlbasis) sowie zur Homogenisierung und Verklumpung des Rußes angereicht wurde - Zerstörung oder zumindest Minderung der fluffigen Struktur des Rußes erzielt.

Um das Gefahrpotenzial bei der Lagerung insbesondere von durch eine Abreinigung aufgelockertem Ruß weiter zu reduzieren, ist eine zumindest periodisch durchgeführte Überwachung des Kohlenmonoxidgehaltes, beispielsweise ein Mal pro Stunde in der Luft sinnvoll. Hierbei ist darauf zu achten, dass kein ebenfalls Kohlenmonoxid enthaltendes Rauchgas von der Feuerung die Messung beeinflusst, die während längeren Betriebspausen des erfindungsgemäßen Filters stattfinden soll. Wenn beispielhaft im Stundenintervall gemessen wird und ein erhöhter Wert gemessen wird, kann es sinnvoll sein, die Messungen in kürzeren Intervallen, beispielhaft fünf Minuten, zu wiederholen. Vor allem, wenn ein kontinuierlicher Anstieg der Kohlenmonoxidkonzentration gemessen wird, ist das Vorliegen eines Glimm- oder Schmorbrandes wahrscheinlich. In diesem Fall soll eine Warnmeldung an Personen in der Umgebung und auch an Fachpersonal wie den Schornsteinfeger erfolgen.

Durch die Benetzungseinrichtung kann das erfindungsgemäße Filter eigenständig eine erste Brandeindämmung oder -bekämpfung einleiten. Eine zeitnahe Kontrolle durch Fachpersonal ist jedoch zusätzlich sinnvoll.

Auch bei anderen Feinstaubabscheider-Konstellationen als dem erfindungsgemäßen Filter mit integrierter Benetzungseinrichtung kann die Detektion von Kohlenmonoxid und ein automatisch eingeleiteter erster Löschversuch sinnvoll sein.

Insbesondere wenn der Glimmbrand an einem Ort stattfindet, an dem eine wenn auch geringe Luftströmung vor herrscht, ist die Gefahr der Kohlenmonoxidbildung nicht gering.

Im Normalbetrieb zieht der Kamin Luft vom Ofen nach oben zur Mündung. Es gibt auch Fälle, beispielsweise im Sommer, vor allem bei heißer schwüler Luft, bei denen der Geruch des Kamins im Aufstellungsraum des Ofens deutlich wahrnehmbar wird. In diesem Fällen dreht sich der Kaminzug um. Wenn es dann zu einem Glimmbrand von Ruß, durch Funkeneintrag oder Selbstentzündung, an den oberhalb des Ofens gelegenen Kaminwänden kommt, wird der Brand über den Luftzug mit Luft versorgt und das Kohlenmonoxid wird in Richtung Ofen transportiert.

Ein weiterer Fall von Strömungsumkehr im Kamin kann durch nicht vorhandene, fehlerhafte oder nicht fachgerecht ausgeführte Steuerungen von Dunstabzugshauben in Wohnräumen oder bei kontrollierter Wohnraumlüftung im gestörten Betrieb stattfinden.

Wenn beispielsweise das Mauerwerk eines älteren Kamins undicht wird, kann Kohlenmonoxid auch in benachbarte Räume gelangen, in denen kein Ofen aufgestellt ist. Vor allem wenn in diesen Räumen Dunstabzugshauben etc. betrieben werden, steigt die Gefahr eines Kohlenmonoxideintrages deutlich.

Rußablagerungen im unteren Teil des Kamins, nahe der Putzklappe für den Schornsteinfeger sind in der Regel nicht luftdurchströmt. Bei undichtem Schornsteinmauerwerk, einer fehlerhaften Dichtung der Reinigungsöffnung und besonders bei Lüftungsanlagen und Küchendunstabzugshauben steigt die Gefahr durch in Folge von Glimm- oder Schmorbränden gebildetem Kohlenmonoxid auch hier.

Eine weitere optionale Ergänzung der Erfindung beinhaltet ein Verfahren und eine Vorrichtung zur Lichtgestaltung von Bauwerken, installiert insbesondere auf Dächern von Gebäuden, bei der das Licht von einer Lichtquelle auf eine Aerosolwolke projiziert wird.

Als Lichtquellen (390) kommen hier sowohl bevorzugt farbige Lampen und Laser als auch Holografieprojektoren für statische Bilder (392) als auch solche für Filmsequenzen in Betracht. Unter einer Aerosolwolke (394) wird eine nicht im festen Aggregatzustand wie bspw. Leinwände verstanden, bei der es sich um die Wasserdampf- und Abgasdampffahne inklusive möglicher Staubpartikel und kondensierender kohlenwasserstoffhaltiger Bestandteile als auch um Kunstnebel als auch eine Kombination aus Abgas, Wasserdampf und/oder Kunstnebel handeln kann. Unter Kunstnebel wird ein Aerosol verstanden, dass beispielsweise bei Theater- und Kulturaufführungen verwendet und zu dessen Erzeugung kommerziell verfügbare Nebelmaschinen zur Verdampfung eines beispielsweise glycerinhaltigen Nebelfluids verwendet werden. Auch eine Verwendung von Rauchpatronen etc., die einen feststoffhaltigen, z.T. farbigen Rauch erzeugen wird hier erfindungsgemäß als Aerosolwolke betrachtet, die als Projektionsfläche bzw. Projektionsraum einer Lichtquelle verwendet werden kann.

Bevorzugt wird die erfindungsgemäße Vorrichtung an einem Rauchgasauslass eines Gebäudes wie einem Kamin (100) oder in dessen unmittelbaren Nahbereich installiert.

Besonders bevorzugt wird die erfindungsgemäße Vorrichtung in Kombination mit einem im Zusammenhang mit dem Kamin stehenden Rauchgasreinigungseinrichtung (396), insbesondere mit einer Feinstaubabscheidungseinrichtung speziell für Biomassekleinfeuerungsanlagen installiert.

Ein Vorteil der kombinierten Installation liegt darin, dass normalerweise auf Gebäudedächern keine Stromanschlüsse vorhanden sind. Durch die Installation eines Feinstaubabscheiders, der als elektrostatischer Abscheider oder filternder Abscheider ausgeführt sein kann und bauartbedingt an eine Stromquelle angeschlossen werden muss, kann diese Stromzufuhr auch für die erfindungsgemäße Projektion sowie ggf. auch für die Erzeugung von Kunstnebel verwendet werden.

Ein weiterer Vorteil besteht darin, dass die für den Hausbesitzer bzw. Ofenbetreiber eher als behördlich vorgeschriebene Pflicht empfundene Installation eines Feinstaubabscheiders einen positiven Zusatznutzen in Gestalt einer architektonischen Licht und/oder Farbgestaltung am Gebäude hinzufügt. Solche Licht- und Farbgestaltungen sind beispielsweise von Veranstaltungsorten, die Laser verwenden als auch von der Umwidmung von alten Industrieanlagen zu Naherholungszentren, wie u.a. dem Landschaftspark Nord in Duisburg, her bekannt.

Beim Betrieb von Öfen und häuslichen Feuerung ist häufig, vor allem in der kalten Jahreszeit, eine Wolke aus kondensierendem Wasserdampf am Kamin sichtbar. Diese Wolke kann erfindungsgemäß als Projektionsfläche bzw. Projektionsraum für weißes sowie farbiges Licht verwendet werden, das von Strahlern ausgesendet wird. Eine weitergehende Variante der Erfindung nutzt Holografieprojektoren als Lichtquelle, die sowohl statische als auch bewegte Bilder erzeugen können. Die normalerweise wenig beachtete oder eher als störend empfundene Abgasfahne gewinnt somit eine ästhetische Aufwertung, ebenso wie der Kamin.

Vorteilhafterweise verfügt die erfindungsgemäße Vorrichtung über eine Vorrichtung zur Messung von Windrichtung und/oder Windgeschwindigkeit (398) und/oder eine Vorrichtung zur Änderung der Position und/oder des Winkels des Lichtauslasses, so dass bei unterschiedlichen Windverhältnisse der Lichtauslass so ausgerichtet werden kann, dass er der Aerosolwolke, besonders bevorzugt automatisiert, folgen kann.

Zur besseren Verständlichkeit und auch als Abgrenzung gegen umgangssprachliche Formulierungen folgt eine Begriffsklärung:
Unter dem hier verwendeten Begriffen wir *Kamin* oder *Schornstein* versteht man eine Abgasanlage gemäß EN1443. Keinesfalls ist mit dem Begriff Kamin eine Feuerstätte für feste Brennstoffe gemeint.

*Peltierelemente* oder *Peltiergeneratoren* erzeugen bei einer an ihnen anliegenden Temperaturdifferenz eine elektrische Spannung. Für Details hierzu wird auf die Fachliteratur oder auch beispielsweise Wikipedia sowie das Stichwort "Seebeck-Effekt" verwiesen.

Unter *Thermo-Photovoltaik* (kurz: TPV) wird ein Verfahren verstanden, bei dem mit Hilfe infraroter Wärmestrahlung direkt elektrischer Strom erzeugt werden kann. Dies geschieht analog zu den in der Solartechnik gebräuchlichen Photovoltaikzellen, die ohne zusätzliche mechanische Komponenten etc. auskommen und den sichtbaren Teil des (Sonnen-)Lichtes nutzen, während TPV den infraroten Strahlungsteil in Elektrizität umwandelt. Für Details hierzu wird beispielhaft auf die Veröffentlichungen des MIT zur Entwicklung der TPV verwiesen.

Unter dem Begriff *"modulare Bauweise"* der Vorrichtung wird verstanden, dass die Vorrichtung, bevorzugt für die Montage, nicht als Gesamteinheit sondern als mehrere Einzelzeile (Modle) auf das Dach gebracht und dort montiert werden kann.

Die Vorrichtung kann beispielhaft in die folgenden Einzelteile aufgeteilt werden: Filterkammer(-n), Isolier- und Wetterschutzverkleidung, Zierverkleidung, Befestigung am Kamin, Anschlussteil, Filterteil(en), Technikteil (Ventilator, Steuerung, optional Schalldämpfer, optional Anfahrfilter).

Dies ist zum Beispiel dann vorteilhaft, wenn die Vorrichtung durch ein enges Dachfenster auf das Dach gebracht werden soll.

Mit der Bezeichnung *"Niederspannung"* ist Strom gemeint, der über eine geringere Spannung als im 220 Volt-Wechselspannungsnetz im Normalbetrieb üblich verfügt. Wenn die Vorrichtung vor allem auf dem Dach mit Niederspannung betrieben wird, wird hierdurch die Sicherheit bei Montage, Betrieb und Wartung erhöht, da bei ungeplanten Zuständen wie versehentlichem Berühren von stromführenden Teilen das Verletzungsrisiko erheblich reduziert ist und auch keine weitergehenden Gefahren wie ein nachfolgendes Abstürzen zu befürchten ist. Auch bei Schäden an der Isolierung von stromführenden Teilen ist bei Niederspannung das Verletzungsrisiko erheblich im Vergleich zu 220/380 Volt reduziert.

Beispielhaft kann hier eine 12 Volt Gleichspannung eingesetzt werden, die sowohl den Motor des Ventilators als auch die Steuerung versorgt.

Unter einer Niederspannungsversorgung der Vorrichtung wird auch verstanden, wenn die Vorrichtung von außen mit einer Niederspannung elektrisch versorgt wird, auch wenn auch wenn der Strom innerhalb der Vorrichtung zumindest für Teilkomponenten wie den Motor des Ventilators über einen Wechselrichter beispielhaft zu 220 Volt Wechselstrom umgewandelt wird.

Unter einem *"Stromspeicher"* wird ein Akkumulator, kurz und umgangssprachlich: Akku, verstanden, über den die Vorrichtung mit Elektrizität versorgt werden kann, wenn beispielsweise eine zeitlich nicht verfügbare Quelle wie die Photovoltaik nicht verfügbar ist.

Unter der *"statischen Stützfunktion"* des Anschlussrohres (112, Fig. 3) wird verstanden, dass dieses Anschlussrohr durch die Einbringung in den Kamin eine stützende Funktion der über die Anschlussplatte (110) montierten Vorrichtung beispielsweise gegenüber Windlasten, die an die Vorrichtung angreifen, übernehmen kann.

Unter *"genormtem mechanischer Ausführung der Anschlussplatte (110)"* wird eine Ausführung verstanden, die eine einfache und sichere mechanische Verbindung mit dem Gehäuse der erfindungsgemäßen Vorrichtung erlaubt, beispielsweise durch Einschieben in eine Haltevorrichtung und anschließende Arretierung oder durch einfaches Einklicken.

Ein Beispiel der Anordnung von Absaugteil (30) und Filtereinheit (60) in *"einer Baugruppe",* hier in einem gemeinsamen Gehäuse, ist in Fig. 34 bildlich dargestellt, während die Absaugeinheit (30) und die Filtereinheit (60) in Fig. 33 räumlich voneinander getrennt als *"zwei Baugruppen"* ausgeführt sind.

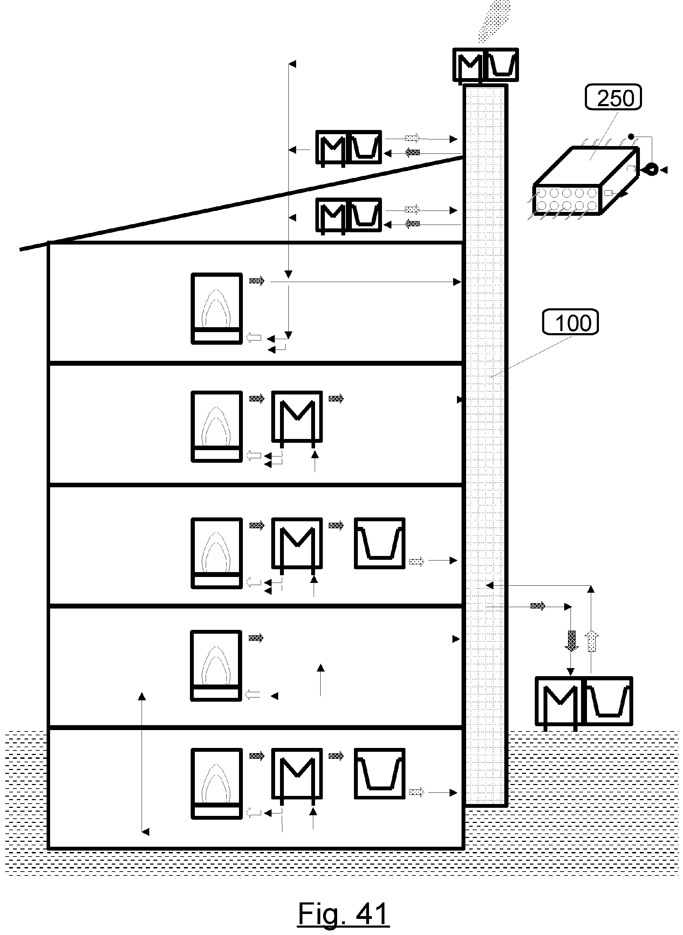

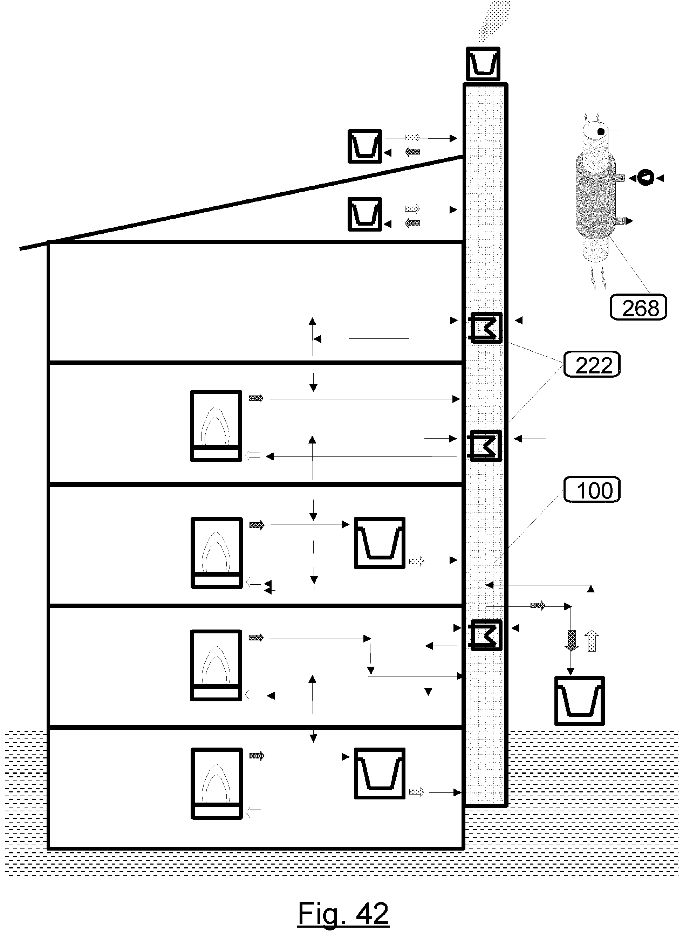

Weitere Einzelheiten, Merkmale und Vorteile der Erfindung werden nachfolgend anhand der in den Figuren der Zeichnungen dargestellten Ausführungsbeispiele näher erläutert. Dabei zeigen:
- Fig. 1: Auf der linken Seite einen Kamin (100) mit zur Atmosphäre offener Kaminmündung ohne die Vorrichtung zur Filterung von Feinstaub, aus dem das ungereinigte Rohgas (138) an die Atmosphäre abgeleitet wird. Auf der rechten Seite von Fig. 1 ist ein Kamin dargestellt, an dem die erfindungsgemäße Vorrichtung angebracht ist. Im unteren Teil ist noch ein Teil des Kamins (100) zu erkennen. Die Absaug- und Rezirkulationseinheit (120) in der Verlängerung der Kaminmündung montiert. Über das ungereinigte von der Feuerung her kommende Rohgas (132) wird in über den Ansaugstutzen in Richtung der Filterkammer (150) geleitet, in der es einen Taschenfilter (156) von oben nach unten durchströmt. Vom unteren Teil der Filterkammer gelangt das gereinigte Rauchgas in das Gehäuse für Peripherietechnik (160), in der sich unter anderem der Ventilator (166) befindet, der für den betriebsnotwendigen Unterdruck für den Rauchgasfluss sorgt. Im oberen Teil des Gehäuses für Peripherietechnik (160) wird das Rauchgas über den Rezirkulationsstutzen zurückgeführt und als Reingas (136) an die Atmosphäre abgegeben. Optional kann der Kaminanschluss (120) mit einer Abdeckung (170) versehen sein, die über eine Isolierung verfügen kann, so dass eine ungewollte Abkühlung der Rauchgase vermindert wird.
- Fig. 2: Ein Ausführungsbeispiel der der Kaminbefestigung als Gesamteinheit (102) der erfindungsgemäßen Vorrichtung zur Filterung von Feinstaub am Kamin (100) bestehend aus senkrechten Halterungen (104), die beispielsweise als Winkelprofile ausgeführt sein können, waagerechten Streben (106) zur Verbindung und Stabilisierung der senkrechten Halterungen und oberen Streben (108), bevorzugt können die waagerechten Streben als Spannbänder aus Edelstahl ausgeführt werden, wie sie auch im Bereich der Verkehrsleittechnik, unter anderem zur Befestigung von Schildern an Ampel- und Laternenmasten verwendet werden.
- Fig. 3: Ein Ausführungsbeispiel für die Montage, bei auf die Kaminbefestigung als Gesamteinheit (102) eine Anschlussplatte (110) an die oberen Streben (108) befestigt wird, die einen genormten mechanischen Anschluss für die erfindungsgemäße Vorrichtung zur Filterung von Feinstaub ermöglicht. Für den gasseitigen Anschluss der Vorrichtung zur Filterung von Feinstaub wird kann ein Anschlussrohr (112) in die obere Mündung des Kamins (100) eingebracht, durch das ein standardisierter Anschluss für das Absaug- und Rezirkulationsstück (120, optional nur Absaugstück) geschaffen wird.

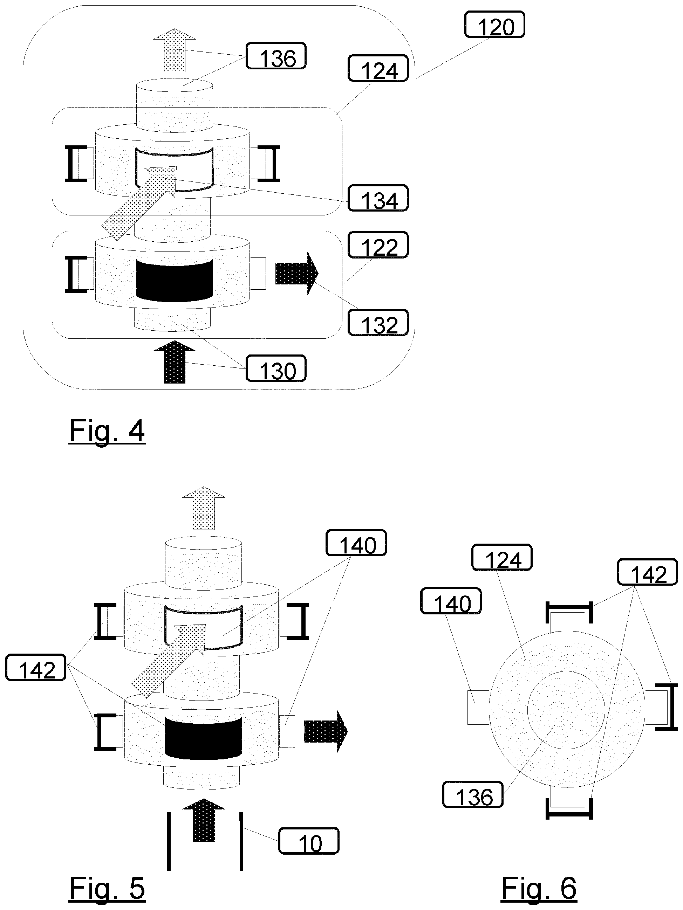

- Fig. 4: Ein Ausführungsbeispiel des Absaug- und Rezirkulationsstücks (120, optional nur Absaugstück), hier dargestellt als bestehend aus den Komponenten Absaugteil (122) und optionalem Rezirkulationsteil (124), mit einem unteren Eintritt für von der Feuerung her kommendem ungereinigtem Rohgas (130). Dargestellt ist der Austritt von abgesaugtem ungereinigtem Rohgas (132) in Richtung Filterkammer (150), das optional nach Passage von zumindest der Filterkammer als Reingas (134) über den Rezirkulationsteil (124) zurückgeführt wird und über den oberen Austritt für Reingas (136) in Richtung der Atmosphäre weitergeleitet wird.
- Fig. 5: Ein Ausführungsbeispiel des Absaug- und Rezirkulationsstücks (120) mit jeweils vier um 90° versetzte Öffnungen für die Rauchgasdurchströmung. Hierdurch kann bei der Montage eine einfache Anpassung an bauliche Gegebenheiten erfolgen. In dieser bildlichen Darstellung ist jeweils eine dieser Öffnungen für den Gasdurchtritt offen (140) während jeweils die anderen drei mit Blinddeckeln (142) verschlossen sind. Weitere Varianten, wie beispielsweise das einfache Verdrehen der Absaug- und Rezirkulationseinheit zueinander sind auch möglich und ohne explizite detaillierte Darstellung und Beschreibung Bestandteil der Erfindung.
- Fig. 6: Die Draufsicht auf Fig. 5 mit Ansicht des oben befindlichen Rezirkulationsteils (124) und Blick auf den oberen Austritt für Reingas (136) sowie einer für den Gasdurchtritt offenen Öffnung (140) und drei mit Blinddeckeln verschlossenen Öffnungen (142), die zum oben befindlichen Rezirkulationsteil (124) gehören und die die darunter befindlichen Öffnungen des Absaugteils verdecken.

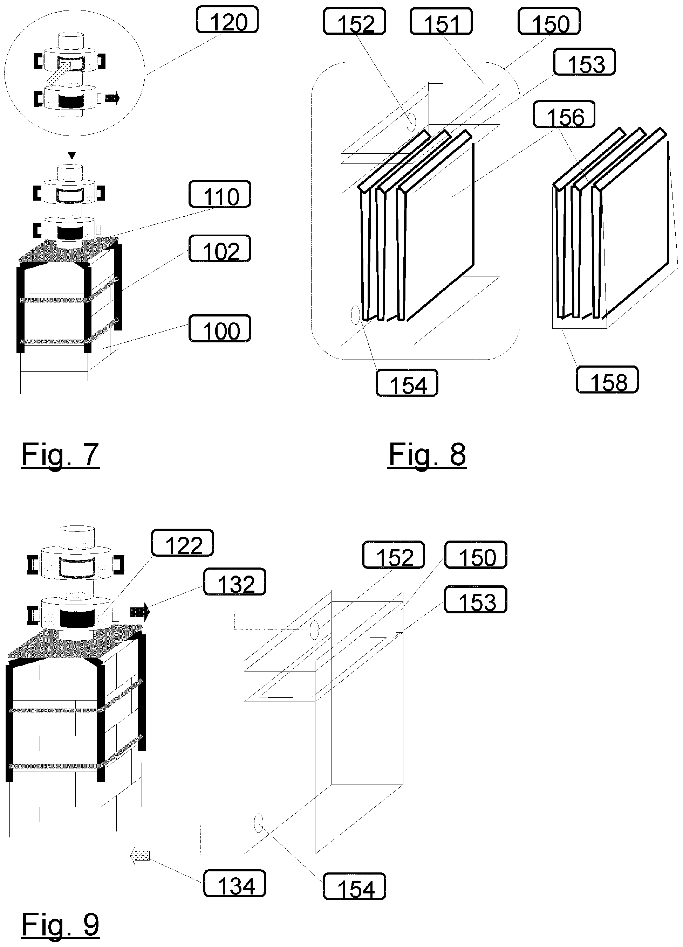

- Fig. 7: Ein Ausführungsbeispiel für die Montage des Absaug- und Rezirkulationsteils als Gesamteinheit (120) an der Anschlussplatte (110) und dem dadurch verdeckten Anschlussrohr (112 in Fig. 3) für die gasseitig dichte Verbindung mit dem Kamin (100) und die mechanische Befestigung durch die Befestigungseinheit (102).
- Fig. 8: Links dargestellt ist ein Ausführungsbeispiel der Filterkammer als Gesamteinheit (150) mit einem Gehäuse (151), einem Stutzen zum Rohgaseintritt (152) und einem Stutzen für den Reingasaustritt (154) und einem eingesetzten Taschenfilter (156), dass hier beispielhaft mit drei Filtertaschen dargestellt ist. Die Abtrennung zwischen dem oberen Rohgasraum und dem unteren Reingasraum des Filtergehäuses (151) erfolgt durch eine Kopfplatte (153), die eine Öffnung zur Aufnahme des Taschenfilters aufweist. Im rechten Teil von Fig. 8 ist das Taschenfilter mit einer zusätzlichen, die drei Filtertaschen umfassende Filterfläche (158) beispielhaft dargestellt, die der Feinabscheidung von Feinstaub dienen kann. Ebenfalls Bestandteil der Erfindung, auch ohne explizite Darstellung und detaillierte Beschreibung sind andere Ausführungsformen des (Taschen-)filters (156), wie beispielsweise der Ausführung als separate Filtertaschen mit jeweils getrenntem Vor- und Feinfilter oder Filter in Schlauch- oder Beutelform etc..
- Fig. 9: Ein Ausführungsbeispiel für den gasseitigen Anschluss des Absaug- und Rezirkulationsteils als Gesamteinheit (120) mit der Filterkammer als Gesamteinheit (150), bei der zur Verbesserung der Übersichtlichkeit auf die Darstellung der Filtertaschen des Taschenfilters (156) verzichtet wurde. Das über den Absaugteil (122) abgesaugte Rohgas (132) wird der Filterkammer (150) über den oberen Stutzen für den Rohgaseintritt (152) zugeführt, wird beim Durchströmen des hier nicht bildlich dargestelltem Taschenfilters (156) gereinigt und verlässt die Filterkammer als Reingas (134) über den unteren Stutzen für den Reingasaustritt (154).
- Fig. 10: Ein Ausführungsbeispiel für den gasseitigen Anschluss der erfindungsgemäßen Vorrichtung zur Filterung von Feinstaub an den Kamin, bei der das Rohgas (132) über den Absaugteil (122) der Filterkammer (150) zugeleitet wird und diese als Reingas (134) verlässt, um dem Gehäuse für Peripherietechnik (160) durch den vom Ventilator (166) erzeugten Unterdruck über den, hier unten angeordneten, Stutzen für Gaseintritt (162) zugeführt zu werden. Optional kann das Reingas über einen Schalldämpfer (168) sowie einen hier nicht bildlich dargestellten Zusatzfilter für den Anfangsbetrieb (78, Fig. 36) geleitet werden um über den, hier oben angeordneten, Austrittsstutzen (164) das Gehäuse für Peripherietechnik zu verlassen und über das Rezirkulationsteil (124) an die Atmosphäre abgeleitet zu werden.
- Fig. 11: Ein Ausführungsbeispiel der Montage der Filterkammer (150) und des Gehäuses für Peripherietechnik (160) ohne Darstellung des Anschlusses an den Kamin (100).
- Fig. 12: Die Draufsicht auf Fig. 11, mit Blick von oben auf den hier dargestellten Kamin (100) und das Absaug- und Rezirkulationsteil (120), die Filterkammer (150) und das Gehäuse für Peripherietechnik (160). Der Rohgastrom ist durch den dunklen Pfeil und der Reingasstrom durch die hellen Pfeile dargestellt.

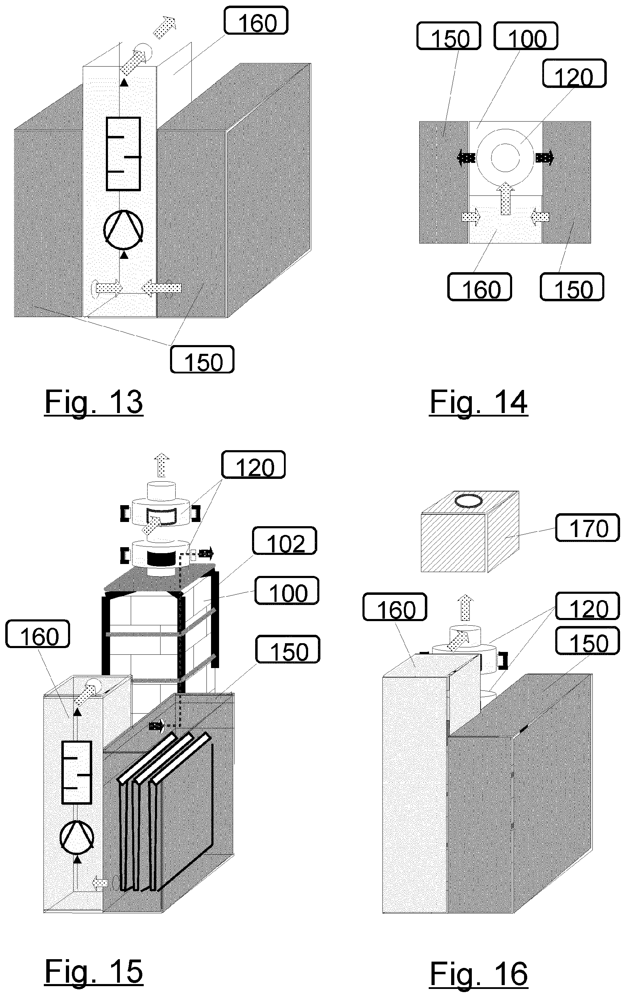

- Fig. 13: Ein Ausführungsbeispiel analog zu Fig. 11, jedoch mit zwei Filterkammern (150), die beidseits des Gehäuses für Peripherietechnik (160) angeordnet sind. Durch den Anschluss von mehreren Filterkammern kann eine Erhöhung der installierten Filterfläche und damit auch der Wartungsintervalle und/oder der behandelbaren Rauchgasmenge realisiert werden.
- Fig. 14: Die Draufsicht auf Fig. 13, mit beidseitigen des Gehäuses für Peripherietechnik (160) angeordneten Filterkammern (150) und Blick von oben auf den Kamin (100) und den oberen Teil des Absaug- und Rezirkulationsteil (120). Der Rohgastrom ist durch die dunklen Pfeile und der Reingasstrom durch die hellen Pfeile dargestellt.
- Fig. 15: Ein Ausführungsbeispiel der Montage der Filterkammer (150) und des Gehäuses für Peripherietechnik (160) an einem Schornstein (100). Ebenfalls dargestellt sind die Befestigungseinheit (102) und die Wege des Rauchgases vor und nach der Reinigung sowie die Absaug- und Rezirkulationseinheit (120).
- Fig. 16: Ein Ausführungsbeispiel ähnlich Fig. 15 mit zusätzlicher Darstellung der Abdeckhaube (170) für die Absaug- und Rezirkulationseinheit (120).

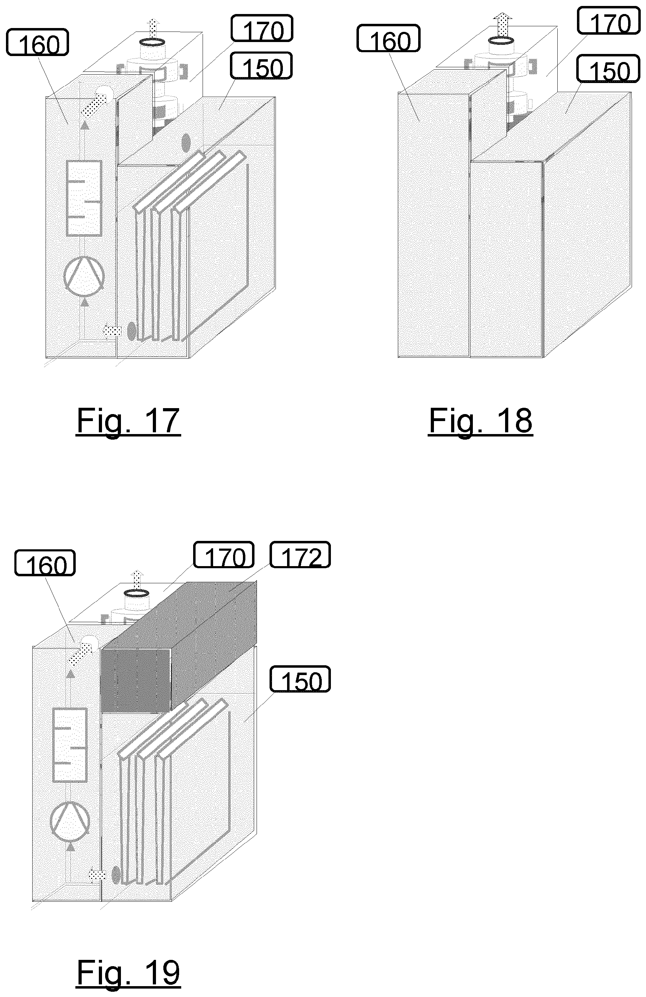

- Fig. 17: Ein Ausführungsbeispiel der Montage des Kaminfilters am Schornstein mit halbtransparenter Darstellung von Filtereinheit (150), Gehäuse für Peripherietechnik (160) und Abdeckung (170) für Absaug- und Rezirkulationseinheit.
- Fig. 18: Eine Darstellung analog zu Fig. 17, jedoch mit nicht transparenter Darstellung der Filterkammer (150) und des Gehäuses für Peripherietechnik (160).
- Fig. 19: Eine Darstellung analog zu Fig. 17, mit zusätzlicher Darstellung eines Zusatzvolumens (172), das zur besseren Nutzung des umbauten Raumes betriebsnotwendige Technik, beispielsweise zusätzlicher Filterfläche gefüllt werden kann.

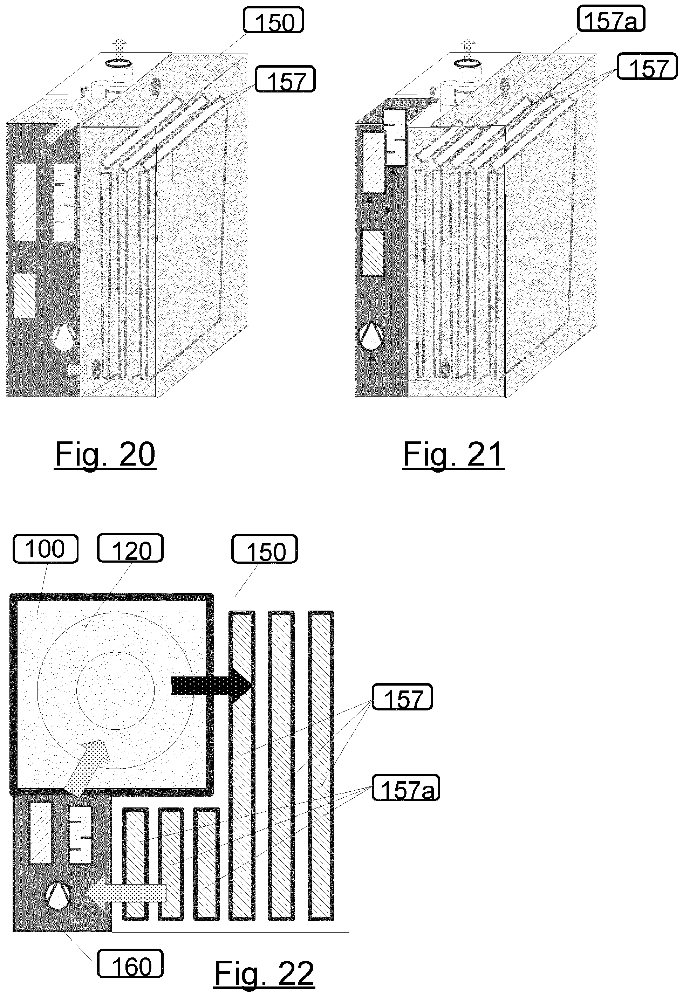

- Fig. 20: Eine Darstellung ähnlich Fig. 19, bei der Raum des in Fig. 19 dargestellten Zusatzvolumens (172) durch eine vergrößerte Filterkammer (150), hier dargestellt mit drei großen Filtertaschen (157), genutzt wird.
- Fig. 21: Eine Darstellung ähnlich Fig. 20, bei der zusätzlich zu den drei großen Filtertaschen (157) und zwei kleinen Filtertaschen (157a).
- Fig. 22: Eine Draufsicht ähnlich Fig. 21, bei der drei große (157) und drei kleine (157a) Filtertaschen vorhanden sind.
- Fig. 23: Die Montage eines klassischen Stülpkopfes (180) an einem Schornstein (100), der nach dem Stand der Technik zur schnellen und einfachen Verkleidung des Schornsteins verwendet wird.
- Fig. 24: Eine Draufsicht auf Kaminfilter in Stülpkopfausführung. Dargestellt sind der innere Teil des Stülpkopffilters (182), die Filterkammern (184) des Stülpkopffilters, das Gehäuse für Peripherietechnik des Stülpkopffilters (186) und der Rezirkulationsteil (124). In dieser Ansicht des Ausführungsbeispiels befindet sich der Schornstein etwa in der Mitte der Vorrichtung.
- Fig. 25: Eine Darstellung analog zu Fig. 24 mit einer anderen Anordnung der Filterkammern und Filtertaschen und einer äußeren Verkleidung (188) die sowohl mit Photovoltaikzellen zur zumindest teilweisen Stromversorgung der Erfindung ausgestattet sein kann, als auch eine Wetterschutzfunktion, beispielsweise bei Zinkblechausführung, oder auch eine Zierfunktion, beispielsweise bei Ausführung in Farbaluminium oder Schwarzglas, aufweisen kann. Hier befindet sich der Schornstein in Bezug auf drei Seiten etwa mittig und nahe am Rand der vierten Seite.
- Fig. 26: Eine Darstellung des Kaminfilters in Stülpkopfausführung mit beidseitig des Gehäuses für Peripherietechnik (186) angeordneten Filterkammern (184). Der Schornstein befindet sich hier im Randbereich des betriebsnotwendigen Gehäusevolumens.
- Fig. 27: Eine Darstellung um ein Gehäuse, hier beispielhaft eine Filterkammer (150) rußbrandsicher auszuführen. Die Temperaturausbreitung wird nach unten hin durch eine hinterlüftete Platte (190), nach rechts durch mehrere, hier zwei, hinterlüftete Platten, nach links durch eine Isolierschicht (192), beispielsweise aus Mineralwolle und nach oben hin durch eine Kombination aus Isolierschicht und mindestens einer hinterlüfteten Platte erreicht.
- Fig. 28: Eine beispielhafte Darstellung einer als Stülpkopffilter ausgeführten erfindungsgemäßen Vorrichtung, bei der an der äußeren Verkleidung (188) Photovoltaikzellen (200) zur Stromerzeugung angebracht sind.
- Fig. 29: Eine Variante der in Fig. 28 dargestellten Erfindung, bei der die Photovoltaikzellen (PV, 200) nicht auf der äußeren Verkleidung der Vorrichtung (208) angebracht sind, wobei der Strom der PV zur Vorrichtung geleitet wird.
- Fig. 30: Eine Variante der in Fig. 29 dargestellten Erfindung, bei der vorteilhafterweise der überschüssige von der PV erzeugte Strom einer anderen Verwendung zugeführt wird, beispielhaft ist hier die Umwandlung in Wechselstrom (204) durch einen Wechselrichter (206) dargestellt, wodurch eine Einspeisung des Stroms in das gebäudeinterne oder auch das gebäudeexterne 220/380 V Wechselstromnetz ermöglicht wird, vgl. das sogenannte Balkonkraftwerk.

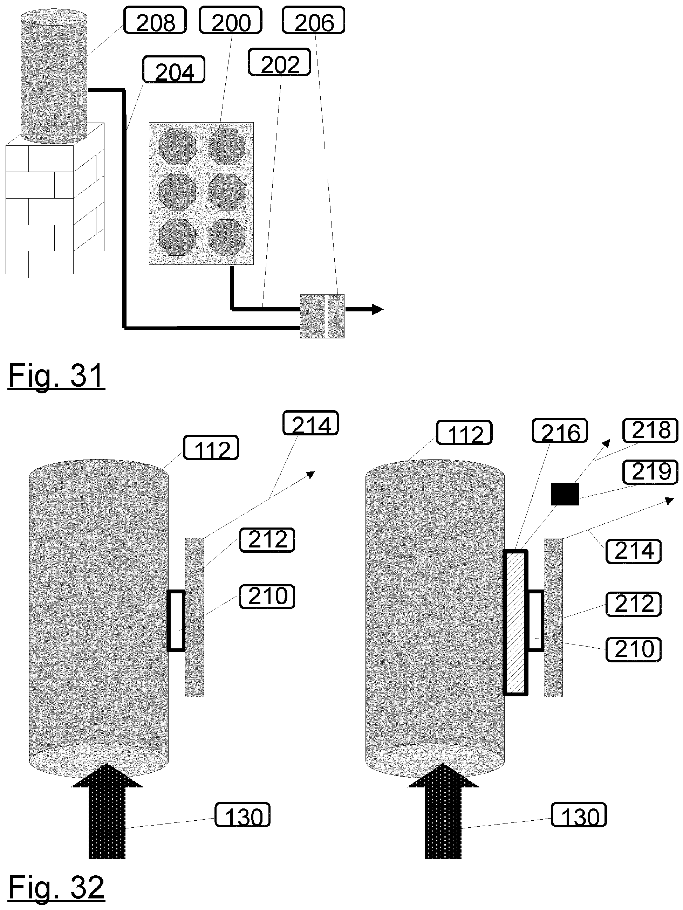

- Fig. 31: Eine Variante zu Fig. 30, die nicht Bestandteil der Erfindung ist, da hier der Strom der PV ausschließlich über einen Wechselrichter (206) geleitet wird und die Vorrichtung (208) ausschließlich über einen 220/380 V Wechselstromanschluss mit elektrischer Energie versorgt wird.
- Fig. 32: Auf der linken Seite beispielhaft eine Anordnung eines Peltierelementes (210) im Bereich des Anschlussrohrs (112), das vom Rauchgas von der Feuerung (130) durchströmt wird. Vorteilhaft ist bei dieser Anordnung, dass die Temperatur des Rauchgases an dieser Stelle maximal ist. Alternativ könnte diese Anordnung beispielsweise auch im Absaug- und Rezirkulationsteil (120) untergebracht sein. Auch ohne explizite bildliche Darstellung sind diese sowie weitere Variante Bestandteil der Erfindung. Auf der der rauchgasführenden warmen Seite abgewandten Seite des Peltierelements ist eine Kühlung des Peltierelements (212) angebracht, die bevorzugt ebenfalls gegen die Umgebung kühlt (214).
Beim Betrieb von Peltierelementen ist eine spezifische Maximaltemperatur der Elemente einzuhalten, ober halb der die Lötstellen, beispielsweise ab 150 °C, zu schmelzen beginnen, was zu einer Zerstörung der Peltierelemente führen kann. Es ist daher sinnvoll einen Überhitzungsschutz für die Peltierelemente vorzusehen, sofern die hier relevanten Rauchgastemperaturen diese Maximaltemperatur überschreiten können. Erfindungsgemäß wird hier vorgeschlagen einen Überhitzungsschutz (216) in Form eines Raumes oder Körpers zwischen der warmen rauchgasnahen Seite und dem Peltierelement vorzusehen. Wenn das Volumen des Überhitzungsschutzes zumindest teilweise mit einer Flüssigkeit gefüllt ist, die unterhalb von der zulässigen Maximaltemperatur des Peltierelements siedet, so kann die Temperatur im Volumen des Überhitzungsschutzes nicht weiter als bis zur Siedetemperatur der Flüssigkeit steigen. Sofern der aus der siedenden Flüssigkeit aufsteigende Dampf durch Kondensation, bevorzugt gegen die Umgebung (218, beispielsweise über einen Dampf-Umgebungsluft-Lammellenkühler) gekühlt und wieder in dem Überhitzungsschutz in flüssiger Form zugeleitet wird, ist diese Form des Überhitzungsschutzes für einen Dauerbetrieb geeignet, bei dem die Rauchgastemperaturen häufig über der zulässigen Maximaltemperatur der Peltierelemente liegen.
Idealerweise ist diese Flüssigkeit frostfest für den Einsatz auf dem Dach und nicht giftig sowie nicht brennbar.
Erfindungsgemäß wird beispielhaft die Verwendung von Salzen wie beispielsweise einer Calciumchloridlösung als Flüssigkeit für den Überhitzungsschutz vorgeschlagen. Bei hohen Konzentrationen von etwa 150 g Calciumchlorid pro 100 g Wasser liegt der Siedepunkt im Bereich von 140 °C und damit sicher unterhalb einer maximal zulässigen Betriebstemperatur der Peltierelemente von 150 °C. Da Calciumchlorid (CaCl₂ x 2 H₂O) auch als Tieftemperaturstreusalz bzw. Auftausalz im Winterdienst eingesetzt wird, ist die Frostbeständigkeit ebenso gegeben wie die Nichtbrennbarkeit und die nicht vorhandenen Giftigkeit.
Wenn längere Zeit Temperaturen im Rohgas (130) von beispielsweise 200 °C vorherrschen, siedet die Calciumchloridlösung, ohne dass ihre Temperatur über 140°C steigt. Der aufsteigende Wasserdampf wird in der Kühlung gegen die Umgebung kondensiert und weiter abgekühlt und wieder dem Volumen des Überhitzungschutzes (216) zugeführt. Beim Siedevorgang verdampfen die Salze nicht. Sie bleiben zurück in der siedenden Flüssigkeit. Vorteilhafterweise befindet sich zwischen Überhitzungsschutz (216) und Rückkühlung (218) ein Partikel- und Tropfenabscheider (219), bevorzugt in Form eines Tropfenabscheidergestricks, das verhindert, dass Salzpartikel aus der siedenden Flüssigkeit mit dem aufsteigenden Dampf mitgerissen werden und so zu einer Verschmutzung der Rückkühlung (218) führen würden. Wenn das von der Rückkühlung kommende Kondensat über die den Partikel- und Tropfenabscheider (219) zurück zum Überhitzungsschutz geführt wird, kann gleichzeitig eine Reinigung des Partikel- und Tropfenabscheiders (219) erfolgen.
- Fig. 33: Eine beispielhafte Ausführung in zwei räumlich voneinander getrennten Baugruppen von Absaugteil (30) und Filtereinheit (60) mit Filterelement (50) und eine hier unterhalb des Absaugteils angeordneten Temperaturmessstelle (T1).
- Fig. 34: Eine Ausführung, bei der Absaugteil (30) und Filtereinheit (60) in einer Baugruppe angeordnet sind. Ebenfalls darstellt sind eine optionale Rauchgasklappe (24) die oberhalb der Absaugung im Bereich des Bypasswegs (20) angeordnet ist sowie eine thermische Trennung (22) und eine beispielhafte Ausrüstung der Filtereinheit (60) mit einen E-Filter (50). Auf eine detaillierte Darstellung von Details der Absaug- und Rezirkulationseinheit, wie beispielsweise In Fig. 4, wurde hier der Übersichtlichkeit halber verzichtet.
- Fig. 35: Eine Ausführung mit Trennwand (70) zwischen Vor- und Feinabscheidung.
- Fig. 36: Eine Ausführung mit zusätzlichem Filterelement (78), Schalldämpfer (72) und Umschalteinheit (76).

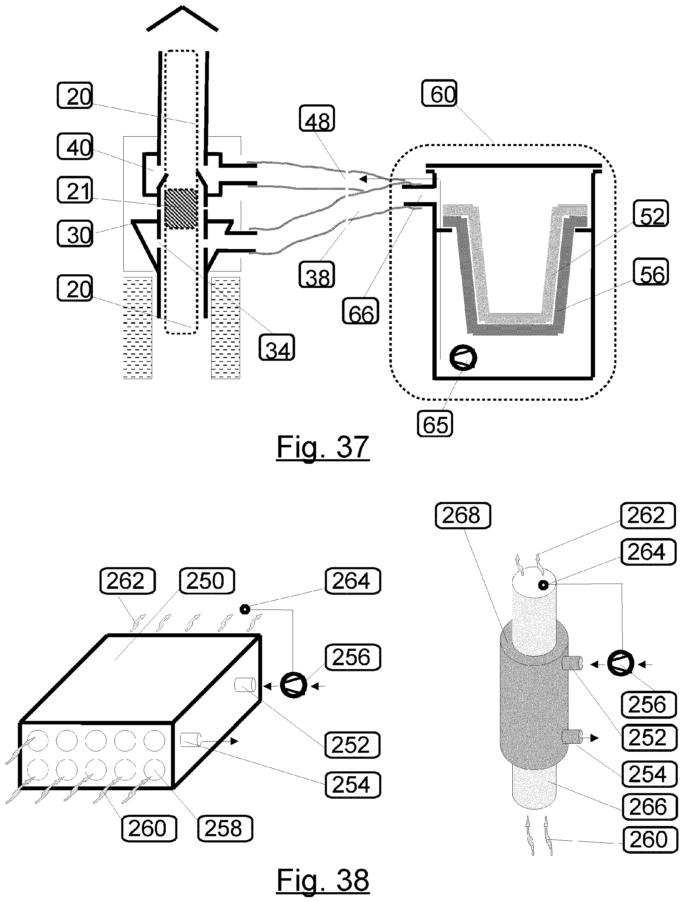

- Fig. 37: Eine Ausführung in zwei räumlich voneinander getrennten Baugruppen für die Absaugeinheit (30) und die Filtereinheit (60), die über ein Verbindungselement für die Absaugung (38) miteinander in Fluidverbindung stehen. Ebenfalls dargestellt ist hier eine Rezirkulationseinheit (40), die über ein Verbindungselement an die Filtereinheit angeschlossen ist. Darstellt sind auch der Bypassbereich (20), über den das Rauchgas an Absaug- und Rezirkulation vorbei an die Atmosphäre abgeleitet werden kann. Der Kernbereich des Bypassweges (21) befindet sich im Bereich zwischen der Absaugung und der Rezirkulation. Der zur Erzeugung des betriebsnotwendigen Unterdrucks erforderliche Ventilator (65) befindet sich vorzugsweise aus Wetterschutzgründen innerhalb der Filtereinheit und zum Schmutz gegen Verschmutzung auf der Reingasseite der Filter. In dieser Darstellung sind Vorfilter (52) und Feinfilter (56) in Reihe geschaltet darstellt.
- Fig. 38: Zwei beispielhafte Ausführungen von Wärmetauschern, die dem Feuerraum einer Feuerung nachgeschaltet werden können um dem Abgas thermische Energie zu entziehen und diese an ein Medium, bevorzugt Luft, zu übertragen. Auf der linken Seite ist der Wärmetauscher in eckiger Ausführung eines Rohrbündelwärmetauschers (250) dargestellt. Die Wärmetauscherrohre (258) werden bevorzugt mit warmem Rauchgas (260) auf der Eintrittseite beaufschlagt. Dieses Rauchgas tritt als abgekühltes Rauchgas (262) aus dem Wärmetauscher (250) aus. Der Mantelraum des Wärmetauschers kann mit unterschiedlichen Mengen bevorzugt an kalter Luft über den Eintrittsstutzen (252) beschickt werden, die als erwärmte Luft aus dem Austrittsstutzen (254) wieder austritt. Wenn eine große Menge an kalter Luft in den Wärmetauscher eingebracht wird, führt dies zu einer stärkeren Abkühlung des Rauchgases als bei einer kleinen Luftmenge. Die Änderung der Luftmenge kann bevorzugt über die Drehzahlsteuerung des Ventilators erfolgen. Idealerweise wird die Drehzahl in Abhängigkeit von der Temperatur des austretenden Rauchgases (262) gesteuert, so dass bei unterschiedlichen Rauchgasmengen und Eintrittstemperaturen eine möglichst konstante Austrittstemperatur des austretenden Rauchgases (262) erzielt werden kann. Auf der rechten Seite von Fig. 38 ist der Wärmetauscher (268) beispielhaft als Rohr-in-Rohr-Ausführung dargestellt. Die Betriebsweise ist analog zur Ausführung als Rohrbündel. Weitere Varianten wie beispielsweise eine Rohr-in-(eckig)Schacht-Ausführung sind ebenso denkbar wie Ausführungen, bei der das zentrale Rauchrohr in mehrere kleine Rohre aufgeteilt wird. Diese Varianten sind auch ohne bildliche Darstellung und explizite Beschreibung Bestandteil der Erfindung, sofern sie dem gleichen Zweck wie zuvor bei Pos. 250 beschrieben dienen.
Grundsätzlich kann die Führung von Verbrennungsluft zur Feuerstätte auch parallel oder konzentrisch zum Abgasweg erfolgen. Also von der Kaminmündung nach unten zur Feuerstätte oder auf Teilstücken davon. Bei dieser Art der Verbrennungsluftführung im Gegenstrom zur Abgasführung kann das Abgassystem bereits als Wärmetauscher arbeiten/funktionieren/fungieren/unterstützend wirken, wodurch der Wirkungsgrad der Feuerstätte erhöht werden kann.
Die Temperatur im Brennraum muss eine bestimmten Wert erreichen, damit die brennbaren gasförmigen Bestandteile des Brennstoffs Holz, das sogenannte Holzgas, freigesetzt wird und mittels zugeführtem Sauerstoff verbrennen kann. Kalte Verbrennungsluft muss durch Energie des Brennstoffs erst auf Brennraumniveau angehoben werden. Wird vorgewärmte Luft der Verbrennung zur Verfügung gestellt, ist die Temperaturdifferenz nicht so groß und es wird weniger Brennstoffenergie zur Temperaturerhöhung benötigt. Weniger Brennstoff wird hierfür benötigt und es steigt der Wirkungsgrad der Feuerstätte. Dieser Effekt kann dann noch zusätzlich mit einem Wärmetauscher beispielsweise im Bereich des Verbindungsstückes, optional auch in Kombination mit einem Feinstaubfilter verbessert werden.
Grundsätzlich ist es möglich, dass die Betriebseinheit der Wärmetauscher in Bezug auf die Stromversorgung (Ventilator, /Temperatur-)Steuerung) autark betrieben wird, wenn hierfür bevorzugt an der wärmere Einströmseite ein bevorzugt mit Peltierelementen ausgerüstete Anordnung wie in Fig. 32 beschrieben vorgesehen wird. Vorteilhafterweise wird hierbei ein Überhitzungsschutz (216) mit Rückkühlung (218) und Partikel- und Tropfenabscheider (219) verwendet.
Ein vorteilhafter Betriebsort für den Wärmetauscher ist das Übergangsstück zwischen Feuerung und Kamin, insbesondere dann, wenn die Zuluft zur Feuerung zunächst über dem Abgassystem im Gegenstrom vorgewärmt und anschließend im Wärmetauscher im Bereich des Übergangsstücks auf eine möglichst hohe Temperatur gebracht wird.

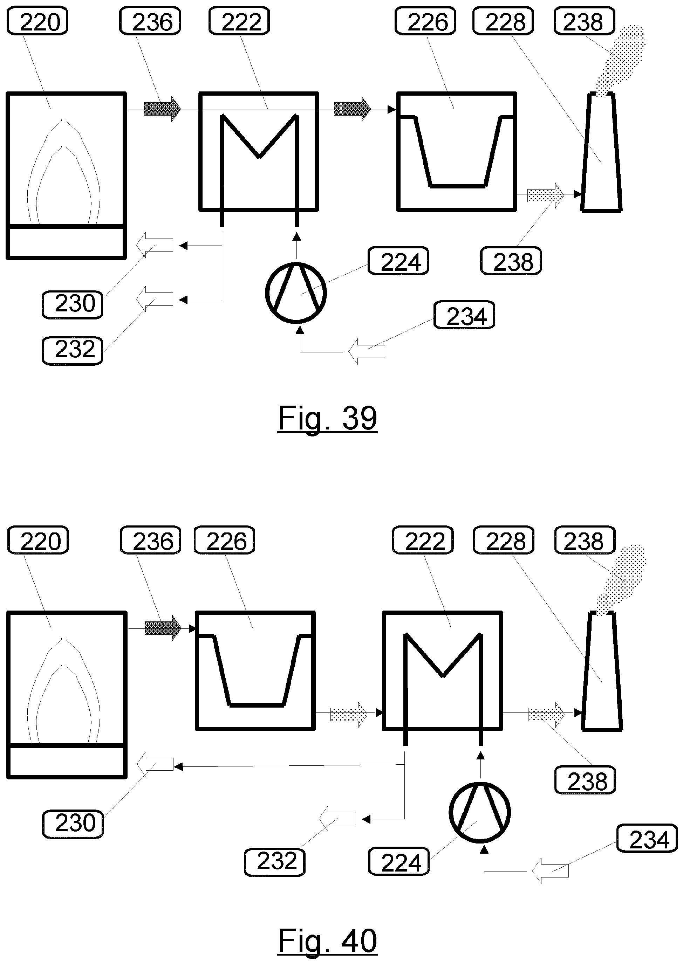

- Fig. 39: Eine Anordnung einer Reihenschaltung von einer Feuerung (220), einem Abgas(luft-)wärmetauscher (222) der über einen Ventilator (224) mit Umgebungsluft beschickt wird, einem Feinstaubfilter (226) und einem Kamin (228), bei der das warme staubbeladene Rohgas (236) der Feuerung im Abgas(luft-)wärmetauscher abgekühlt wird, bevor es im Feinstaubfilter gereinigt und anschließend über den Kamin an die Umgebung abgegeben wird. Der Abgas(luft-)wärmetauscher wird über einen Ventilator hier mit Umgebungsluft beschickt und übergibt die erwärmte ausströmende Luft in die Ansaugung der Verbrennungsluft der Feuerung (230) und/oder in die Umgebung (232), beispielsweise zur Beheizung von Wohnräumen. Alternativ und weniger bevorzugt können auch andere Gase und Flüssigkeiten als wärmeaufnehmendes Medium, auch in Verbindung mit weiteren Wärmetauschern, verwendet werden. In diesem bevorzugten Ausführungsbeispiel ist der Wärmetauscher vor dem Feinstaubfilter angeordnet. Dies hat den Vorteil, dass so die Filtermaterialien besser vor unzulässig hohen Temperaturen geschützt werden können.
Bei der Beschickung der Feuerung mit vorgewärmter Verbrennungsluft, insbesondere wenn hierbei ein leistungs- oder drehzahlgesteuerter Ventilator zum Einsatz kommt, ist in jedem Fall darauf zu achten, dass die zum Betrieb der Feuerung erforderlichen Druckverhältnisse eingehalten werden. Dies kann beispielhaft dadurch erreicht werden, dass die Übergabe der warmen Luft vom Wärmetauscher an die Feuerung drucklos entkoppelt, wie beispielsweise bei einer Esse erfolgt. Die Warmluft des Wärmetauschers wird in den Bereich geleitet, aus dem die Feuerung ihre Verbrennungsluft ansaugt. Dieser Übergabebereich ist zum Aufstellungsraum der Feuerung hin offen, so dass sich weder Über- noch Unterdruck dort bilden können. Wenn die Feuerung im Betrieb ist, saugt sie die Warmluft aus diesem Übergabebereich an. Ist die Feuerung außer Betrieb saugt sie keine Verbrennungsluft an und die Warmluft kann druckfrei in den Aufstellungsraum der Feuerung abgeführt werden.
- Fig. 40: Ein alternatives Ausführungsbeispiel analog zu Fig. 38, bei dem der Abgas(luft-)wärmetauscher (222) dem Feinstaubfilter (226) nachgeschaltet ist. Hierdurch werden die Wärmetauscherflächen vor Verschmutzung durch Feinstaub etc. geschützt.
- Fig. 41: Verschiedene Varianten der Integration des Wärmetauschers (222), hier und bevorzugt in Rohrbündelbauweise (250) in die Wärmeversorgung eines Gebäudes mit angrenzendem Kamin (100). Die weißen Pfeile symbolisieren Luft, die dunkelgrauen das Rohgas von der Feuerung und die hellgrauen das durch die Vorrichtung gereinigte Rauchgas.
Bei der Anordnung im Keller wird die im Wärmetauscher erwärmte Luft wahlweise als vorgewärmte Verbrennungsluft oder zu Wohnraumbeheizung ein das Erdgeschoss geleitet. Das gereinigte und abgekühlte Rauchgas wird an den Kamin übergeben.
Im Erdgeschoss ist eine Variante dargestellt, bei der sich nur die Feuerung im Raum befindet und die das Rauchgas ohne Abkühlung und Reinigung in den Kamin (100) abführt. Die dazugehörige Einheit aus Filter und Wärmetauscher ist hier außerhalb des Gebäudes auf Höhe der Erdgleiche dargestellt und entzieht dem Kamin das Rauchgas oberhalb des Einspeisepunkt der Feuerung im Erdgeschoss. Das gereinigte und abgekühlte Rauchgas wird wieder an den Kamin übergeben, während die erwärmte Luft in den Raum im Erdgeschoss geleitet wird, wo sie an die Raumluft zur Beheizung oder die Feuerung als vorgewärmte Verbrennungsluft übergeben wird. Durch die Entnahme und Rückführung des Rauchgases vom Kamin über eine hier nicht bildlich dargestellte Absaug- und Rezirkulationseinheit kann sicher gestellt werden, dass das Rauchgas nahezu vollständig erfasst wird.
Im ersten Obergeschoss ist eine Anordnung analog zu der im Keller dargestellt, mit dem Unterschied, dass die im Wärmetauscher erzeugte Warmluft optional in den gleichen Raum zu Heizzwecken aufgegeben wird.
Im zweiten Obergeschoss ist eine Variante gezeigt, bei der der Feuerung nur ein Wärmetauscher ohne Filter nachgeschaltet ist.
Die Variante im dritten Obergeschoss zeigt eine Feuerung, ähnlich der im Erdgeschoss, die von einer oberhalb angeordneten Filter- und optionale Wärmetauscherkombination, auf dem Dachboden, auf dem Dach sowie auf bzw. am Kamin, mit Warmluft versorgt wird. Die in den Figuren gezeigten Darstellungen, insbesondere die in Fig. 41 und 42, sind exemplarisch und nicht einschränkend zu verstehen. Auch hier nicht explizit dargestellte Varianten sind Bestandteil der Erfindung, sofern sie dem gleichen oder einem artverwandten Zweck dienen.
- Fig. 42: Zeigt ähnlich Fig. 41, verschiedene Varianten der Integration des Wärmetauschers (222), hier allerdings bevorzugt in Rohr-in-Rohr-Ausführung (268) bzw. in Rohr-in-(eckig)Schacht-Ausführung in die Wärmeversorgung eines Gebäudes mit angrenzendem Kamin (100).
Im Keller ist eine Feuerung mit nachgeschalteter Feinstaubabscheidung dargestellt.
Im Erdgeschoss ist eine Feuerung ohne nachgeschaltete Feinstaubabscheidung dargestellt. Der Wärmetauscher (222, 268) befindet sich im Kamin auf der Höhe des Raumes im Erdgeschoss und bezieht seine kalte Luft wahlweise von außerhalb des Gebäudes als auch bevorzugt aus dem Gebäude selbst, wie hier gezeigt aus dem Raum im Erdgeschoss, übergibt seine Warmluft wahlweise an den Raum im Erdgeschoss, den Raum im Keller oder die Feuerung zur Vorwärmung der Verbrennungsluft. Die Feinstaubabscheidung der Feuerung im Erdgeschoss findet in diesem Beispiel über den außerhalb des Gebäudes aufgestellten und dem Wärmetauscher im Kamin in Strömungsrichtung des Rauchgases nachgeschalteten Filter statt.
Im ersten Obergeschoss ist eine Anordnung ähnlich der im Keller dargestellt, bei der die Warmluft des nachgeschalteten Wärmetauschers, hier auf Höhe des zweiten Obergeschosses dargestellt, zusätzlich zur Erwärmung verschiedener Räume auch als vorgewärmte Verbrennungsluft eingesetzt werden kann.
Die Anordnung im zweiten Obergeschoss ähnelt der im Erdgeschoss mit dem Unterschied, dass der nachgeschaltete Wärmetauscher seine Warmluft auf der Höhe eines anderen Stockwerks abgibt.
Im dritten Obergeschoss wir in diesem Beispiel keine Feuerung betrieben. Diese Räumlichkeiten können optional über den im Kamin befindlichen Wärmetauscher zur Kaltluftversorgung dienen und auch über ihn zusätzlich beheizt werden.
Weitere Aufstellungsorte für Feinstaubfilter ohne integrierten Wärmetauscher befinden sich, wie hier dargestellt auf dem Dachboden, auf dem Dach sowie auf bzw. an der Schornsteinmündung.
Die in den Figuren gezeigten Darstellungen, insbesondere die in Fig. 41 und 42, sind exemplarisch und nicht einschränkend zu verstehen. Auch hier nicht explizit dargestellte Varianten sind Bestandteil der Erfindung, sofern sie dem gleichen oder einem artverwandten Zweck dienen.
- Fig. 43: Zeigt exemplarisch eine Ausführungsart zur Verbindung der Gehäusewände (270, 272) die im Normalbetriebs, aufgrund der Dichtmasse (274) für die vorteilhafterweise Hochtemperatursilikon verwendet werden kann, gasdicht ist und die ihre Stabilität auch bei sehr hohen Temperaturen wie sie bei einem Rußbrand auftreten können durch die z.B. mit Stahlnieten (280) an den Gehäusewänden befestigten inneren und äußeren Befestigungsbleche (276, 278) nicht verliert. Auch ein Austritt von bei unzulässig hohen Temperaturen im Innern der Vorrichtung (links oben) geschmolzenem Kunststoff der Filtertaschen ist durch die sich ergebenden labyrinthartigen Wege von innen nach außen (rechts, unten) deutlich erschwert bis unmöglich.

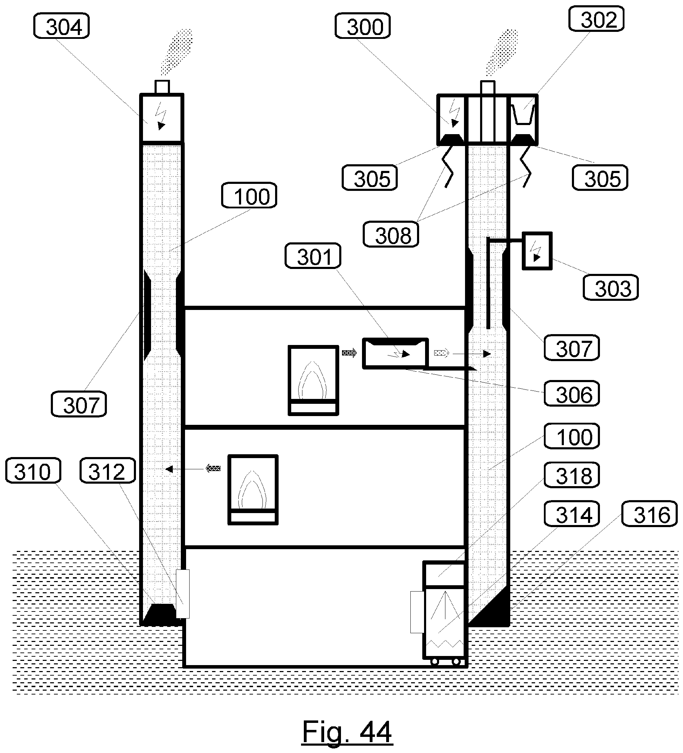

- Fig. 44: Zeigt exemplarisch ein Gebäude mit zwei Kaminen (100), in die das Rauchgas von Feuerungen eingeleitet wird, wobei auf dem rechten Kamin beispielhaft zwei erfindungsgemäße abreinigbare Feinstaubabscheider mündungsnah installiert sind, die sowohl aus abreinigbares E-Filter (300) als auch als abreinigbares Tiefenfilter (302) ausgeführt sein können und bei denen der abgeschiedene und abgereinigte Feinstaub in einem Volumen seitlich der Achse des Rauchgaswegs gespeichert wird und optional über eine Drainage (308) aus diesem Volumen entfernt werden kann und beim linken Kamin ein abreinigbares E-Filter (304) mündungsnah installiert ist, dass den abgeschiedenen Feinstaub (310) bei der Abreinigung in der Achse des Rauchgaswegs, in dem Teil des Kamins unterhalb der Zuleitung der Rauchgase von der Feuerung, hier exemplarisch im Bereich der Reinigungsöffnung (312), sprich des Russsacks, speichert.
Der seitlich an den Wänden haftenden Ruß (307) kann sowohl bestimmungsgemäß durch ein im Rauchgasweg installiertes E-Filter (303) als auch durch durch abgereinigten Ruß von einem mündungsnah installierten E-Filter, der auf dem Weg nach unten durch Strömungen zumindest zum Teil an der Wand haften bleibt hervorgerufen werden.
Wenn der an den Seitenwänden abgelagerte Ruß (307) von einem Schmor- oder Glimmbrand betroffen wird, kann die CO-Entwicklung aufgrund der dort vorherrschenden Strömungsverhältnisse zu einer Gefährdung führen, die beispielsweise durch den Betriebs von Kückendunstabzugshauben oder die Strömungsumkehr im Kamin, v.a. im Sommer und besonders bei schwül warmer Witterung herrührt.
Um die Gefahren, die von einem Schmor- und Glimmbrand ausgehen zu minimieren und bevorzugt vollständig zu beseitigen, schlägt die Erfindung einen separaten Russsack (314) vor, der zumindest und bevorzugt optional nass betrieben werden kann. Wenn eine CO-Entwicklung detektiert wird, kann der separate Russsack vorteilhafterweise über Düsen mit einem Löschmittel wie Wasser beaufschlagt werden, so dass sowohl der Brandherd gelöscht wird als auch ein Wiederaufglimmen dauerhaft verhindert wird.
Um sicher zu stellen, dass der Ruß gut in den separaten Russsack gelangt, kann im Bereich des Bodens des Russsackes eine in Richtung des separaten Russsackes abfallender Boden (316) installiert werden. Idealerweise erfolgt im Falle eines Schmor- oder Glimmbrandes des Rußes innerhalb des separaten Russsackes eine Meldung an die Bewohner des Gebäudes und den zuständigen Schornsteinfeger.
Alternativ zum optional nassen Betrieb kann der separate Russsack auch dauerhaft nass betrieben werden, indem sich permanent eine ausreichend große Wassermenge im Bodenbereich befindet. Diese Betriebsvariante ist aufwändiger in der Wartung, jedoch gleichzeitig betriebssicherer, da keine Fehlfunktionen an Düsen, Pumpen etc. auftreten können. Diese Variante entspricht dem sogenannten Nassentschlacker bei Müllverbrennungsanlagen.
Die Darstellung des separaten Russsackes auf der rechten Seite von Fig. 44 erfolgte dort aus Platzgründen, sinnvoll ist sie vor allem in Verbindung mit dem oben auf dem Kamin installierten E-Filter (304), der in den Kamin selbst abreinigt.
Anhand von Fig. 44 kann beispielhaft verdeutlicht werden, dass der Rauchgasweg im Normalbetrieb der Feuerung von unten nach oben verläuft und auch in einem gewissen Maße eine seitliche Bewegungskomponente haben kann, die sich z.B. durch die Filter 300 und 302 oder aufgrund von einem waagerechten Regendach auf der Kaminmündung einstellt. Eine Strömungsrichtung nach unten entspricht nicht dem Rauchgasweg im Normalbetrieb der Feuerung. Dies wird beispielsweise bei Betriebsstörungen wie Verstopfungen im Bereich der Kaminmündung oder bei fehlerhaft betriebenen Küchendunstabzugshauben sowie auch in Kombination von Küchendunstabzugshauben in Verbindung mit undichtem Kaminmauerwerk auftreten.

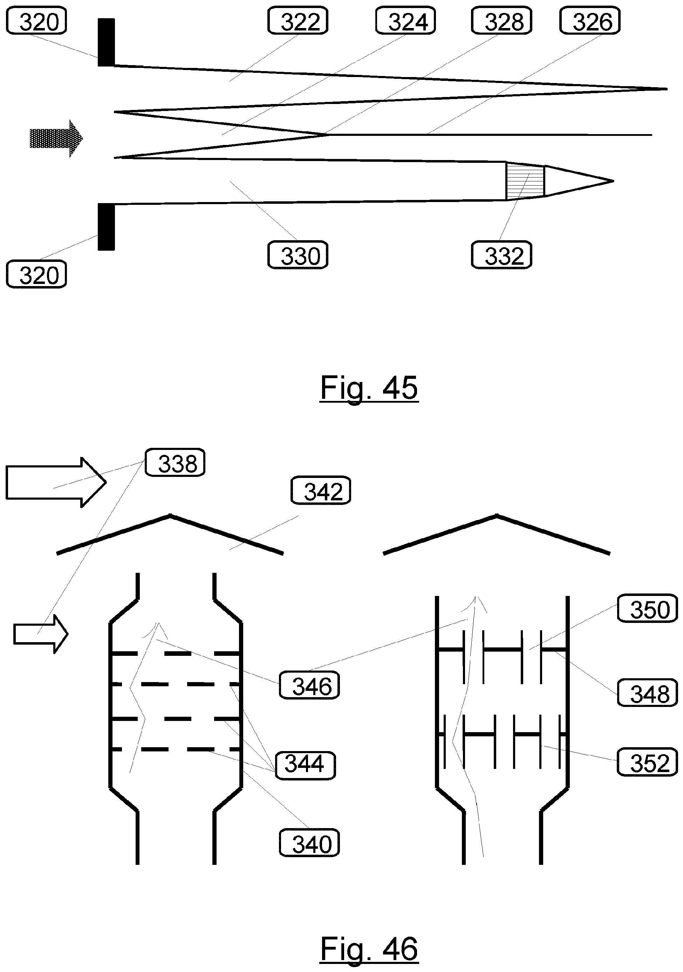

- Fig. 45: Zeigt exemplarisch einen von links nach rechts angeströmten Taschenfilter mit drei Filtertaschen in der geschnitten Draufsicht von oben. Die Filtertaschen sind in einen Rahmen (320) montiert. Die obere Filtertasche (322) ist vollständig geöffnet, beispielsweise durch hohe Gasgeschwindigkeiten, so dass ihre volle Filterfläche aktiv ist. Die mittlere Filtertasche (324) ist. Beispielsweise aufgrund von sehr geringen Strömungsgeschwindigkeiten, teilweise zuammengefallen, so dass nur die Filterfläche links des Kontaktpunktes (328) aktiv ist und die Filterfläche rechts davon (326) inaktiv ist. Beim unteren Filterelement (330) ist ein Formgebungselement (332) in die Filtertasche eingebracht, das verhindert, dass die Filtertasche auch bei geringen Strömungsgeschwindigkeiten zusammenfallen kann. Idealerweise ist das Formgebungselement leicht, temperaturstabil und hier in der waagerechten Achse durchströmbar, so dass auch der Teil der Filterfläche rechts vom Formgebungselement aktiv ist. Das Formgebungselement kann beispielsweise aus dem bei 160 °C temperaturbeständigen Kunststoff PVDF bestehen und als Füllkörper ausgeführt sein, die normalerweise in verfahrenstechnischen Trennapparaten z.B. zur Destillation, Rektifikation oder Gaswäsche eingesetzt werden. Bevorzugt kann das Formgebungselement aus plastikfreien Pappbechern ausgeführt sein. Diese sind noch leichter, preiswerter und bei der Entsorgung umweltfreundlicher als PVDF.
- Fig. 46: Zeigt exemplarisch verschiedene Ausführungen von Vorrichtungen, die bei stark böigem Wind eine Ausbreitung des Unterdrucks von der oberen Austrittsmündung der gereinigten Rauchgas in das erfindungsgemäße Feinstaubfilter zumindest deutlich begrenzen und idealerweise vollständig unterbinden. In dieser Darstellung kommt der böige Wind (338) von links und weht nach rechts. Es hat sich überraschend gezeigt, dass sich bei stark böigen Windverhältnissen Rauchgassträhnen aus dem Inneren des erfindungsgemäßen Filters ablösen können und dass diese Strähnen gegen alle vorherigen Erwartungen auch von unterhalb der Absaugeinheit angesaugt werden können, so dass in diesen Fällen ungereinigtes Rauchgas über den Bypassweg an den Filtern vorbei in die Atmosphäre austritt. Dieser Effekt widerspricht dem Erfindungsgedanken und soll daher verhindert werden. Es werden Einbauten vorschlagen, die bei ungestörtem Normalbetrieb eine geringe Strömungsgeschwindigkeit für die von unten nach oben strömende Rauchgasströmung bieten. Bei plötzlichem starken Anstieg der Strömungsgeschwindigkeit soll sich der Strömungswiderstand deutlich erhöhen, so dass die Ablösung der Rohgassträhnen zumindest deutlich gemindert und idealerweise vollständig unterbunden wird. Um den vorgegebenen Mindestquerschnitt des Abgasweges nicht durch die Einbauten zu unterschreiten, kann deren Einhausung einen größeren Querschnitt aufweisen. Dies ist in Fig. 46 durch die Aufweitung im unteren Teil dargestellt.
Dargestellt ist der obere Gasauslass (340) von erfindungsgemäßem Filter, wobei der sich unterhalb befindende Abscheider hier nicht bildlich dargestellt ist. Ein oberhalb angebrachter Regenschutz (342), optional, der hier beispielhaft in Dachform dargestellt, verhindert den Eintritt von Regenwasser in den Bereich der Filterelemente und sorgt auch dafür, dass die angezeigten Werte der Thermoelemente nicht durch Verdunstungskälte verfälscht werden.
In der linken Darstellung sind verschiedene Ebenen mit Durchtrittsöffnungen für Rauchgas (344), hier beispielhaft als versetzte Lochbleche dargestellt, vorgesehen, die bei einem plötzlichen Anstieg der Strömungsgeschwindigkeit für einen erhöhten Druckverlust sorgen. Der Weg des Rauchgases im bestimmungsgemäßen Normalbetrieb (346) schlängelt sich durch die Öffnungen für den Rauchgasdurchtritt (350).
In der rechten Darstellung sind die Einbauten in Rauchgasweg (348), die den Durchtritt des Rauchgases zum Teil verhindert, hier beispielhaft mit versetzen Öffnungen (350) für den Rauchgasdurchtritt dargestellt. Zusätzlich sind Einbauten zur Erhöhung des Durchströmungswiderstandes (352) vorgesehen, hier exemplarisch als Rohrstücke dargestellt, die bevorzugt nach unterhalb der Einbauten ragen, da diese Geometrie in besonderem Maße geeignet ist, eine hohen Strömungswiderstand bei plötzlich ansteigenden Strömungsgeschwindigkeiten hervorzurufen.
Die in der linken Ansicht dargestellte obere Verjüngung des oberen Ausströmquerschnitts auf einen Querschnitt ähnlich des unteren Einströmquerschnitts kann auch ohne explizite bildliche Darstellung bei der rechts gezeigten Ausführungsform vorgesehen werden.

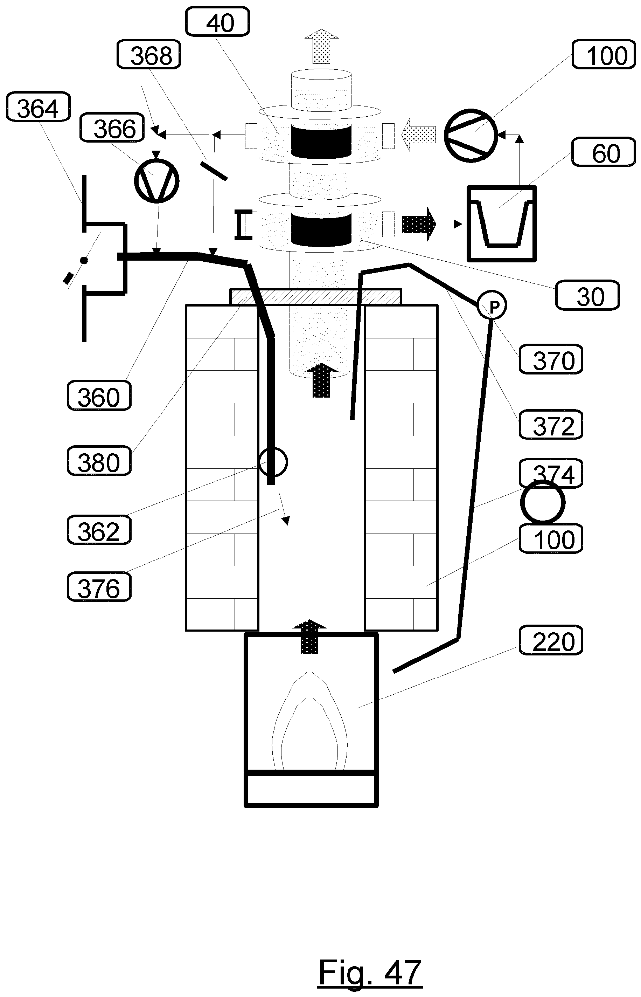

- Fig. 47: Zeigt exemplarisch eine Anordnung, die geeignet ist zu starke Unterdrücke im Kamin zu mindern. Diese zu hohen Unterdrücke, die beispielsweise durch eine defekte Ofentürdichtung aber auch durch Bedienungsfehler entstehen können, wirken sich ungünstig auf den Betrieb der Feuerung aus, so dass der Abgasverlust der Feuerung steigt und der Wirkungsgrad sinkt und dass durch die verringerten Brennraumtemperaturen die Emissionen an Kohlenmonoxid und Feinstaub aufgrund einem höheren Anteil an unvollständiger Verbrennung steigen. Die Reduktion des Unterdrucks erfolgt durch das Einbringen von Luft bzw. Rauchgas (376), hier vorzugsweise gereinigtes rezirkuliertes Rauchgas über eine Zuleitung (360) in das innere des Kamins. Vorteilhafterweise ist ein Auslassventil (362) vorgesehen, dass die Luft- bzw. Gaszufuhr druckabhängig unterbrechen kann, so dass ein gewisser Mindestunterdruck im Kamin von beispielsweise 12 Pascal nicht unterschritten werden kann. Der Kamin ist gegen die Umgebung vorteilhafterweise mittels einer Abdichtung (380) beispielsweise aus Mineralfasermatte abgedichtet.
Die Zuleitung der Luft kann über eine vorzugsweise gewichtsbelastete Pendelklappe (364) erfolgen, wie sie standardmäßig im Kaminbau zur Unterdruckregulierung eingesetzt wird. Alternativ können Luft bzw. Gas über einen Zusatzventilator (366), dessen Leistung vorteilhafterweise über den Drucksensor (370) gesteuert wird, in den Kamin eingebracht werden. Alternativ und bevorzugt kann ein gewisser Anteil des warmen und rezirkulierten gereinigten und vor allem auch warmem Rauchgases in den Kamin eingebracht werden. Durch den Ventilator (100) liegt das rezirkulierte gereinigte Rauchgas mit einem leichten, jedoch ausreichenden Überdruck vor, um auch über geringere Querschnitte der Zuleitung (360) ins Kamininnere gebracht zu werden. Die Gefahr einer Versottung des Kamins oder nasser Betriebsweise des Filters durch Taupunktunterschreitung ist bei der Verwendung von warmem Rauchgas geringer als bei kalter Umgebungsluft. Zur Regulierung der eingebrachten Rauchgasmenge ist eine Drosselklappe (368) vorgesehen, die bevorzugt über den Drucksensor (370) so gesteuert wird, dass ein vorgegebener minimaler Unterdruck im Kamin nicht unterschritten wird. Vorteilhafterweise verhindert zusätzlich auch bei dieser Variante das Auslassventil (362), dass zu viel Gas in den Kamin eingebracht werden kann.
Zur Überwachung des Unterdrucks im Kamin ist ein Drucksensor (370) vorgesehen, der über ein Verbindungselement (372) den Innendruck im Kamin erfassen kann. Bevorzugt kann der Sensor über ein weiteres Verbindungselement (374) auch den Druck im Aufstellungsraum der Feuerung (220) erfassen, so dass der Drucksensor die rauchgasseitig relevanten Druckverhältnisse genau erfassen kann.

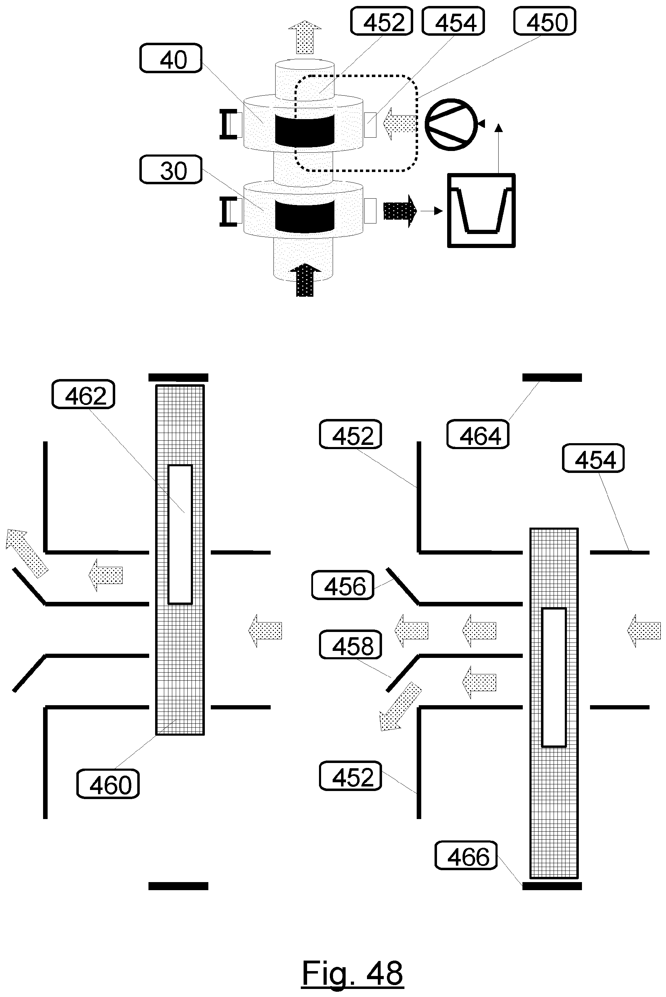

- Fig. 48: Zeigt exemplarisch in der oberen Darstellung den Ausschnitt des Rezirkulationsteils (450) mit dem Innenrohr (452) und dem Anschlussstutzen für Reingas (454), der in der unteren Darstellung detaillierter und im Schnitt dargestellt ist.
Das Innenrohr (452) und der Anschlussstutzen (454) für Reingas zur Rezirkulation sind auch in der unteren Darstellung zu erkennen. Wenn das durch die hellgrauen Pfeile dargestellte Reingas vom Anschlussstutzen zum Innenrohr strömt, kann es hier beispielhaft drei verschiedene Wege nehmen, von denen durch den Schieber mit dem teilweise offenen Teil (462) immer mindestens ein und maximal zwei Wege offen und die verbleibenden Wege für die Reingasströmung verschlossen sind. Im Übergangsbereich zum Innenrohr (452) sind hier exemplarisch zwei Leitbleche (456, 458) angebracht, die dafür sorgen, dass die Gasströmung im oberen Weg nach oben in Richtung Atmosphäre abgelenkt wird. Durch das untere Leitblech (458) wird das Gas, wenn es über den unteren Weg strömt, nach unten in Richtung Feuerung gelenkt. Gas, dass über den mittleren Weg strömt, wir radial ohne vertikale Komponente in das Innenrohr (452) eingeleitet.
Je nach Position des Schiebers wird das Reingas in unterschiedliche Richtungen gelenkt in das Innenrohr aufgegeben. Der Schieber kann hierzu vertikal bewegt werden und ist durch zwei Endlageanschläge (464, 466) so begrenzt, dass immer mindestens ein freier Weg für die Gasströmung offen ist.
In der linken unteren Darstellung befindet sich der Schieber in seiner höchstmöglichen Position, so dass über den freien Teil (462) alles Reingas nach oben gelenkt in das Innenrohr aufgegeben wird. In der rechten unteren Darstellung befindet sich der Schieber in der tiefstmöglichen, durch den unteren Endlagenanschlag (466) begrenzten Position. Hierbei wird das Reingas sowohl zum Teil radial als auch nach unten gerichtet in das Innenrohr aufgegeben. Eine vollständig nach unten gerichtete Zuführung wäre auch möglich, würde jedoch eine Änderung der Anordnung erfordern, bei der der obere geschlossene Teil verlängert wäre und der untere Anschlag (466) weiter nach unten versetzt wäre.
Durch die Rezirkulation des Reingases in verschiedene vertikale Richtungen können die Druckverhältnisse im Kamin beeinflusst werden, so dass beispielsweise zu starke Unterdrücke zumindest zum Teil damit kompensiert werden können, dass ein größerer Teil des Reingases nach unten gerichtet, d.h. dem von der Feuerung aufsteigenden Rohgases entgegen gerichtet zurückgeführt wird.
Der Vorteil gegenüber den in Fig. 47 dargestellten Varianten liegt darin, dass keine nach unten führende Leitung (360) erforderlich ist. Ebenfalls ist die rezirkulierte Gasmenge begrenzt, so dass die in Fig. 48 beschriebene bevorzugte Ausführungsvariante dadurch inhärent eigensicher gegen eine zu starke Minderung des Kaminunterdruckes ist, die im Extremfall zu einer Strömungsumkehr des Rauchgases in den Aufstellungsraum der Feuerung führen könnte. Insbesondere die Option mit dem zusätzlichen Ventilator (366) könnte bei einer Fehlfunktion der Steuerungseinheit oder der Drucksensoren zu dieser Betriebsstörung führen, vor allem, wenn der Ventilator (366) Luft anstelle von Rezirkulationsgas einblasen würde.
Bei der in Fig. 48 beschriebenen Variante ist dies ausgeschlossen. Es besteht die Möglichkeit ungünstig starke Unterdrücke im Kamin, unabhängig davon ob sie auf eine Fehlbedienung oder technische Mängel zurückzuführen sind, zu kompensieren. Bei optimalen Druckverhältnissen sind die Emissionen der Feuerung am geringsten, so dass durch diese Regelung auch die Standzeiten der Filterelemente verlängert werden.
Eine Verengung des Strömungsquerschnitts des Innenrohrs beispielsweise durch die in das Innenrohr hineinstehenden Leitbleche ist prinzipiell unproblematisch. Es ist darauf zu achten, dass durch diese geringfügigen Einschnürungen keine negativen Folgen für den Betrieb der Feuerung und die Abführung der Rauchgase, etwa durch zu hohen Druckverlust im Bereich der Einschnürung entstehen. Der Nachweis, dass eine solche Einschnürung irrelevant ist, sollte idealerweise sowohl rechnerisch als auch praktisch erbracht werden.
Alternativ kann die zuvor beschriebene Verteilung, bevorzugt des rezirkulierten Reingases, auch über Ventile, Stellklappen oder vergleichbare Einrichtungen den jeweiligen Kanälen zugeführt werden oder weniger bevorzugt das Leitblech beweglich ausgeführt werden sowie alternativ andere Verfahren zur Änderung der Vertikalkomponente des einströmenden Gases verwendet werden.

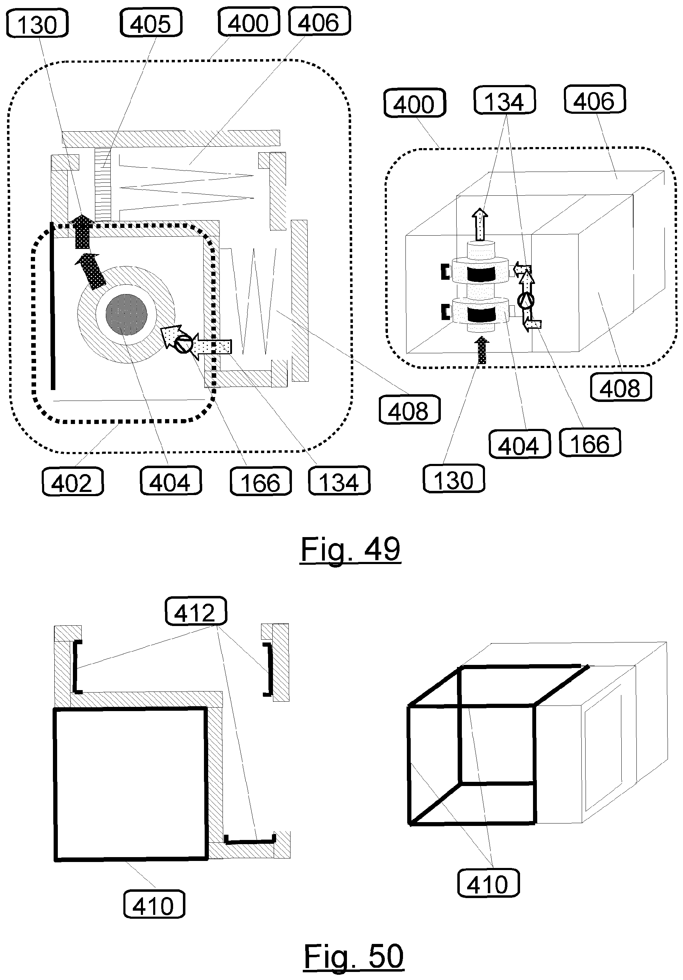

- Fig. 49: Zeigt exemplarisch das erfindungsgemäßen Filters als Gesamteinheit (400) links in der Draufsicht und rechts in einer perspektivischen Ansicht. Die Gesamteinheit besteht aus den Hauptkomponenten Technikkammer (402), in der unter anderem der Absaug- und Rezirkulationsteil (404) und der Ventilator (166) untergebracht ist, sowie der Filterkammern 1 für die Vorfiltration und der Filterkammer 2 für die Feinfiltration. Die Filterkammern 1 und 2 können beispielsweise nach unten verlängert, insbesondere nach unten durch eine weiterer Kammer ergänzt werden, um hierdurch die installierbare Filterfläche zu erhöhen. In diesem Fall befindet sich ein wesentlicher Teil der betriebsnotwendigen Gehäusevolumens unterhalb der ursprünglichen (vor der Filtermontage) Kaminmündung bzw. Kaminoberkante. Es können zum Beispiel auch zwei Filterkammern 1 und eine Filterkammer 2 installiert werden, wenn dies aufgrund der Kaminhöhe und der Dachneigung vorteilhaft ist. Vorteilhafterweise ist ein Funkenfänger (405) dem Vorfilter vorgeschaltet.
Der Ventilator ist vorteilhafterweise auf der Reingasseite nach beiden Filterkammern angeordnet, so dass das von unten von der Feuerung kommende Rohgas (130) über die Absaugeinheit (unterer Teil von 404) zur Filterkammer 1 (406), von dort zur Filterkammer 2 (408) gesaugt und von dort aus als Reingas (134) zum Ventilator (166) gesaugt wird, der es auf seiner Druckseite in Richtung des Rezirkulationsteils (oberer Teil von 404) und vor dort aus nach oben zur Atmosphäre geleitet wird.
- Fig. 50: Zeigt exemplarisch eine bevorzugte Ausführung des erfindungsgemäßen Filters für die Fertigung aus vorfertigbaren Panelbauteilen, die besonders bevorzugt an ein Innenskelett aus Winkelstahlprofilen montiert werden und das aus dem Rahmen für die Technikkammer (410) und möglichen Rahmenteilen (412) für die Filterkammern besteht.

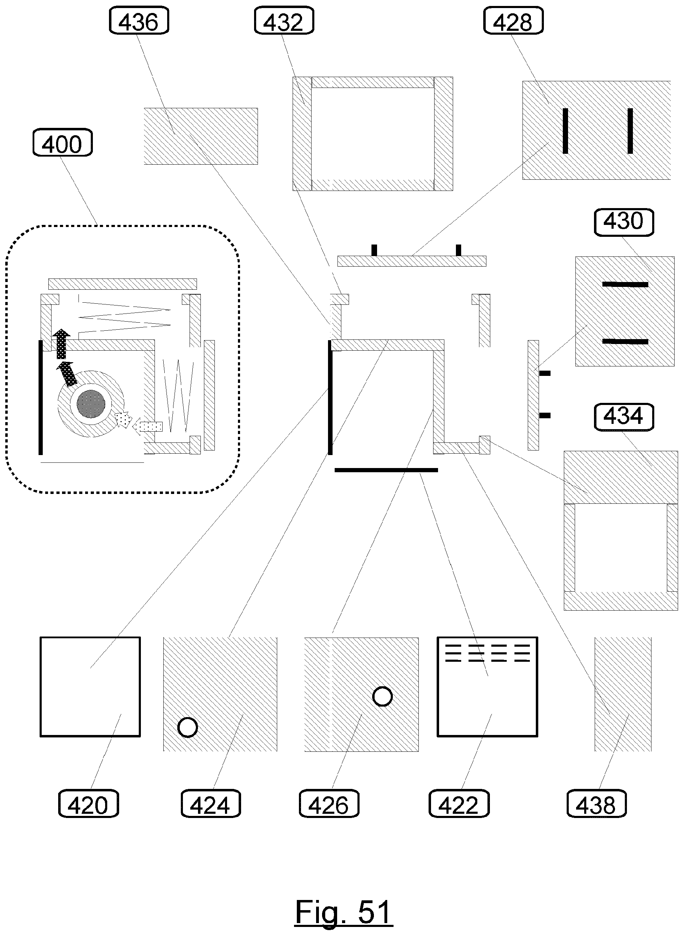

- Fig. 51: Zeigt exemplarisch die Gesamteinheit (400) des erfindungsgemäßen Filters im zusammengefügten Zustand in einer Draufsicht. Eine Explosionszeichnung zeigt die Auflösung der zusammengefügten Gesamteinheit in einzelne Bauteil, wie Seitenwand der Technikkammer (420), Wartungstür (422) zur Technikkammer, Wände (424, 426) zwischen Technikkammer sowie Filterkammern 1 und 2, den Wartungstüren (428, 430) von Filterkammer 1 und 2, den Frontplatten (432, 434) von Filterkammer 1 und 2 sowie den Seitenteilen (436, 438) von Filterkammer 1 und 2.

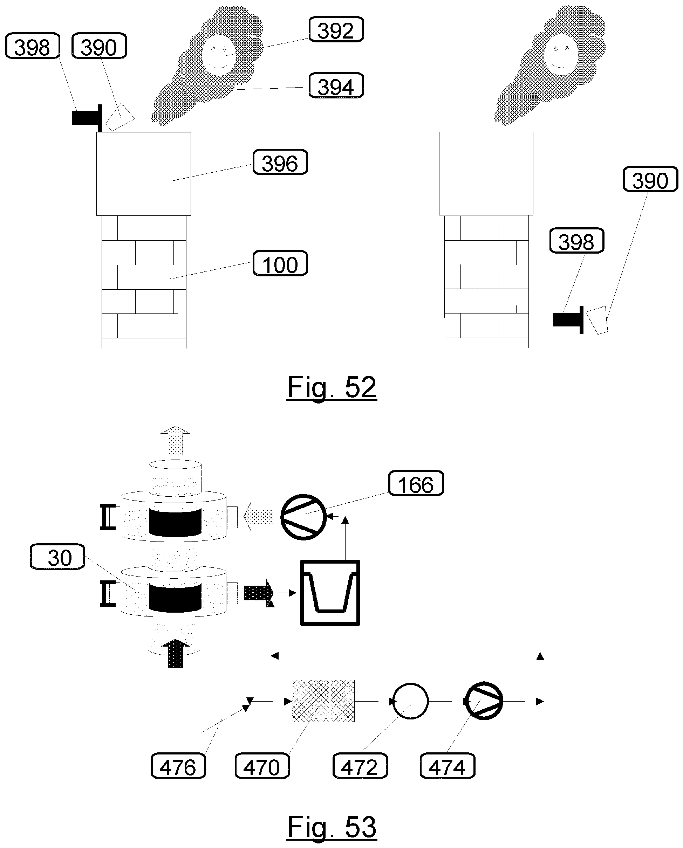

- Fig. 52: Zeigt exemplarisch eine Kombinationsmöglichkeit der erfindungsgemäßen Feinstaubabscheidung mit einer architektonischen Möglichkeit zur Lichtgestaltung von Bauwerken mit mindestens einer Lichtquelle (390), durch die Projektionen (392), beispielsweise als statisches oder bewegtes Bild in Aerosolwolken (394) möglich sind und die in vorteilhafterweise Kombination mit einer erfindungsgemäßen Gasreinigungseinrichtung (396) verwendet werden kann und vorteilhafterweise über eine Vorrichtung zur Messung von Windrichtung und -geschwindigkeit (398) verfügt. Die Lichtquelle und auch die Einrichtung zur Messung der Windrichtung und -geschwindigkeit können sowohl direkt am erfindungsgemäßen Filter (linke Darstellung) als auch in dessen Nähe(rechte Darstellung) installiert sein. Die linke Darstellung ist bevorzugt, da bei allen Windrichtungen keine Beschattung durch den Kamin und das Filter auftritt und die Windverhältnisse ungestörter gemessen werden können. Eine Ausführungsvariante, bei der die Lichtquelle und/oder die Windmessung oberhalb des Filters angebracht ist, ist auch ohne explizite bildliche und textliche Beschreibung Bestandteil der Erfindung.
- Fig. 53: Zeigt exemplarisch eine Rauchgasanalyse, die bevorzugt das Rohgas vor Filtereintritt über eine Messgaspumpe (474) entnimmt und beispielhaft über eine gestopfte Quarzwollepackung (470) und anschließend über einen CO-Sensor (472) leitet. Bevorzugt wir das Messgas anschließend in einen Bereich gleicher Druckstufe, bevorzugt ebenfalls vor dem Filter zurückgeführt, damit die entnommene Messgasmenge durch die Messgaspumpe möglichst konstant ist (beispielsweise bevorzugt Entnahme und Rückgabe vor Filtereintritt). Vorteilhafterweise wird das Messgas nach der Entnahmebevorzugt mit kalter Umgebungsluft verdünnt, so dass die Teere verstärkt durch die Abkühlung auskondensieren und die CO-Sensoren in der Lebenszeit erhöht werden. Alternativ kann zur Verdünnung eine weitere Messgaspumpe eingesetzt werden, so dass die Verdünnungsverhältnisse gleichmäßiger zu erwarten sind als bei einer rein ansaugenden Verdünnung. Bevorzugt können solche Messlinien redundant, ggf. mit unterschiedlich langen Laufzeiten pro Feuerungszyklus ausgeführt werden.
- Fig. 54: Zeigt exemplarisch eine Ausführung der Abreinigungseinrichtung (links in der Seitenansicht und rechts in der Draufsicht) insbesondere für das Vorfilter durch mechanische Bewegung, bei der die Filtertaschen (480) von Schüttelstäben (484) zumindest teilweise umgeben sind und über einen Schüttelrahmen (482) gemeinsam in Bewegung versetzt werden können.
- Fig. 55: Zeigt exemplarisch in der rechten Abbildung eine Möglichkeit der Montage, bei der das Technikgehäuse (490) mittels Gewindebolzen (500) mit einer Bodenplatte (496) verbunden wird, die wiederum über andere Gewindebolzen (498) mit dem Kamin (100) verbunden, bevorzugt eingeklebt, sind. Seitlich an das Technikgehäuse sind die Filterkammern montiert, hier abgebildet ist die Vorfilterkammer (492).
Die mittlere Abbildung zeigt eine Draufsicht, bei der die Filterkammern für Vor- und Feinreinigung (492, 494) seitlich an dem Technikgehäuse (490) angebracht sind. Der Kamin (100) wird in dieser Draufsicht durch das Technikgehäuse verdeckt, das hier exemplarisch die Absaug- und Rezirkulationseinheit sowie die zur Erhöhung der Übersichtlichkeit nicht gesondert dargestellten Peripheriekomponenten wie Steuerung und Ventilator enthält.
Die rechte Abbildung zeigt eine Seitenansicht der fertig montierten Einheit, bei der die untere Schürze der Stülpkopfausführung (502) als gestrichelte Linie dargestellt ist. Durch diese untere Schürze werden die sich gegen den Kamin abhebenden Konturen des Kaminfilters in eine im Vergleich zuvor der Montage größere Gesamtkontur gleicher Geometrie einbezogen. Durch eine Verbindung mit Techniken der Folierung und des Fotodigitaldrucks sieht der Kamin beinahe so aus wie vorher, der eher geringfügige Größenunterschied wird nur bei sehr genauem Hinsehen und Kenntnis des Zustandes vor der Montage überhaupt auffallen.

Die in den Figuren der Zeichnung dargestellten Ausführungsbeispiel der Erfindung und die im Zusammenhang mit diesen Ausführungsbeispielen der Erfindung beschriebenen Ausführungsbeispiele der Erfindung dienen lediglich der Erläuterung der Erfindung und sind für die Erfindung nicht beschränkend.

### Bezugszeichenliste:

- 10: Rauchgasweg
- 20: Bypassweg
- 21: Kernbereich der Bypasszone zwischen Absaugung und Rezirkulation
- 22: Thermische Trennung
- 24: Rauchgasklappe
- 26: Auffangraum
- 28: Austrag von abgeschiedenen Feinstaub
- 30: Absaugeinheit
- 34: Absaugöffnung
- 38: Verbindungselement zwischen Absaugeinheit und Filtereinheit
- 40: Rezirkulationseinheit
- 48: Verbindungselement zwischen Filtereinheit und Rezirkulationseinheit
- 50: Filterelement (Tiefenfilter oder E-Filter)
- 60: Filtereinheit
- 66: Eintrittsöffnung in die Filtereinheit
- 68: Austrittsöffnung aus der Filtereinheit
- 70: Trennwand zwischen Vor- und Feinfiltermaterial
- 72: Schalldämpfer
- 76: Umschalteinheit
- 78: Zusätzliches Filter, vorzugsweise für den Anfahrbetrieb mit frischen Taschenfiltern
- T1: Temperaturfühler unterhalb der Absaugung
- 100: Kamin
- 102: Kaminbefestigung als Gesamteinheit
- 104: Kaminbefestigung, senkrechte Halterung
- 106: Kaminbefestigung, waagerechte Streben
- 108: Kaminbefestigung, obere Streben
- 110: Anschlussplatte
- 112: Anschlussrohr
- 120: Absaug- und Rezirkulationsstück als Gesamteinheit, optional: nur Absaugstück, auch Kaminanschlusstück genannt
- 122: Absaugteil, unterer Teil der Gesamteinheit 120
- 124: Rezirkulationsteil, oberer optionaler Teil der Gesamteinheit 120
- 130: Rauchgas, hier: Rohgas, ungereinigt von der Feuerungen
- 132: abgesaugtes Rohgas in Richtung der Filterkammer (150)
- 134: Rezigas, Zurückführung von Reingas von der Filterkammer (150)
- 136: oberer Austritt von Reingas in Richtung Atmosphäre
- 138: Austritt von ungereinigtem Rohgas in die Atmosphäre
- 140: Offene Öffnungen für Rauchgasdurchströmung
- 142: für Rauchgas verschlossene Öffnungen, hier beispielsweise mit Blinddeckeln verschraubt
- 150: Filterkammer als Gesamteinheit, hier beispielhaft dargestellt mit einem eingesetzten Taschenfilter mit drei Filtertaschen, das von der Feuerung her kommende Rohgas strömt durch den oberen Stutzen (152) von oben in die Filtertaschen ein und verlässt die Filterkammer über den unteren Stutzen (154), bevorzugt wärmeisoliert ausgeführt, beispielsweise aus einem Sandwichmaterial aus verzinktem Stahlblech und Steinwolle
- 151: Gehäuse der Filterkammer, hier beispielhaft dargestellt mit oberem Wartungszugang zum Wechsel der Taschenfilter
- 152: Stutzen in Filterkammer für Rohgaseintritt
- 153: Kopfplatte zur Aufnahme des Taschenfilters und zur Trennung von Rohgasraum vom Reingasraum
- 154: Stutzen in Filterkammer für Reingasaustritt
- 156: Taschenfilter, hier beispielhaft dargestellt mit drei Filtertaschen
- 157: große Filtertaschen
- 158a: kleine Filtertasche
- 158: Beispielhafte Darstellung des Taschenfilters (156) mit einer die hier drei Filtertaschen umfassende Filterfläche (158) für die Feinabscheidung
- 160: Gehäuse für Peripherietechnik als Gesamteinheit für Ventilator (166) und Steuerung (ohne bildliche Darstellung) sowie optional Schalldämpfer (168) und Zusatzfilter für den Anfahrbetrieb (hier nicht bildlich dargestellt)
- 162: Stutzen in Peripherietechnikgehäuse für Eintritt des Reingases
- 164: Stutzen in Peripherietechnikgehäuse für Austritt des Reingases
- 166: Ventilator
- 168: Schalldämpfer
- 170: Abdeckhaube für Pos. 120, optional mit Isolierung
- 172: Zusatzvolumen für betriebsnotwendige Technik
- 180: Klassische Stülpkopfverkleidung, entsprechend dem Stand der Technik
- 182: Innerer Teil des Stülpkopffilters
- 184: Filterkammer(n) des Stülpkopffilters
- 186: Gehäuse für Peripherietechnik des Stülpkopffilters, bevorzugt zur Aufnahme von Steuerung und Ventilator, optional auch für zusätzliches Filterelement und Schalldämpfer
- 188: äußere Verkleidung des Stülpkopffilters, optional mit Photovoltaikmodulen an der/den Außenseite(n) ausgestattet
- 190: hinterlüftete Platte(n)
- 192: Isolierschicht
- 200: Photovoltaikzellen
- 202: Niederspannung, bevorzugt Gleichstrom
- 204: Wechselspannung, beispielsweise 220/380 V
- 206: Wechselrichter
- 208: Vorrichtung zur Feinstaubabscheidung, als elektrostatischer Abscheider oder Tiefenfilter ausgeführt, bildlich dargestellt ist hier nur die Außenansicht
- 210: Peltierelement
- 212: Kühlung des Peltierelementes
- 214: (Rück-)Kühlung der Peltierkühlung (212) gegen die Umgebung
- 216: Überhitzungsschutz mit Flüssigkeit, die bevorzugt frostgeschützt, nicht giftig und nicht brennbar ist und über einen Siedepunkt deutlich oberhalb von 100 °C verfügt.
- 218: (Rück-)Kühlung für Überhitzungsschutz 216, bevorzugt für Dampf der siedenden Flüssigkeit, bevorzugt gegen die Umgebung
- 219: Partikel- und Tropfenabscheider, bevorzugt als Gestrickabscheider ausgeführt
- 220: Feuerung, insbesondere Festbrennstoff-Kleinfeuerung
- 222: Abgas(luft-)wärmetauscher
- 224: Ventilator für Abgas(luft-)wärmetauscher
- 226: Feinstaubfilter (Ventilator nicht dargestellt)
- 228: Kamin
- 230: Luft, hier: Zuluft zum Ofen, Qualität: Umgebungsluft, optional mit oder ohne Vorwärmung durch den Abgas(luft-)wärmetauscher
- 232: Luft, hier speziell: Warmluft an Umgebung
- 234: Luft, hier speziell: Zuluft zum Ventilator des Abgas(luft-)wärmetauscher, Qualität: Umgebungsluft
- 236: Rohgas, Verbrennungsabgas mit hoher Feinstaubbeladung
- 238: Reingas, Verbrennungsabgas mit geringer Feinstaubbeladung
- 250: Abgas(luft-)wärmetauscher, hierbeispielhaft als Rohrbündelwärmetauscher
- 252: Eintrittsstutzen für kaltes Medium, bevorzugt Luft, bevorzugt mantelseitig
- 254: Austrittsstutzen für erwärmtes Medium, bevorzugt Luft
- 256: Ventilator zur Beschickung von Pos. 250 über Stutzen Pos. 252
- 258: Wärmetauscherrohre, bevorzugt abgasführend
- 260: warmes Abgas
- 262: abgekühltes Abgas
- 264: Temperatursensor zur Steuerung des Ventilators bevorzugt abströmseitig des Abgas(luft-)wärmetauschers
- 266: Abgasrohr, bevorzugt als Einzelrohr
- 268: Abgaswärmetauscher, hier beispielhaft als Rohr-in-Rohr-Ausführung; alternative Ausführungen wie beispielsweise Rohr-in-(eckig)Schacht hier ohne separate bildliche Darstellung
- 270: senkrechte Gehäusewand, beispielsweise verzinktes Stahlblech und Steinwolle in Sandwichbauweise
- 272: waagerechte Gehäusewand, beispielsweise verzinktes Stahlblech und Steinwollein Sandwichbauweise
- 274: Dichtmasse zwischen den Gehäusewänden, beispielsweise Hochtemperatursilikon
- 276: äußeres Befestigungsblech
- 278: inneres Befestigungsblech, beispielhaft winkelförmig ausgeführt
- 280: Befestigungsmittel, beispielsweise Stahlnieten
- 300: E-Filter mit Speicherung des abgeschiedenen und abgereinigten Feinstaubs außerhalb des Rauchgasweges, hier exemplarisch mündungsnah und seitlich des Rauchgasweges
- 301: E-Filter mit Speicherung des abgeschiedenen Feinstaubs im Rauchgasweg, hier exemplarisch im Abgasrohr innerhalb des Aufstellungsraumes des Ofens, ohne bildliche Darstellung der Sprühelektrode
- 302: Tiefenilter mit Speicherung des abgeschiedenen und abgereinigten Feinstaubs außerhalb des Rauchgasweges, hier exemplarisch mündungsnah und seitlich des Rauchgasweges
- 303: E-Filter mit Speicherung des abgeschiedenen Feinstaubs im Rauchgasweg, hier exemplarisch im Kamin (optional auch mündungsnah) mit hier mit bildlicher Darstellung der Sprühelektrode
- 304: E-Filter mit Speicherung des abgeschiedenen und abgereinigten Feinstaubs außerhalb des Rauchgasweges, hier im unteren Teil des Kaminzugs (310)
- 305: abgeschiedener Feinstaub, hier exemplarisch mündungsnah und seitlich des Rauchgaswege gespeichert
- 306: abgeschiedener Feinstaub, hier exemplarisch im Rohr zwischen dem Ofen und dem Kamin innerhalb des Aufstellungsraums des Ofens
- 307: abgeschiedener Feinstaub, hier exemplarisch im Kamin, beispielsweise als Anhaftung an den Seitenwänden
- 308: optionale Drainage für abgeschiedenen und abgereinigten Feinstaub
- 310: abgeschiedener und abgereinigter Feinstaub, hier exemplarisch im unteren Bereich des Kaminzuges (Russsack), über die Reinigungsöffnung 312 zu entnehmen
- 312: Reinigungsöffnung für Reinigung durch Schornsteinfeger
- 314: Separater Russsack zur Speicherung sowohl der Schwerfraktion des Rußes als auch des leichten von einem Feinstaubabscheider abgeschiedenen, agglomerierten und abgereinigten fluffigen Rußes, bevorzugt optional bei Schmor- und Glimmbränden nass betreibbar, beispielsweise durch Eindüsung von Wasser oder einen anderen Löschmittel und alternativ permanent nass betrieben, d.h. im unteren Bereich des separaten Russsackes befindet dauerhaft ein Flüssigkeitsvolumen, bevorzugt Wasser, so dass aller herabfallender Ruß sofort dem Wasser zugeführt wird. Optional ist der separate Russsack mobil, beispielsweise mit Rollen ausgeführt um die Wartung zu erleichtern. Bevorzugt ist der separate Russsack dauerhaft und mit freiem Durchgang an den Kamin angeschlossen. Daher ist er vorteilhafterweise entsprechende der Vorschriften für die Feuerschutzklasse F90 ausgeführt.
- 316: Schrägboden am unteren Ende des Russsackes, zur Zuführung des von oben herab fallenden Russes in Richtung des separaten Russsackes (314)
- 318: Technikkammer des separaten Russsackes, beinhaltet vorteilhafterweise zumindest einen CO-Sensor zur Detektion von Glimm- und Schmorbränden und mit Löschmittel, bspw. Wasservorrat, vorteilhafterweise mit Melde- bzw. Sendevorrichtung im Falle von Glimm- und Schmorbränden
- 320: Rahmen von Taschenfilter, hier exemplarisch mit drei Filtertaschen, angeströmt von links nach rechts
- 322: obere Filtertasche, geöffnet und in idealer Form, bei hohen Strömungsgeschwindigkeiten durch Gasstrom in Form gehalten
- 324: mittlere Filtertasche, teilweise zusammengefallen, beispielsweise durch geringe Strömungsgeschwindigkeiten,
- 326: hinterer Teil der mittleren Filtertasche 324, nicht oder nur schlecht durchströmt, zusammengefallen
- 328: Punkt ab dem die mittlere Filtertasche zusammengefallen ist, so dass nur noch der links davon befindliche offene Teil zur Filtration beiträgt, während der rechts davon befindliche zusammengefallene Teil inaktiv ist
- 330: untere Filtertasche, in die ein Formgebungselement 332 eingebracht wird, das verhindert, dass die Tasche auch bei geringen Strömungsgeschwindigkeiten zusammenfallen kann
- 332: Formgebungselement, vorteilhafterweise aus temperaturbeständigem Material, bevorzugt durchströmbar, Ausführung beispielsweise als Füllkörper aus dem temperaturbeständigem Kunststoff PVDF oder als plastikfreier Pappbecher, idealerweise mit einer zusätzlichen Öffnung im Boden (hier der rechten Seite)
- 338: (Seiten-)Wind
- 340: Oberer Gasauslass von erfindungsgemäßem Filter, wobei der sich unterhalb befindende Abscheider hier nicht bildlich dargestellt ist
- 342: Regenschutz, optional, hier beispielhaft in Dachform dargestellt
- 344: Ebenen mit Durchtrittsöffnungen für Rauchgas, hier beispielhaft als versetzte Lochbleche dargestellt
- 346: Weg des Rauchgases
- 348: Einbau in Rauchgasweg, der den Durchtritt des Rauchgases zum Teil verhindert, hier beispielhaft mit versetzen Öffnungen (350) für den Rauchgasdurchtritt dargestellt
- 350: Öffnungen für Rauchgasdurchtritt
- 352: Einbauten zur Erhöhung des Durchströmungswiderstandes, hier exemplarisch als Rohrstücke dargestellt, die bevorzugt nach unterhalb der Einbauten ragen
- 360: Zuleitung für Luft bzw. Gas in den Kamin
- 362: optionales Auslassventil für Luft bzw. Gas in den Kamin, vorzugsweise schließend, sobald der Unterdruck im Kamin einen Mindestwert von beispielsweise 12 Pa gegenüber dem Druck im Aufstellungsraum der Feuerung, unterschreitet,
- 364: Klappe zur Zuführung von Luft bzw. Gas zu 360, vorzugsweise als gewichtsbelastete Pendelklappe ausgeführt
- 366: Zusatzventilator zur Zuführung von Luft bzw. Gas zu 360, vorzugsweise leistungsgesteuert über Drucksensor 370
- 368: Drosselklappe zur Zuführung von Gas zu 360, vorzugsweise durchsatzgesteuert über Drucksensor 370
- 370: Drucksensor zur Überwachung des Unterdruckes im Kamin 100
- 372: Verbindungselement vom Drucksensor 370 zum Innern des Kamins, vorzugsweise als temperaturbeständige Metallleitung, beispielsweise aus Kupfer ausgeführt
- 374: Verbindungselement vom Drucksensor 370 zum Aufstellungsraum der Feuerung, beispielhaft als Metall- oder Schlauchleitung ausgeführt
- 376: in den Kamin zur Reduktion des Unterdrucks eingebrachte Luft bzw. Gas
- 380: Abdichtung des Kamins, beispielsweise als Mineralfasernmatte ausgeführt
- 390: Lichtquelle
- 392: Projektion, beispielsweise als statisches oder bewegtes Bild
- 394: Aerosolwolke
- 396: erfindungsgemäße Gasreinigungseinrichtung
- 398: Vorrichtung zur Messung von Windrichtung und -geschwindigkeit
- 400: Gesamteinheit des erfindungsgemäßen Filters
- 402: Draufsicht auf Technikkammer, hier dargestellt mit Absaug- und Rezirkulationsteil 404 und Ventilator 166, weitere Technikkomponenten, wie beispielsweise Steuerung, Abreinigungs- bzw. Klopfeinrichtung sowie Fluidtank für Düsensystem sind hier zur Erhöhung der Übersichtlichkeit nicht explizit bildlich dargestellt
- 404: Absaug- und Rezirkulationsteil 404 als Gesamteinheit, bestehend aus den Komponenten Absaugeinheit 30 und Rezirkulationseinheit 40, hier dargestellt mit äußerer Isolierung
- 406: Filterkammer 1, mit Vorfilter und Wartungsdeckel, das Abreinigungs- bzw. Klopfeinrichtung sowie das Düsensystem sind hier zur Erhöhung der Übersichtlichkeit nicht explizit bildlich dargestellt
- 408: Filterkammer 2, mit Feinfilter und Wartungsdeckel, vorzugsweise ohne Abreinigungs- bzw. Klopfeinrichtung und Düsensystem
- 410: Rahmen für Technikkammer (402) als Innenskelett für die beispielhaft als Sandwichpanel ausgeführte Teile der Filterkammern, beispielhaft aus Winkelstahl mit den Maßen 40 x 40 x 2mm ausgeführt, so dass unter anderem Windlasten auf die Gesamteinheit aufgenommen und über die Bodenbefestigung an den Kamin abgeleitet werden können
- 412: Rahmenteil als Innenskelett für die Filterkammern, beispielhaft aus vergleichbarem Winkelstahl wie bei 410 ausgeführt
- 420: Seitenwand von Technikkammer (402), fest mit Gesamteinheit verbunden, hier exemplarisch aus Stahlblech ausgeführt
- 422: Wartungstür zu Technikkammer (402), bevorzugt abnehmbar, hier exemplarisch aus Stahlblech mit Lüftungsschlitzen ausgeführt
- 424: Wand zwischen Technikkammer und Filterkammer 1, mit Öffnung für Rohgasdurchtritt vom Absaugteil zur Filterkammer 1, bevorzugt in Sandwich-Panelbauweise (Stahl, Isoliermaterial, Stahl), besonders bevorzugt allseitig geschlossen und mit Hochtemperatursilikon versiegelt
- 426: Wand zwischen Technikkammer und Filterkammer 2, mit Öffnung für Reingasdurchtritt von Filterkammer 2 zum Ventilator
- 428: Wartungstür von Filterkammer 1, hier abnehmbar und mit zwei Griffen dargestellt, bevorzugt in Panelbauweise
- 430: Wartungstür von Filterkammer 2, hier abnehmbar und mit zwei Griffen dargestellt, bevorzugt in Panelbauweise
- 432: Frontplatte von Filterkammer 1, bevorzugt in Panelbauweise
- 434: Frontplatte von Filterkammer 2, bevorzugt in Panelbauweise
- 436: Seitenteil von Filterkammer 1, bevorzugt in Panelbauweise
- 438: Seitenteil von Filterkammer 8, bevorzugt in Panelbauweise
- 450: Ausschnitt Rezirkulationsteil, Einbringung von rezirkuliertem Rauchgas in den Kamin
- 452: Innenrohr vom Rezirkulationsteil
- 454: Anschlussstutzen für Reingas zur Rezirkulation
- 456: oberes Leitblech
- 458: unteres Leitblech
- 460: Schieber mit für Gasströmung offenen und geschlossenen Teil; in dieser Darstellung um 90° gedreht, so dass die für die offene und die geschlossene Fläche sichtbar werden
- 462: Für Gasströmung offener Teil des Schiebers 460
- 464: oberer Endlagenanschlag für Schieber 460
- 468: unterer Endlagenanschlag für Schieber 460
- 470: Staub- und Teerabscheider, vorzugsweise aus gestopfter Quarzwolle (Quarzwatte) oder vergleichbarer vorgefertigter Einheit, alternativ aus ebensolchen Einheiten, jedoch mit Glaswolle anstelle von Quarzwolle
- 472: CO-Sensor
- 474: Messgaspumpe
- 476: Verdünnung des Messgases
- 480: Filtertaschen
- 482: Schüttelrahmen
- 484: Schüttelstäbe
- 490: Technikgehäuse
- 492: Filterkammer für Vorfilter
- 494: Filterkammer für Feinfilter
- 496: Bodenplatte
- 498: Gewindebolzen zur Befestigung der Bodenplatte im Kamin, bevorzugt eingeklebt
- 500: Gewindebolzen zur Befestigung der Bodenplatte am erfindungsgemäßen Kaminfilter, hier beispielhaft am Technikgehäuse
- 502: untere Schürze der Stülpkopfausführung

## Patentansprüche

1. Vorrichtung zur Filterung von Feinstaub, insbesondere für Festbrennstoff-Kleinfeuerungsanlagen, mit
einer Absaugeinheit (30) umfassend
- ein Anschlussrohr (112) zur Verbindung der Absaugeinheit (30) mit einem Rauchgasweg (10), aus welchem von einer Feuerung ein Rauchgas (130) strömt,
und
- eine Absaugöffnung (34),
und
einer Filtereinheit (60) umfassend
- eine mit der Absaugöffnung (34) verbundene Eintrittsöffnung (66),
- eine Austrittsöffnung (68),
und
- ein zwischen der Eintrittsöffnung (66) und der Austrittsöffnung (68) angeordnetes Filterelement (50),
wobei
die Absaugeinheit (30) und die Filtereinheit (60) mit Filterelement (50) in mindestens einer Baugruppe angeordnet sind,
und
das Filterelement (50) der Filtereinheit (60)
als Tiefenfilter ausgeführt ist
und/oder
einen elektrischen Filter (E-Filter) aufweist,
**dadurch gekennzeichnet, dass**
als ein Schutz gegen Schmor- bzw. Glimmbrände der abgeschiedenen sowie gespeicherten Feinstaubmengen und/oder als ein Schutz gegen eine unkontrollierte und unbemerkte Ausbreitung von potenziell gefährdenden Kohlenmonoxidemissionen eine Überwachung der gasförmigen Atmosphäre für den Bereich der Lagerstätte des abgeschiedenen sowie abgereinigten Feinstaubs, vorgesehen ist die den Kohlenmonoxidgehalt misst, wenn die Vorrichtung sich nicht im Filtrationsbetrieb befindet, wobei die Feuerung nicht in Betrieb ist und sich somit kein Rauchgas und kein Kohlenmonoxid (CO) im Bereich der Lagerstätte des Feinstaubs befindet bzw. befinden sollte, wobei die Überwachung einen Anstieg des Kohlenmonoxidgehalts als Indikator für einen beginnenden Schmor- bzw. Glimmbrand überwacht,
wobei das Tiefenfilter als Filterelement (50) ein Filtermaterial, aus Kunststoff bzw. Kunststofffasern, Metall bzw. Metallfasern, Textil, Filz, und/oder Keramik, vorsieht, welches dazu eingerichtet ist, Feinstaub, Kondensat und/oder Kondensatbestandteile abzuscheiden, wobei das Filterelement (50) als Taschen-, Beutel- oder Schlauchfilter ausgeführt ist.

2. Vorrichtung nach Anspruch 1, **dadurch gekennzeichnet, dass** als ein Schutz gegen Schmor- bzw. Glimmbrände der abgeschiedenen sowie gespeicherten Feinstaubmengen und/oder als ein Schutz gegen eine unkontrollierte und unbemerkte Ausbreitung von potenziell gefährdenden Kohlenmonoxidemissionen ferner eine Benetzungseinrichtung, die sowohl proaktiv, durch hydraulische Verdichtung des nach der Abreinigung besonders lockeren Feinstaubs, als auch reaktiv als Löscheinrichtung im Falles eines erkannten Schmor- bzw. Glimmbrandes durch Detektion im Rahmen der Überwachung des Kohlenmonoxidgehalts (CO-Überwachung), wirksam eingesetzt werden kann, vorgesehen ist.

3. Vorrichtung nach Anspruch 1 oder Anspruch 2, **dadurch gekennzeichnet, dass** als ein Schutz gegen Schmor- bzw. Glimmbrände der abgeschiedenen sowie gespeicherten Feinstaubmengen und/oder als ein Schutz gegen eine unkontrollierte und unbemerkte Ausbreitung von potenziell gefährdenden Kohlenmonoxidemissionen ferner
bei Verwendung eines Tiefenfilters als Filterelement (50) der Filtereinheit (60) mindestens ein, vorzugsweise einem Vorfilter (52) in Strömungsrichtung beim Normalbetrieb, d.h. zwischen Feuerung und Vorfilter (52), vorgeschalteter Funkenfänger (405) vorgesehen ist,
und/oder
bei Verwendung eines elektrischen Filters (E-Filters) als Filterelement (50) der Filtereinheit (60) mindestens ein Funkenfänger, der so angeordnet ist, dass er den Eintrag von der Feuerung herkommenden Funken in Richtung des gelagerten sowie abgereinigten Feinstaubes verhindert vorgesehen ist.

4. Vorrichtung nach einem der Ansprüche 1 bis 3, **dadurch gekennzeichnet, dass** bei Verwendung eines elektrischen Filters (E-Filters) als Filterelement (50) der Filtereinheit (60) im Normalbetrieb der Feuerung ein Volumenraum außerhalb des Rauchgasweges vorhanden ist, um den im elektrischen Filter (E-Filter) abgeschiedenen Feinstaub nach der Abreinigung so lange zu speichern bzw. aufnehmen zu können, dass eine Reinigung innerhalb einer Heizperiode entfallen kann, bzw. mindestens ein separater Russsack (314), der im Fall eines im Rahmen der Überwachung des Kohlenmonoxidgehalts (CO-Überwachung) detektierten Schmor- bzw. Glimmbrandes benetzt werden kann bzw. alternativ permanent nass betrieben wird, vorgesehen ist.

5. Vorrichtung nach einem der Ansprüche 1 bis 4, **dadurch gekennzeichnet, dass** bei Verwendung eines Tiefenfilters als Filterelement (50) der Filtereinheit (60) die auf die Leistung der Feuerung [kWₜₕ] bezogene spezifische Filterfläche [m²/kWₜₕ], zumindest eines Vorfilters (52), auch bei unbekannten sowie ungünstigen Betriebsbedingungen im Bereich von 0,01 bis 1,0 m²/kWₜₕ, bevorzugt 0,1 bis 0,8 m²/kWₜₕ und noch mehr bevorzugt 0,2 bis 0,7 m²/kWₜₕ ausgeführt ist,
beziehungsweise
sofern ungünstige Betriebsbedingungen hinreichend sicher ausgeschlossen werden können, auf den Bereich von 0,03 bis 0,3 m²/kWₜₕ beschränkt werden kann und dann bevorzugt im Bereich von 0,05 bis 0,2 m²/kWₜₕ und besonders bevorzugt bei 0,1 m²/kWₜₕ betrieben werden kann.

6. Vorrichtung nach einem der Ansprüche 1 bis 5, **dadurch gekennzeichnet, dass** das Filterelement (50) der Filtereinheit (60)
• einen bevorzugt automatisiert abreinigbaren elektrischen Filter (E-Filter),
• ein im eingebauten Zustand innerhalb der Filtereinheit (60), bevorzugt durch mechanische Bewegung und besonders bevorzugt automatisiert abreinigbares Tiefenfilter mit mindestens einer der im Folgenden aufgeführten vier Eigenschaften
• einem Vorfilter (52) gemäß der Filterklasse G4, M5, M6, F7 oder F8 gemäß EN 779 und ein Feinfilter (56) gemäß der Filterklasse M5, M6, F7 bis F9 oder E10 bis E12 gemäß EN 779
• einer Reihenschaltung von mehr als zwei Filtermaterialien oder ein mit einer Reihenschaltung von mehr als zwei Filtermaterialien vergleichbares gradiertes Filtermaterial
• einem mit einem Vorfilter (52) der Filterklasse G4, M5, M6, F7 oder F8 gemäß EN 779 und einem Feinfilter (56) gemäß der Filterklasse M5, M6, F7 bis F9 oder E10 bis E12 gemäß EN 779 oder einer Reihenschaltung von mehr als zwei Filtermaterialien oder ein mit einer Reihenschaltung von mehr als zwei Filtermaterialien vergleichbares gradiertes Filtermaterial vergleichbaren, insbesondere gradierten, Tiefenfiltermaterial, dass über mindestens eine der beiden folgenden Eigenschaften verfügt:
• die gleiche Abscheideleistung wie die Kombination aus Vorfilter (52) und Feinfilter (56) oder
• die gleiche Standzeit wie die zuvor beschriebene Kombination aus Vorfilter (52) und Feinfilter (56)
• eine Kombination aus mehr als zwei Filtern (Vor- und Feinfilter), die über mindestens eine der beiden folgenden Eigenschaften verfügt:
• die gleiche Abscheideleistung wie die zuvor beschriebene Kombination aus Vorfilter (52) und Feinfilter (56) oder
• die gleiche Standzeit wie die zuvor beschriebene Kombination aus Vorfilter (52) und Feinfilter (56),
aufweist.

7. Vorrichtung nach einem der Ansprüche 1 bis 6, **dadurch gekennzeichnet, dass** wobei das Tiefenfilter mindestens ein Formgebungselement (58) umfasst, welches dazu eingerichtet ist, einem Zusammenfallen von Filterelementen entgegenzuwirken.

8. Vorrichtung nach einem der Ansprüche 1 bis 7,
**dadurch gekennzeichnet, dass**
die Vorrichtung über zumindest einen der folgenden sicherheits- und/oder emissionsrelevanten Mechanismen verfügt,
wobei
zu sicherheitsrelevanten Mechanismen die folgenden Punkte gehören:
- eine Kohlenmonoxid-Überwachung des Speicherorts bzw. der Speicherorte des abgereinigten Feinstaubs, bevorzugt mit Meldung an den Betreiber und/oder einen Kaminkehrer;
- eine Lösch- bzw. Benetzungseinrichtung zumindest für Speicherorte des Feinstaubs;
und zu emissionsrelevanten Mechanismen die folgenden Punkte gehören:
- eine zumindest teilweise Kompensation von zu geringem Unterdruck im Kamin, bei der ein Gas zur Druckbeeinflussung in den Rauchgasweg eingebracht wird;
- eine Überwachung von Kohlenmonoxid und Teermengen im Rohgas, insbesondere zur Überwachung vom Benutzerverhalten, sowie insbesondere in Bezug auf eine mögliche Minderung der Feinstaubentstehung in der Feuerung sowie technischer Mängel an der Gesamtanlage (Feuerung, Kamin, Undichtigkeiten bspw. an Ofentüren, Kaminmauerwerk etc.).

9. Vorrichtung nach einem der Ansprüche 1 bis 8, **dadurch gekennzeichnet, dass** die Vorrichtung durch mindestens eine der folgenden Maßnahmen rußbrandsicher ausgeführt ist, das heißt
• über mindestens über eine hinterlüftete, bevorzugt metallische Platte, verfügt;
• mindestens im unteren Bereich des Gehäuses der Vorrichtung dicht gegenüber dem Austritt von beispielsweise gegen geschmolzenen Kunststoff, bevorzugt durch zumindest teilweise und noch mehr bevorzugt durch überwiegend metallische Labyrinthdichtungen;
• über mindestens eine Isolierschicht, bevorzugt eine temperaturbeständige Isolierschicht, vorzugsweise temperaturbeständig bis mindestens 1.000°C, verfügt;
• eine proaktive Detektion von Rußbränden durch bevorzugt mindestens einen CO-Sensor, besonders bevorzugt von mindestens zwei CO-Sensoren, die in Strömungsrichtung des Rauchgases vor und nach der bzw. den Filterkammern installiert sind und besonders bevorzugt mindestens zwei CO-Sensoren, die vor der ersten Filterkammer und nach dem Ventilator installiert sind;
und
eine Löschung eines detektierten Rußbrandes durch die Einbringung von Benetzungsmittel, bevorzugt in Form von Wasser, besonders bevorzugt in Form von mit Frostschutzmittel angereichertem Wasser, über mindestens eine Einbringung des Benetzungsmittels, die bevorzugt anströmseitig von mindestens einer Filterstufe mit mindestens einer a) Einstoffdüse, bevorzugt Einstoff-Nebeldüse und/oder b) mindestens einer Zweistoffdüse.

10. Vorrichtung nach einem der Ansprüche 1 bis 9, **dadurch gekennzeichnet, dass** das Vorfilter aus Filtermaterial mit einem Flächengewicht von 200 bis 300 g/m², bevorzugt von 225 bis 275 g/m² besteht, und besonders bevorzugt auf der Reingasseite einseitig kalandert, das heißt zur Verfestigung wärmebehandelt ist, und/oder ohne chemische Bindemittel thermisch verfestigt ist und/oder über einen progressiven Aufbau der Fasern bzw. Faserschichten verfügt.

## Claims

1. Apparatus for filtering fine dust, in particular for small solid fuel combustion plants, comprising
an extraction unit (30) comprising
- a connecting pipe (112) for connecting the extraction unit (30) to a flue gas duct (10) through which flue gas (130) flows from a combustion chamber,
and
- an extraction opening (34),
and
a filter unit (60) comprising
- an inlet opening (66) connected to the suction opening (34),
- an outlet opening (68),
and
- a filter element (50) arranged between the inlet opening (66) and the outlet opening (68),
wherein
the extraction unit (30) and the filter unit (60) with filter element (50) are arranged in at least one assembly,
and
the filter element (50) of the filter unit (60)
is designed as a depth filter
and/or
comprises an electric filter (E-filter),
**characterised in that**
as a safeguard against smouldering or smoldering fires involving the separated and stored quantities of fine dust and/or as a safeguard against the uncontrolled and unnoticed spread of potentially hazardous carbon monoxide emissions, a monitoring system for the gaseous atmosphere in the area where the separated and cleaned fine dust is stored which measures the carbon monoxide content when the apparatus is not in filtration mode, whereby the combustion process is not in operation and therefore no flue gas and no carbon monoxide (CO) is present or should be present in the area where the fine dust is stored, whereby the monitoring detects an increase in the carbon monoxide content as an indicator of a starting smouldering or smouldering fire,
wherein the depth filter provides, as a filter element (50), a filter material made of plastic or plastic fibres, metal or metal fibres, textile, felt, and/or ceramic, which is designed to separate fine dust, condensate and/or condensate components, wherein the filter element (50) is designed as a pocket, a bag or a tubular filter.

2. Apparatus according to claim 1, **characterised in that**, as a safeguard against smouldering fires involving the separated and stored quantities of fine dust and/or as a safeguard against the uncontrolled and unnoticed spread of potentially hazardous carbon monoxide emissions, a wetting device is further provided, which operates both proactively, by hydraulic compaction of the fine dust, which is particularly loose after cleaning, and reactively as an extinguishing device in the event of a detected smouldering fire through detection as part of the monitoring of the carbon monoxide content (CO monitoring).

3. Apparatus according to claim 1 or claim 2, **characterised in that**, as a safeguard against smouldering or smouldering fires involving the separated and stored quantities of fine dust and/or as a safeguard against the uncontrolled and undetected spread of potentially hazardous carbon monoxide emissions,
when a depth filter is used as the filter element (50) of the filter unit (60), at least one spark arrester (405) is provided, preferably upstream of a pre-filter (52) in the direction of flow during normal operation, i.e. between the combustion chamber and the pre-filter (52),
and/or
when an electric filter (E-filter) is used as the filter element (50) of the filter unit (60), at least one spark arrestor is provided, which is arranged in such a way as to prevent the entry of sparks originating from the combustion chamber in the direction of the stored and cleaned fine dust.

4. Apparatus according to any one of claims 1 to 3, **characterised in that**, when an electric filter (E-filter) is used as the filter element (50) of the filter unit (60), a volume space is provided outside the flue gas path during normal operation of the combustion chamber in order to be able to store or accommodate the fine dust separated in the electric filter (E-filter) after cleaning can be stored or accommodated for such a duration that cleaning within a heating period is not required, or at least one separate soot bag (314) is provided, which can be wetted in the event of smouldering or smouldering combustion detected during monitoring of the carbon monoxide content (CO-monitoring) or alternatively is operated in a permanently wet state.

5. A device according to any one of claims 1 to 4, **characterised in that**
when a depth filter is used as the filter element (50) of the filter unit (60), the specific filter area [m²/kWₜₕ], relative to the output of the combustion system [kWₜₕ], of at least one pre-filter (52). also in unknown or adverse operating conditions, remains within the range of 0.01 to 1.0 m² /kWₜₕ , preferably 0.1 to 0.8 m² /kWₜₕ and even more preferably 0.2 to 0.7 m² /kWₜₕ ,
or
provided that unfavourable operating conditions can be sufficiently reliably ruled out, it can be limited to the range of 0.03 to 0.3 m²/kWₜₕand can then preferably be operated in the range of 0.05 to 0.2 m²/kWₜₕand particularly preferably at 0.1 m²/kWₜₕ.

6. A device according to any one of claims 1 to 5, **characterised in that** the filter element (50) of the filter unit (60) comprises
• an electrical filter (E-filter) which is preferably capable of being cleaned automatically,
• a depth filter which, when installed within the filter unit (60) can be cleaned preferably by mechanical movement and particularly preferably automatically, which has at least one of the four properties listed below
• a pre-filter (52) in accordance with filter class G4, M5, M6, F7 or F8 in accordance with EN 779 and a fine filter (56) in accordance with filter class M5, M6, F7 to F9 or E10 to E12 in accordance with EN 779
• a series connection of more than two filter materials or a graded filter material comparable to a series connection of more than two filter materials
• a combination comprising a pre-filter (52) of filter class G4, M5, M6, F7 or F8 in accordance with EN 779 and a fine filter (56) in accordance with filter class M5, M6, F7 to F9 or E10 to E12 in accordance with EN 779, or a series connection of more than two filter materials, or a graded filter material comparable to a series connection of more than two filter materials, in particular a graded depth filter material, which possesses at least one of the following two properties:
• the same separation efficiency as the combination of pre-filter (52) and fine filter (56) or
• the same service life as the combination of pre-filter (52) and fine filter (56) described above
• a combination of more than two filters (pre-filter and fine filter) which possesses at least one of the following two properties:
• the same separation efficiency as the combination of pre-filter (52) and fine filter (56) described above, or
• the same service life as the combination of pre-filter (52) and fine filter (56) described above.

7. A device according to any one of claims 1 to 6, **characterised in that** the depth filter comprises at least one shaping element (58) which is adapted to counteract the collapse of filter elements.

8. A device according to any one of claims 1 to 7,
**characterised in that**
the device has at least one of the following safety- and/or emission-related mechanisms,
where
the following points are included among the safety-related mechanisms:
- carbon monoxide monitoring of the storage location or locations of the cleaned particulate matter, preferably with notification to the operator and/or a chimney sweep;
- a quenching or wetting device at least for the storage locations of the fine dust;
and the following points relate to emission-relevant mechanisms:
- at least partial compensation for insufficient negative pressure in the flue, whereby a gas is introduced into the flue gas path to influence the pressure;
- monitoring of carbon monoxide and tar levels in the raw gas, in particular to monitor user behaviour, as well as in particular with regard to a possible reduction in the generation of fine dust in the combustion chamber and technical defects in the entire system (combustion chamber, flue, leaks, e.g. in stove doors, flue masonry, etc.).

9. A device according to any one of claims 1 to 8, **characterised in that** the device is designed to be soot-fire-proof by means of at least one of the following measures, i.e.
• it comprises at least one rear-ventilated, preferably metallic plate;
• is sealed, at least in the lower region of the device's housing, against the escape of, for example, molten plastic, preferably by at least partially and even more preferably predominantly metallic labyrinth seals;
• it comprises at least one insulating layer, preferably a temperature-resistant insulating layer, preferably resistant to temperatures of at least 1,000°C;
• provides proactive detection of soot fires by preferably at least one CO sensor, particularly preferably by at least two CO sensors, which are installed in the direction of flow of the flue gas before and after the filter chamber(s), and particularly preferably by at least two CO sensors, which are installed before the first filter chamber and after the fan;
and
extinguishing of a detected soot fire by introducing a wetting agent, preferably in the form of water, particularly preferably in the form of water enriched with antifreeze, via at least one introduction of the wetting agent, which is preferably located on the upstream side of at least one filter stage with at least one a) single-fluid nozzle, preferably a single-fluid spray nozzle, and/or b) at least one two-fluid nozzle.

10. Apparatus according to any one of claims 1 to 9, **characterised in that** the pre-filter consists of filter material with a basis weight of 200 to 300 g/m², preferably 225 to 275 g/m², and is particularly preferably calendered on one side on the clean gas side, i.e. heat-treated for consolidation, and/or thermally consolidated without chemical binders and/or has a progressive structure of the fibres or fibre layers.

## Revendications

1. Dispositif de filtration de poussières fines, en particulier pour les petites installations de combustion à combustible solide, comprenant
une unité d'aspiration (30) comprenant
- un tuyau de raccordement (112) destiné à relier l'unité d'aspiration (30) à un conduit de gaz de combustion (10) d'où s'écoule un gaz de combustion (130) provenant d'une combustion,
et
- une ouverture d'aspiration (34),
et
une unité de filtration (60) comprenant
- une ouverture d'entrée (66) reliée à l'ouverture d'aspiration (34),
- une ouverture de sortie (68),
et
- un élément filtrant (50) disposé entre l'orifice d'entrée (66) et l'orifice de sortie (68),
dans lequel
l'unité d'aspiration (30) et l'unité de filtration (60) avec l'élément filtrant (50) sont disposées dans au moins un module,
et
l'élément filtrant (50) de l'unité de filtration (60)
est conçu comme un filtre en profondeur
et/ou
comporte un filtre électrique (filtre E),
**caractérisé en ce que**
une surveillance de l'atmosphère gazeuse est prévue dans la zone de stockage des poussières fines séparées et épurées, qui mesure la teneur en monoxyde de carbone lorsque le dispositif n'est pas en mode de filtration, la combustion n'étant pas en cours et il n'y ayant donc pas de gaz de combustion ni de monoxyde de carbone (CO) dans la zone de stockage des poussières fines, la surveillance surveillant une augmentation de la teneur en monoxyde de carbone comme indicateur d'un début de combustion lente ou combustion lente,
le filtre en profondeur prévoyant, comme élément filtrant (50), un matériau filtrant en plastique ou en fibres de plastique, en métal ou en fibres métalliques, en textile, en feutre et/ou en céramique, qui est conçu pour séparer les poussières fines, le condensat et/ou les composants du condensat, l'élément filtrant (50) étant réalisé sous forme de filtre à poches, à sacs ou à manches.

2. Dispositif selon la revendication 1, **caractérisé en ce que**, pour protéger contre les feux couvant ou les feux sans flamme des quantités de poussières fines séparées et stockées et/ou pour protéger contre une propagation incontrôlée et inaperçue d'émissions de monoxyde de carbone potentiellement dangereuses, il comprend en outre un dispositif d'humidification qui agit à la fois de manière proactive, par compactage hydraulique des poussières fines particulièrement meubles après le nettoyage, que de manière réactive en tant que dispositif d'extinction en cas de détection d'un feu couvant ou d'un feu sans flamme dans le cadre de la surveillance de la teneur en monoxyde de carbone (surveillance du CO).

3. Dispositif selon la revendication 1 ou la revendication 2, **caractérisé en ce que**, en tant que protection contre les feux couvant ou les feux sans flamme des quantités de poussières fines séparées et stockées et/ou en tant que protection contre une propagation incontrôlée et inaperçue d'émissions de monoxyde de carbone potentiellement dangereuses, il est en outre
lors de l'utilisation d'un filtre en profondeur comme élément filtrant (50) de l'unité de filtration (60), au moins un pare-étincelles (405) est prévu, de préférence en amont d'un préfiltre (52) dans le sens d'écoulement en fonctionnement normal, c'est-à-dire entre la chambre de combustion et le préfiltre (52),
et/ou
lorsqu'un filtre électrique (filtre E) est utilisé comme élément filtrant (50) de l'unité de filtration (60), au moins un pare-étincelles est prévu, disposé de manière à empêcher la pénétration d'étincelles provenant de la chambre de combustion en direction des poussières fines stockées et épurées.

4. Dispositif selon l'une des revendications 1 à 3, **caractérisé en ce que**, en cas d'utilisation d'un filtre électrique (filtre E) comme élément filtrant (50) de l'unité de filtration (60), il existe, en fonctionnement normal de la chambre de combustion, un espace volumique à l'extérieur du trajet des gaz de combustion, afin de pouvoir stocker ou recueillir les poussières fines séparées dans le filtre électrique (filtre E) après le nettoyage, de manière à ce qu'un nettoyage puisse être évité au cours d'une période de chauffage, ou qu'au moins un sac à suie séparé (314) qui peut être humidifié en cas de combustion lente ou de combustion sans flamme détectée dans le cadre de la surveillance de la teneur en monoxyde de carbone (surveillance du CO) ou, à défaut, qui fonctionne en permanence en milieu humide.

5. Dispositif selon l'une des revendications 1 à 4, **caractérisé en ce que**
lors de l'utilisation d'un filtre en profondeur comme élément filtrant (50) de l'unité de filtration (60), la surface filtrante spécifique [m²/kWₜₕ], rapportée à la puissance de la combustion [kWₜₕ], d'au moins un préfiltre (52), se situe, même dans des conditions de fonctionnement inconnues ou défavorables, dans une plage de 0,01 à 1,0 m² /kWₜₕ, de préférence de 0,1 à 0,8 m² /kWₜₕ et, de manière encore plus préférentielle, de 0,2 à 0,7 m² /kWₜₕ,
ou
dans la mesure où des conditions de fonctionnement défavorables peuvent être exclues avec une certitude suffisante, peut être limité à la plage de 0,03 à 0,3 m²/kWₜₕ et peut alors être exploité de préférence dans la plage de 0,05 à 0,2 m²/kWₜₕ et de manière particulièrement préférée à 0,1 m²/kWₜₕ.

6. Dispositif selon l'une des revendications 1 à 5, **caractérisé en ce que** l'élément filtrant (50) de l'unité de filtration (60)
• un filtre électrique (filtre E) pouvant être nettoyé de préférence de manière automatisée,
• un filtre en profondeur pouvant être nettoyé à l'état monté à l'intérieur de l'unité de filtration (60), de préférence par un mouvement mécanique et de manière particulièrement préférée de façon automatisée présentant au moins l'une des quatre propriétés énumérées ci-après
• un préfiltre (52) conforme à la classe de filtration G4, M5, M6, F7 ou F8 selon la norme EN 779 et un filtre fin (56) conforme à la classe de filtration M5, M6, F7 à F9 ou E10 à E12 selon la norme EN 779
• un montage en série de plus de deux matériaux filtrants ou un matériau filtrant gradué comparable à un montage en série de plus de deux matériaux filtrants
• un préfiltre (52) de classe G4, M5, M6, F7 ou F8 selon la norme EN 779 et un filtre fin (56) de classe M5, M6, F7 à F9 ou E10 à E12 selon la norme EN 779, ou d'un montage en série de plus de deux matériaux filtrants, ou d'un matériau filtrant gradué comparable à un montage en série de plus de deux matériaux filtrants, en particulier un matériau filtrant en profondeur gradué, qui présente au moins l'une des deux propriétés suivantes:
• la même capacité de rétention que la combinaison du préfiltre (52) et du filtre fin (56) ou
• la même durée de vie que la combinaison décrite précédemment, composée d'un préfiltre (52) et d'un filtre fin (56)
• une combinaison de plus de deux filtres (préfiltre et filtre fin) présentant au moins l'une des deux propriétés suivantes:
• la même capacité de rétention que la combinaison précédemment décrite d'un préfiltre (52) et d'un filtre fin (56) ou
• la même durée de vie que la combinaison décrite précédemment, composée d'un préfiltre (52) et d'un filtre fin (56).

7. Dispositif selon l'une des revendications 1 à 6, **caractérisé en ce que** le filtre en profondeur comprend au moins un élément de mise en forme (58) qui est agencé pour empêcher l'affaissement des éléments filtrants.

8. Dispositif selon l'une des revendications 1 à 7,
**caractérisé en ce que**
le dispositif dispose d'au moins l'un des mécanismes suivants liés à la sécurité et/ou aux émissions,
où
les mécanismes liés à la sécurité comprennent les points suivants:
- une surveillance du monoxyde de carbone sur le ou les lieux de stockage des poussières fines épurées, de préférence avec notification à l'exploitant et/ou à un ramoneur;
- un dispositif d'extinction ou d'humidification au moins pour les lieux de stockage des poussières fines;
et les points suivants concernent les mécanismes liés aux émissions:
- une compensation au moins partielle d'une dépression insuffisante dans la cheminée, dans laquelle un gaz est introduit dans le conduit des fumées afin d'influencer la pression;
- une surveillance des quantités de monoxyde de carbone et de goudron dans les gaz bruts, notamment pour surveiller le comportement de l'utilisateur, ainsi qu'en particulier en ce qui concerne une réduction éventuelle de la formation de particules fines dans le foyer et des défauts techniques de l'ensemble de l'installation (foyer, cheminée, fuites par exemple au niveau des portes du poêle, de la maçonnerie de la cheminée, etc.).

9. Dispositif selon l'une des revendications 1 à 8, **caractérisé en ce que** le dispositif est conçu pour être protégé contre les feux de suie grâce à au moins l'une des mesures suivantes, c'est-à-dire
• elle dispose d'au moins une plaque ventilée, de préférence métallique;
• est étanche, au moins dans la partie inférieure du boîtier du dispositif, à la sortie de, par exemple, de la matière plastique fondue, de préférence grâce à des joints labyrinthes au moins partiellement et, de manière encore plus préférentielle, majoritairement métalliques;
• dispose d'au moins une couche isolante, de préférence une couche isolante résistante à la température, de préférence résistante à une température d'au moins 1 000 °C;
• une détection proactive des feux de suie par de préférence au moins un capteur de CO, de manière particulièrement préférée par au moins deux capteurs de CO, qui sont installés dans le sens d'écoulement des gaz de combustion avant et après la ou les chambres de filtration, et de manière particulièrement préférée par au moins deux capteurs de CO, qui sont installés avant la première chambre de filtration et après le ventilateur;
et
une extinction d'un feu de suie détecté par l'apport d'un agent mouillant, de préférence sous forme d'eau, de manière particulièrement préférée sous forme d'eau enrichie en antigel, par au moins un apport de l'agent mouillant, qui est de préférence situé en amont d'au moins un étage de filtration comportant au moins a) buse à un fluide, de préférence une buse à brouillard à un fluide, et/ou b) au moins une buse à deux fluides.

10. Dispositif selon l'une des revendications 1 à 9, **caractérisé en ce que** le préfiltre est constitué d'un matériau filtrant ayant un grammage de 200 à 300 g/m², de préférence de 225 à 275 g/m², et de préférence encore, est calandré sur une face côté gaz pur, c'est-à-dire traité thermiquement pour la consolidation, et/ou consolidé thermiquement sans liants chimiques et/ou présente une structure progressive des fibres ou des couches de fibres.
